# EUROPEAN PATENT APPLICATION

(11) **EP 4 325 870 A1**
(43) Date of publication of application: **21.02.2024**
(21) Application number: 22788178.6
(22) Date of filing: 13.04.2022
(51) Int. Cl.: H04N 21/44

(54) **INFORMATION PROCESSING DEVICE AND METHOD**

(30) Priority: 14.04.2021 US 202163174668 P
(71) Applicant: Sony Group Corporation, Tokyo 108-0075 (JP)
(72) Inventor: KIYAMA Yuka, Tokyo 108-0075 (JP); TAKAHASHI Ryohei, Tokyo 108-0075 (JP); HIRABAYASHI Mitsuhiro, Tokyo 108-0075 (JP)
(74) Representative: D Young & Co LLP
(86) International application number: PCT/JP2022/017659
(87) International publication number: WO 2022/220255

(57) **Abstract**

The present disclosure relates to an information processing device and a method capable of storing data for each tile in a buffer.

Tile data of 3D object content is stored in a common buffer region, desired tile data is acquired from the buffer region on the basis of tile storage information for identifying the tile data stored in the buffer region, and the acquired tile data is processed. Further, a scene description file that stores a first accessor for storing tile data of 3D object content in a common first buffer region and a second accessor for storing tile storage information for identifying the tile data stored in the first buffer region in a second buffer region is generated. The present disclosure can be applied to, for example, an information processing device, an information processing method, or the like.

## Description

### TECHNICAL FIELD

The present disclosure relates to an information processing device and a method, and more particularly, to an information processing device and a method capable of storing data for each tile in a buffer.

### BACKGROUND ART

In the related art, there is the GL transmission format (glTF) (registered trademark) 2.0 that is a format of a scene description (Scene Description) for disposing and rendering a 3D (three-dimensional) object in a three-dimensional space (for example, see Non Patent Document 1) .

Furthermore, in the moving picture experts group (MPEG)-I Scene Description, a method of expanding the glTF 2.0 and handling dynamic content in the time direction has been proposed (for example, see Non Patent Document 2).

Meanwhile, as a method of encoding a point cloud (point cloud), video based point cloud compression (V-PCC) has been proposed in which a region is formed by segmenting a point cloud, planar projection is performed for each region, and encoding is performed by a video codec (see, for example, Non Patent Document 3). A point cloud is 3D data representing a three-dimensional structure of an object by a set of points having position information and attribute information (color, reflection, and the like) in a three-dimensional space.

In addition, a method of storing a V3C bit stream including coded data of a point cloud encoded by the V-PCC in an ISOBMFF has been studied (see, for example, Non Patent Document 4).

In recent years, a method of using a V3C bit stream stored in an ISOBMFF as actual data of a 3D object disposed in a scene has been studied. In this case, in the client, a method of reconstructing the 3D data by an MAF (MediaAccessFunction) and a method of reconstructing the 3D data by a PE (PresentationEngine) have been studied. Further, support of a function of partial access (partial access) to the V3C bit stream is also desired.

### CITATION LIST

### NON PATENT DOCUMENT

Non Patent Document 1: Saurabh Bhatia, Patrick Cozzi, Alexey Knyazev, Tony Parisi, "Khronos glTF2.0", https://github.com/KhronosGroup/glTF/tree/master/specific ation/2.0, June 9, 2017
Non Patent Document 2: "Text of ISO/IEC CD 23090-14 Scene Description for MPEG Media", ISO/IEC JTC 1/SC 29/WG 3 N00026, 2020-11-30
Non Patent Document 3: "ISO/IEC FDIS 23090-5 Visual Volumetric Video-based Coding and Video-based Point Cloud Compression", ISO/IEC JTC 1/SC 29/ WG 11 N19579, 2020-09-21
Non Patent Document 4: "Draft text of ISO/IEC FDIS 23090-10 Carriage of Visual Volumetric Video-based Coding Data", INTERNATIONAL ORGANIZATION FOR STANDARDIZATION ORGANISATION INTERNATIONALE DE NORMALISATION ISO/IEC JTC 1/SC 29/WG 03 MPEG SYSTEMS, ISO/IEC JTC 1/SC 29/WG 03 N0163, 19995, 2021-03-25

### SUMMARY OF THE INVENTION

### PROBLEMS TO BE SOLVED BY THE INVENTION

In a case where the 3D data is reconstructed by the PE, data of a partially acquired tile (tile) in the 3D object is required to be stored in a buffer indicated in the scene description file. However, in the method described in the above-described Non Patent Document, tile data cannot be individually managed in the buffer. Therefore, it is difficult to implement partial access.

The present disclosure has been made in view of such a situation, and enables data for each tile to be stored in a buffer.

### SOLUTIONS TO PROBLEMS

An information processing device according to an aspect of the present technology is an information processing device including a file processing unit that stores tile data of 3D object content in a common buffer region, acquires the desired tile data from the buffer region on the basis of tile storage information for identifying the tile data stored in the buffer region, and processes the acquired tile data.

An information processing method according to an aspect of the present technology is an information processing method including storing tile data of 3D object content in a common buffer region, acquiring the desired tile data from the buffer region on the basis of tile storage information for identifying the tile data stored in the buffer region, and processing the acquired tile data.

An information processing device according to another aspect of the present technology is an information processing device including a file generation unit that generates a scene description file that stores a first accessor for storing tile data of 3D object content in a common first buffer region and a second accessor for storing tile storage information for identifying the tile data stored in the first buffer region in a second buffer region.

An information processing method according to another aspect of the present technology is an information processing method including generating a scene description file that stores a first accessor for storing tile data of 3D object content in a common first buffer region and a second accessor for storing tile storage information for identifying the tile data stored in the first buffer region in a second buffer region.

In an information processing device and a method according to an aspect of the present technology, tile data of 3D object content is stored in a common buffer region, and desired tile data is acquired from the buffer region on the basis of tile storage information for identifying the tile data stored in the buffer region and processed.

In an information processing device and the method according to another aspect of the present technology, a scene description file that stores a first accessor for storing tile data of 3D object content in a common first buffer region and a second accessor for storing tile storage information for identifying the tile data stored in the first buffer region in a second buffer region is generated.

### BRIEF DESCRIPTION OF DRAWINGS

Fig. 1 is a diagram illustrating a main configuration example of a glTF 2.0.
Fig. 2 is a diagram illustrating an example of a glTF object and a reference relationship.
Fig. 3 is a diagram illustrating a description example of a scene description.
Fig. 4 is a diagram for explaining a method of accessing binary data.
Fig. 5 is a diagram illustrating a description example of a scene description.
Fig. 6 is a diagram illustrating a relationship between a buffer object, a buffer view object, and an accessor object.
Fig. 7 is a diagram illustrating description examples of a buffer object, a buffer view object, and an accessor object.
Fig. 8 is a diagram illustrating a configuration example of an object of a scene description.
Fig. 9 is a diagram illustrating a description example of a scene description.
Fig. 10 is a diagram for explaining an object extension method.
Fig. 11 is a diagram illustrating a configuration of a client process.
Fig. 12 is a diagram illustrating a configuration example of an extension for handling timed metadata.
Fig. 13 is a diagram illustrating a description example of a scene description.
Fig. 14 is a diagram illustrating a description example of a scene description.
Fig. 15 is a diagram illustrating a configuration example of an extension for handling timed metadata.
Fig. 16 is a diagram illustrating a main configuration example of a client.
Fig. 17 is a flowchart illustrating an example of a flow of a client process.
Fig. 18 is a diagram for explaining an outline of a V-PCC.
Fig. 19 is a diagram illustrating a main configuration example of a V-PCC bit stream.
Fig. 20 is a diagram illustrating a configuration example of tracks of an ISOBMFF in the case of a multi-track structure.
Fig. 21 is a diagram illustrating a description example of an MPD in the case of a multi-track structure.
Fig. 22 is a diagram illustrating a configuration example of tracks of an ISOBMFF for partial access.
Fig. 23 is a diagram for explaining a 3D spatial region.
Fig. 24 is a diagram for describing storage locations of bounding box information and spatial region information.
Fig. 25 is a diagram illustrating an example of syntax for storing bounding box information and spatial region information.
Fig. 26 is a diagram illustrating an example of syntax for storing spatial region information.
Fig. 27 is a diagram illustrating an example of a client process.
Fig. 28 is a diagram illustrating a configuration example of an object in a scene description in a case where the 3D data is reconstructed by the MAF.
Fig. 29 is a diagram illustrating a configuration example of an object in a scene description in a case where the 3D data is reconstructed by the PE.
Fig. 30 is a diagram illustrating a configuration example of an object in a scene description in a case where the 3D data is reconstructed by the PE.
Fig. 31 is a diagram illustrating an example of a method of processing tile data.
Fig. 32 is a diagram illustrating an object configuration example of a scene description.
Fig. 33 is a diagram illustrating a description example of a scene description.
Fig. 34 is a diagram illustrating an object configuration example of a scene description.
Fig. 35 is a diagram illustrating a description example of a scene description.
Fig. 36 is a diagram illustrating an object configuration example of a scene description.
Fig. 37 is a diagram illustrating a description example of a scene description.
Fig. 38 is a diagram illustrating a description example of a scene description.
Fig. 39 is a diagram illustrating a configuration example of stored tile data and an example of tile storage information.
Fig. 40 is a diagram illustrating an example of parameters of a timed accessor information header.
Fig. 41 is a diagram illustrating an object configuration example of a scene description.
Fig. 42 is a diagram illustrating a syntax example of tile storage information.
Fig. 43 is a diagram illustrating a configuration example of stored tile data.
Fig. 44 is a diagram illustrating an example of tile storage information.
Fig. 45 is a diagram illustrating a syntax example of tile storage information.
Fig. 46 is a diagram illustrating a syntax example of tile storage information.
Fig. 47 is a diagram illustrating an object configuration example of a scene description.
Fig. 48 is a diagram illustrating a syntax example of tile storage information.
Fig. 49 is a diagram illustrating an object configuration example of a scene description.
Fig. 50 is a block diagram illustrating a principal configuration example of a file generation device.
Fig. 51 is a flowchart illustrating an example of a flow of a file generation process.
Fig. 52 is a flowchart illustrating an example of a flow of a file generation process.
Fig. 53 is a block diagram illustrating a main configuration example of a client device.
Fig. 54 is a flowchart illustrating an example of a flow of a playback process.
Fig. 55 is a flowchart illustrating an example of a flow of a playback process.
Fig. 56 is a block diagram illustrating a main configuration example of a computer.

### MODE FOR CARRYING OUT THE INVENTION

Hereinafter, modes for carrying out the present disclosure (hereinafter referred to as embodiments) will be described. Note that the description will be made in the following order.
1. Documents and the like supporting technical content and technical terms
2. MPEG-I scene description
3. Partial access support
4. First embodiment (file generation device)
5. Second embodiment (client device)
6. Appendix

### <1. Documents and the like supporting technical content and technical terms>

The scope disclosed in the present technology includes not only the content described in the embodiments but also the content described in the following non Patent Documents and the like that are known at the time of filing, content of other documents referred to in the following non Patent Documents, and the like.

Non Patent Document 1: (described above)
Non Patent Document 2: (described above)
Non Patent Document 3: (described above)
Non Patent Document 4: (described above)

That is, the content described in the above-described Non Patent Documents, the content of other documents referred to in the above-described Non Patent Documents, and the like are also basis for determining the support requirement. For example, even in a case where syntax and terms such as the glTF 2.0 and its extension described in Non Patent Documents 1 to 3 are not directly defined in the present disclosure, they are within the scope of the present disclosure and satisfy the support requirements of the claims. Furthermore, for example, technical terms such as parsing (Parsing), syntax (Syntax), and semantics (Semantics) are similarly within the scope of the present disclosure and satisfy the support requirements of the claims even in a case where they are not directly defined in the present disclosure.

### <2. MPEG-I scene description>

### <gltf2.0>

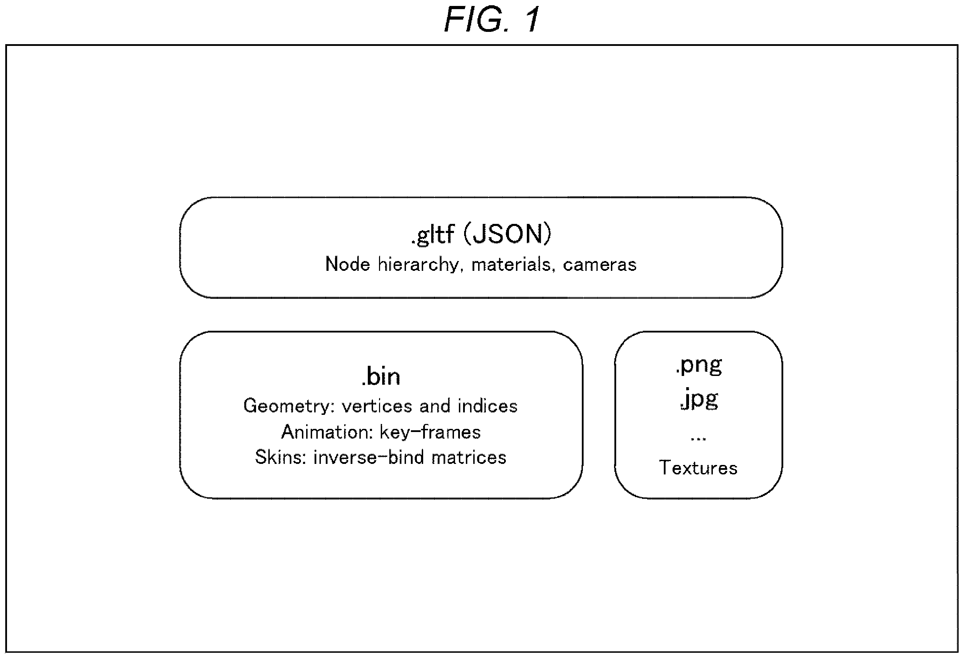

In the related art, for example, as described in Non Patent Document 1, there is the GL Transmission Format (registered trademark) (glTF) 2.0 that is a format for disposing a 3D (three-dimensional) object in a three-dimensional space. For example, as illustrated in Fig. 1, the glTF 2.0 includes a JSON format file (glTF), a binary file (.bin), and an image file (.png,.jpg, and the like). The binary file stores binary data such as geometry and animation. The image file stores data such as texture.

The JSON format file is a scene description file (scene description file) described in JSON (JavaScript (registered trademark) Object Notation). The scene description is metadata describing (a description of) a scene of the 3D content. The description of the scene description defines what kind of scene the scene is. The scene description file is a file that stores such a scene description. In the present disclosure, the scene description file is also referred to as a scene description file.

The description of the JSON format file includes a list of pairs of a key (KEY) and a value (VALUE). An example of the format will be described below.

### "KEY":"VALUE"

The key includes a character string. The value includes a numerical value, a character string, a true/false value, an array, an object, null, or the like.

In addition, a plurality pairs of a key and a value ("KEY":"VALUE") can be put together using {} (braces). The object put together in braces is also referred to as a JSON object. An example of the format will be described below.

```
        "user":{"id":1, "name":"tanaka"}
```

In this example, a JSON object in which a pair of "id":1 and a pair of "Name":"tanaka" are put together is defined as a value corresponding to a key (user).

In addition, zero or more values can be disposed using [] (square brackets). This array is also referred to as a JSON array. For example, a JSON object can be applied as an element of this JSON array. An example of the format will be described below.

```
        test":["hoge", "fuga", "bar"]
        "users":[{"id":1,
 "name": "tanaka"}, {"id": 2, "name": "yamada"}, {"id": 3,
 "name":"sato"}]
```

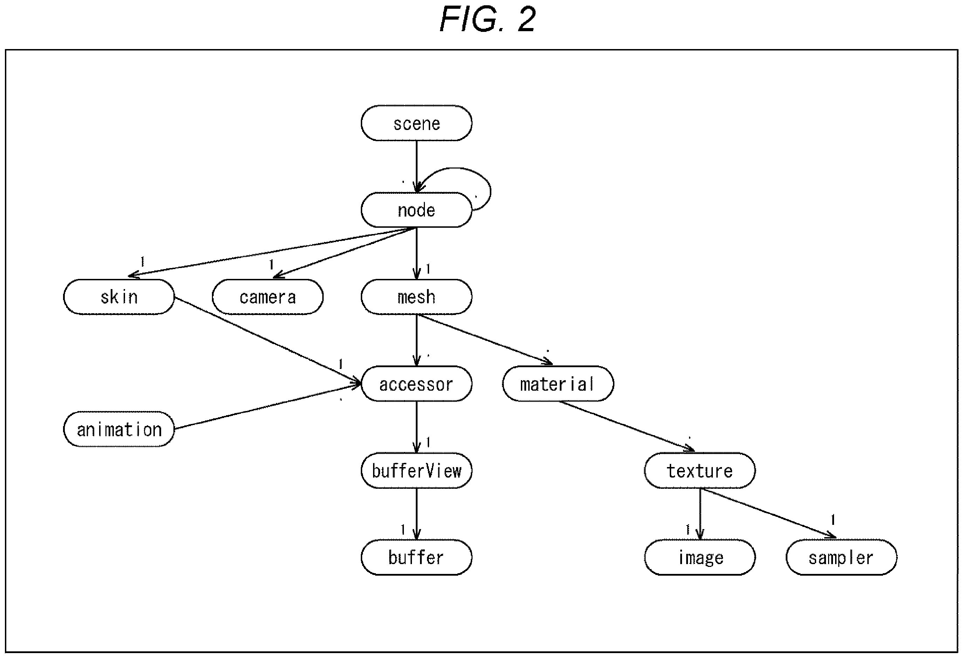

Fig. 2 illustrates glTF objects (glTF object) that can be described at the top of the JSON format file and a reference relationship that they have. Long circles in the tree structure shown in Fig. 2 indicate objects, and arrows between the objects indicate reference relationships. As illustrated in Fig. 2, objects such as "scene", "node", "mesh", "camera", "skin", "material", and "texture" are described at the top of the JSON format file.

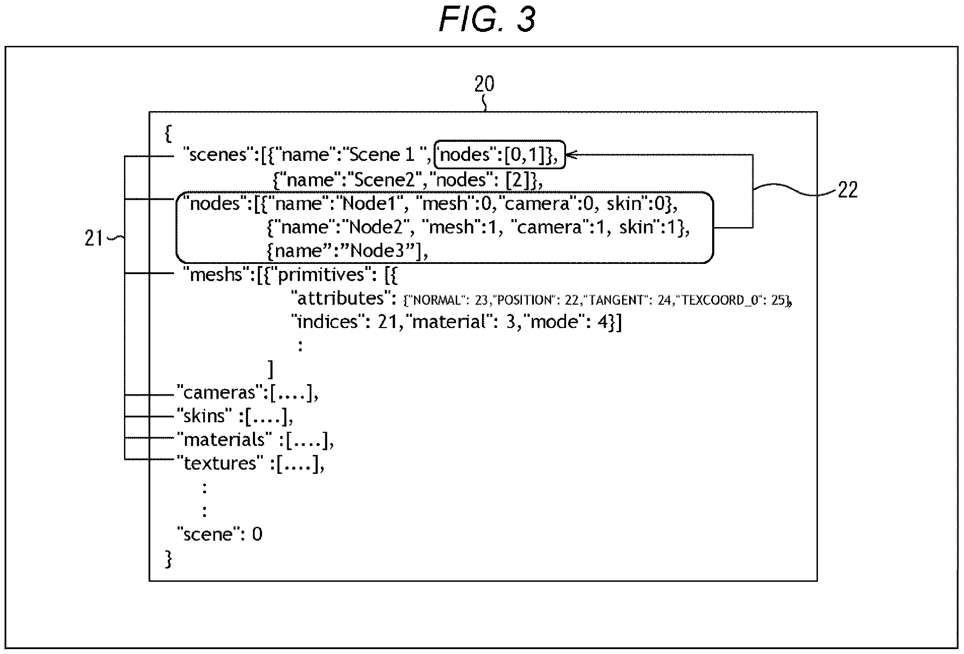

A description example of such a JSON format file (scene description) is illustrated in Fig. 3. A JSON format file 20 of Fig. 3 illustrates a description example of part of the top. In the JSON format file 20, all the used top-level objects (top-level object) 21 are described at the top. The top-level object 21 is the glTF object illustrated in Fig. 2. Furthermore, in the JSON format file 20, a reference relationship between objects (object) is indicated as indicated by an arrow 22. More specifically, the reference relationship is indicated by designating an index (index) of an element of the array of the object to be referred to with the property (property) of the superior object.

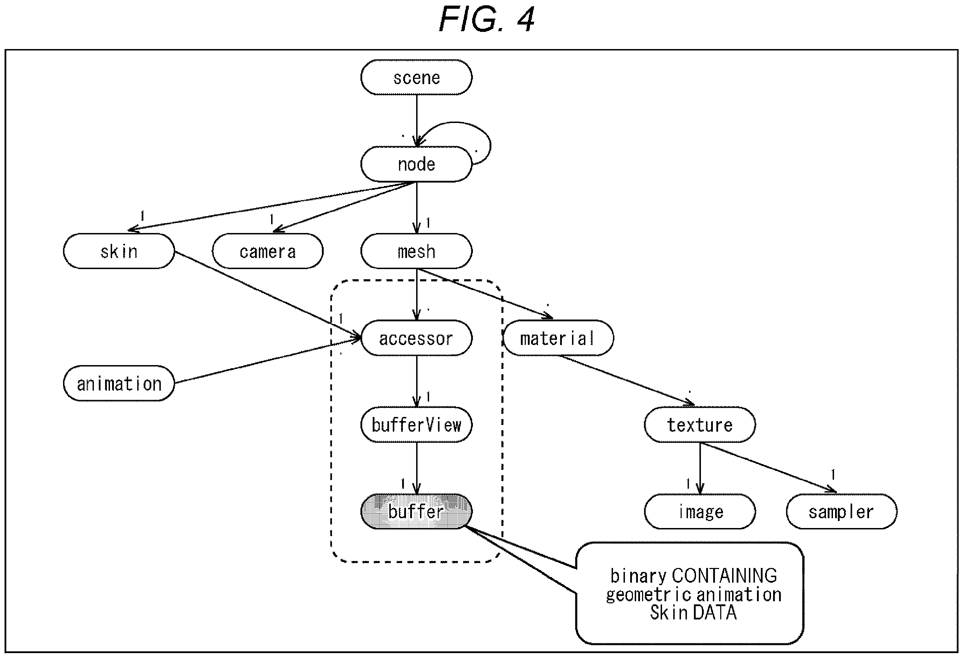

Fig. 4 is a diagram illustrating a method of accessing binary data. As illustrated in Fig. 4, the binary data is stored in the buffer object (buffer object). That is, information (for example, a uniform resource identifier (URI) or the like) for accessing the binary data in the buffer object is indicated. In the JSON format file, as illustrated in Fig. 4, it is possible to access the buffer object via an accessor object (accessor object) and a buffer view object (bufferView object), for example, from objects such as a mesh (mesh), a camera (camera), and a skin (skin).

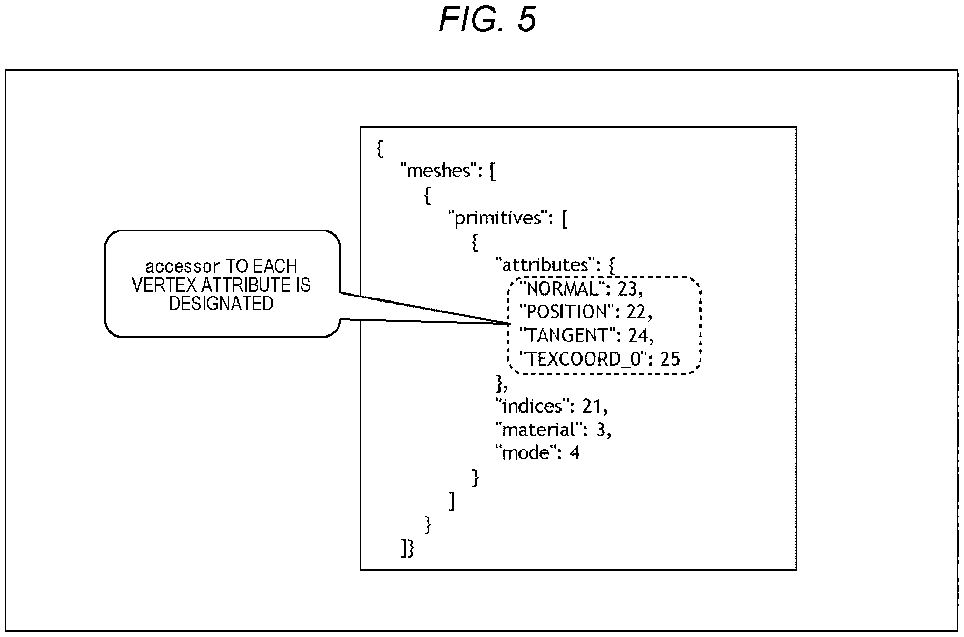

That is, in an object such as the mesh (mesh), the camera (camera), or the skin (skin), an accessor object to be referred to is designated. Fig. 5 illustrates a description example of the mesh object (mesh) in the JSON format file. For example, as illustrated in Fig. 5, in the mesh object, attributes (attribute) of vertices such as NORMAL, POSITION, TANGENT, and TEXCORD_0 are defined as keys, and an accessor object to be referred to is designated as a value for each attribute.

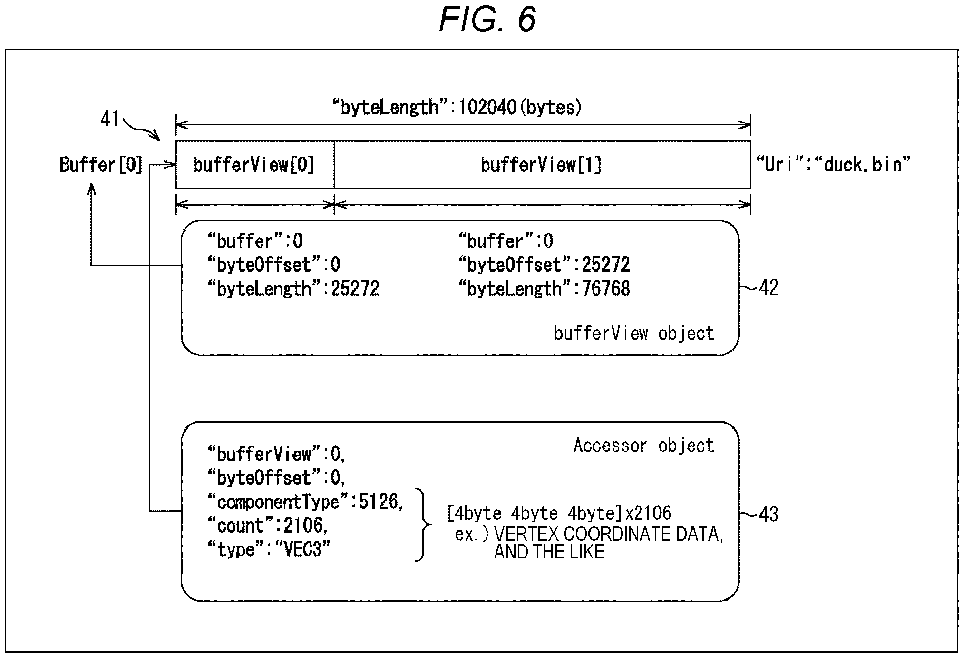

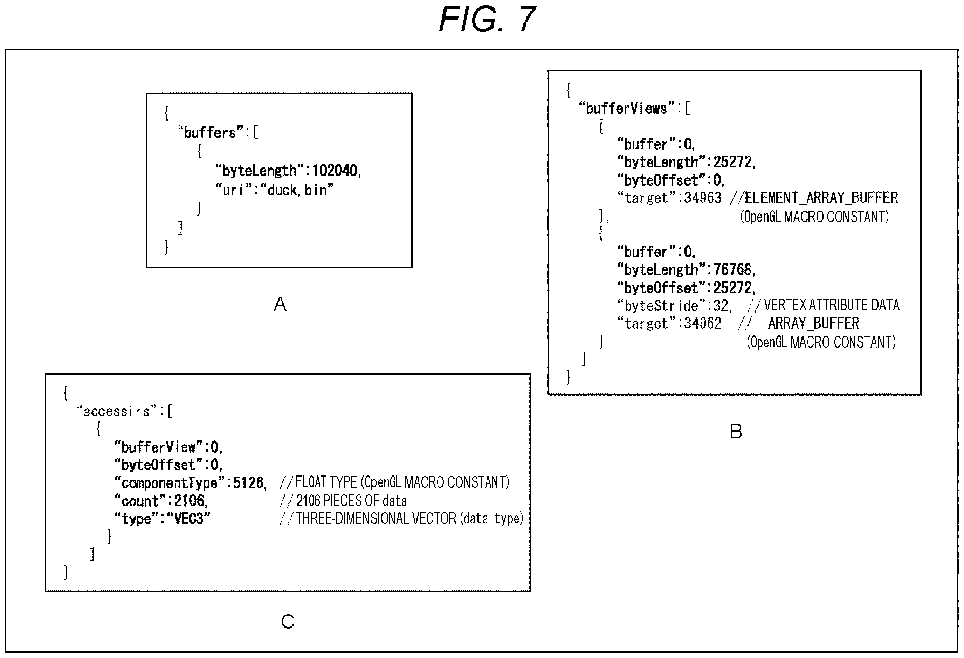

A relationship between the buffer object, the buffer view object, and the accessor object is illustrated in Fig. 6. Furthermore, a description example of these objects in the JSON format file is illustrated in Fig. 7.

In Fig. 6, a buffer object 41 is an object that stores information (such as URI) for accessing binary data that is actual data, and information indicating a data length (for example, byte length) of the binary data. A of Fig. 7 illustrates a description example of the buffer object 41. ""bytelength":102040" illustrated in A of Fig. 7 indicates that the byte length of the buffer object 41 is 102040 bytes (bytes) as illustrated in Fig. 6. Furthermore, ""uri":"duck.bin"" illustrated in A of Fig. 7 indicates that the URI of the buffer object 41 is "duck.bin" as illustrated in Fig. 6.

In Fig. 6, a buffer view object 42 is an object that stores information related to a subset (subset) region of binary data designated in the buffer object 41 (that is, information related to a partial region of the buffer object 41). B of Fig. 7 illustrates a description example of the buffer view object 42. As illustrated in B of Fig. 6 or 7, the buffer view object 42 stores, for example, information such as identification information about the buffer object 41 to which the buffer view object 42 belongs, an offset (for example, a byte offset) indicating a position of the buffer view object 42 in the buffer object 41, and a length (for example, a byte length) indicating a data length (for example, a byte length) of the buffer view object 42.

As illustrated in B of Fig. 7, in a case where there is a plurality of buffer view objects, information is described for each buffer view object (that is, for each subset region). For example, information such as ""buffer":0", ""bytelength":25272", and ""byteOffset":0" illustrated on the upper side in B of Fig. 7 is information about the first buffer view object 42 (bufferView[0]) illustrated in the buffer object 41 in Fig. 6. Further, the information such as ""buffer":0", ""bytelength":76768", and ""byteOffset":25272" illustrated on the lower side in B of Fig. 7 is information about the second buffer view object 42 (bufferView[1]) illustrated in the buffer object 41 in Fig. 6.

""Buffer":0" of the first buffer view object 42 (bufferView[0]) illustrated in B of Fig. 7 indicates that the identification information about the buffer object 41 to which the buffer view object 42 (bufferView[0]) belongs is "0" (Buffer[0]) as illustrated in Fig. 6. Further, ""bytelength":25272" indicates that the byte length of the buffer view object 42 (bufferView[0]) is 25272 bytes. Further, ""byteOffset":0" indicates that the byte offset of the buffer view object 42 (bufferView[0]) is 0 bytes.

""Buffer":0" of the second buffer view object 42 (bufferView[1]) illustrated in B of Fig. 7 indicates that the identification information about the buffer object 41 to which the buffer view object 42 (bufferView[0]) belongs is "0" (Buffer[0]) as illustrated in Fig. 6. Further, ""bytelength":76768" indicates that the byte length of the buffer view object 42 (bufferView[0]) is 76768 bytes. Further, ""byteOffset":25272" indicates that the byte offset of the buffer view object 42 (bufferView[0]) is 25272 bytes.

In Fig. 6, an accessor object 43 is an object that stores information related to a method of interpreting data of the buffer view object 42. C of Fig. 7 illustrates a description example of the accessor object 43. As illustrated in C of Fig. 6 or 7, the accessor object 43 stores, for example, information such as identification information about the buffer view object 42 to which the accessor object 43 belongs, an offset (for example, byte offset) indicating a position of the buffer view object 42 in the buffer object 41, a component type of the buffer view object 42, the number of pieces of data stored in the buffer view object 42, a type of data stored in the buffer view object 42, and the like. These pieces of information are described for each buffer view object.

In the example in C of Fig. 7, information such as ""bufferView":0", ""byteOffset":0", ""componentType":5126", ""count":2106", and ""Type":"VEC3"" is illustrated. ""bufferView": 0" indicates that the identification information about the buffer view object 42 to which the accessor object 43 belongs is "0" (bufferView[0]), as illustrated in Fig. 6. Further, ""byteOffset":0" indicates that the byte offset of the buffer view object 42 (bufferView[0]) is 0 bytes. Further, ""componentType":5126" indicates that the component type is a FLOAT type (OpenGL macro constant). Further, ""count":2106" indicates that the number of pieces of data stored in the buffer view object 42 (bufferView[0]) is 2106. Further, ""Type":"VEC3"" indicates that (the type of) the data stored in the buffer view object 42 (bufferView[0]) is a three-dimensional vector.

All accesses to data other than the image (image) are defined by reference to the accessor object 43 (by designating an accessor index).

Next, a method of designating a 3D object of a point cloud in a scene description (JSON format file) conforming to such a glTF 2.0 will be described. A point cloud is a 3D content expressing a three-dimensional structure (three-dimensional shaped object) as a set of a large number of points. The data of the point cloud includes position information (also referred to as a geometry) and attribute information (also referred to as an attribute) of each point. The attribute can include any information. For example, color information, reflectance information, normal line information, and the like of each point may be included in the attribute. As described above, the point cloud has a relatively simple data structure, and can express any three-dimensional structure with sufficient accuracy by using a sufficiently large number of points.

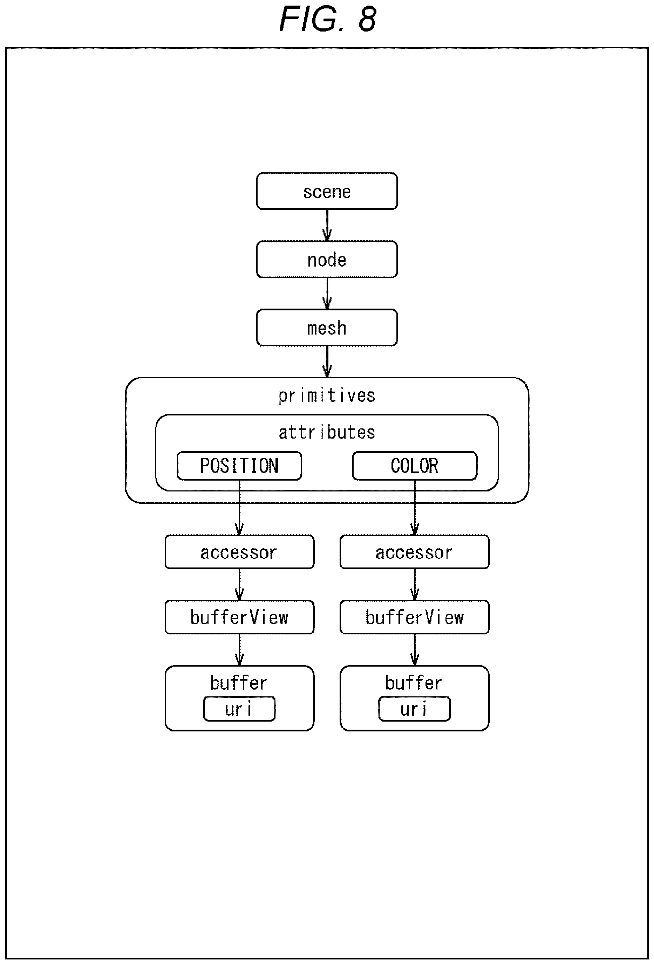

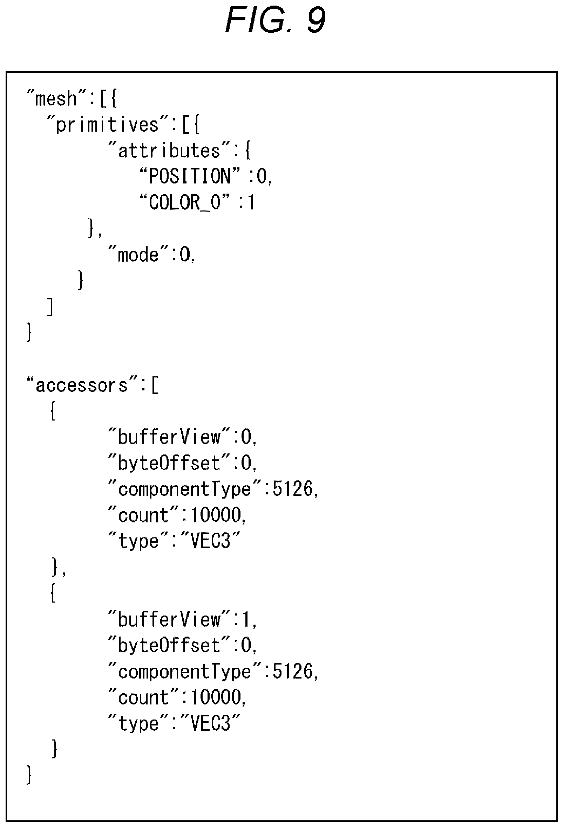

In a case where the point cloud does not change in the time direction (also referred to as static), the mesh.primitives object of the glTF 2.0 is used to designate the 3D object. Fig. 8 is a diagram illustrating a configuration example of an object in a scene description in a case where a point cloud is static. Fig. 9 is a diagram illustrating a description example of the scene description.

As illustrated in Fig. 9, the mode of the primitives object is designated to 0 indicating that data (data) is treated as a point (point) of a point cloud. As illustrated in Figs. 8 and 9, in the position property (POSITION property) of the attributes object in mesh.primitives, an accessor (accessor) to a buffer (buffer) that stores position information about a point (Point) is designated. Similarly, in the color property (COLOR property) of the attributes object, an accessor (accessor) to a buffer (buffer) that stores color information about a point (Point) is designated. There may be one buffer (buffer) and one buffer view (bufferView) (data (data) may be stored in one file (file)) .

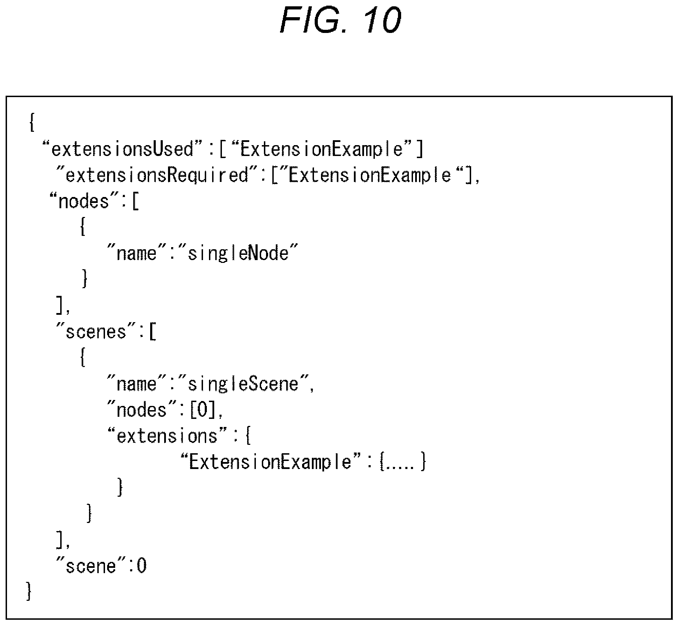

Next, an extension of an object of such a scene description will be described. Each object of glTF 2.0 may store a newly defined object in an extension object (extension object). Fig. 10 illustrates a description example in a case where a newly defined object (ExtensionExample) is specified. As illustrated in Fig. 10, in a case where a newly defined extension is used, the extension object name (in the example of Fig. 10, ExtensionExample) is described in "extensionUsed" and "extensionRequired". This indicates that this extension is an extension that is used or is an extension required for load (load).

### <Client process>

Next, processing of the client device in the MPEG-I Scene Description will be described. The client device acquires a scene description, acquires data of a 3D object on the basis of the scene description, and generates a display image using the scene description and the data of the 3D object.

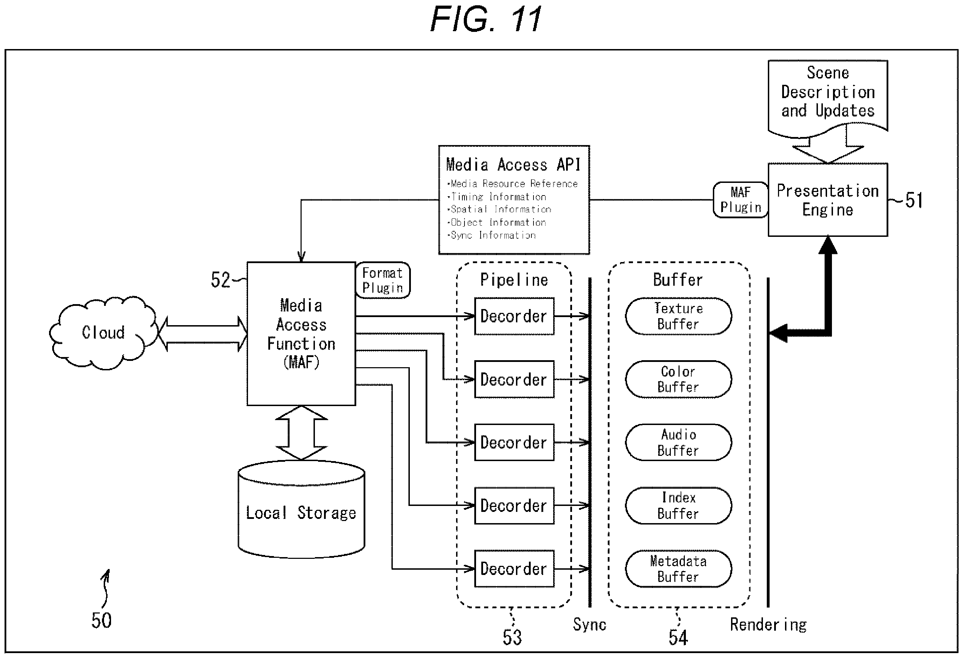

As described in Non Patent Document 2, in the client device, a presentation engine, a media access function, or the like performs a process. For example, as illustrated in Fig. 11, a presentation engine (Presentation Engine) 51 of a client device 50 acquires an initial value of a scene description and information (hereinafter, also referred to as update information) for updating the scene description, and generates the scene description at the processing target time. Then, the presentation engine 51 parses the scene description and identifies a medium (moving image, audio, or the like) to be played back. Then, the presentation engine 51 requests a media access function (Media Access Function) 52 to acquire the medium via a media access API (Media Access API (Application Program Interface)). Furthermore, the presentation engine 51 also performs setting of a pipeline process, designation of a buffer, and the like.

The media access function 52 acquires various pieces of data of media requested by the presentation engine 51 from a cloud (Cloud), a local storage (Local Storage), or the like. The media access function 52 supplies the acquired various pieces of data (coded data) of the media to a pipeline (Pipeline) 53.

The pipeline 53 decodes various pieces of data (coded data) of the supplied media by a pipeline process, and supplies a decoding result to a buffer (Buffer) 54. The buffer 54 holds various pieces of data of the supplied medium.

The presentation engine 51 performs rendering (Rendering) or the like using various pieces of data of media held in the buffer 54.

### <Application of timed media>

In recent years, for example, as described in Non Patent Document 2, in the MPEG-I Scene Description, it has been studied to extend the glTF 2.0 and to apply timed media (Timed media) as 3D object content. The timed media is media data that changes in the time axis direction like a moving image in a two-dimensional image.

The glTF was applicable only to still image data as media data (3D object content). That is, the glTF does not correspond to media data of a moving image. In the case of moving the 3D object, animation (a method of switching a still image along a time axis) has been applied.

In the MPEG-I Scene Description, it has been studied to apply the glTF 2.0, apply a JSON format file as a scene description, and further extend the glTF so that timed media (for example, video data) can be handled as media data. In order to handle timed media, for example, the following extension is performed.

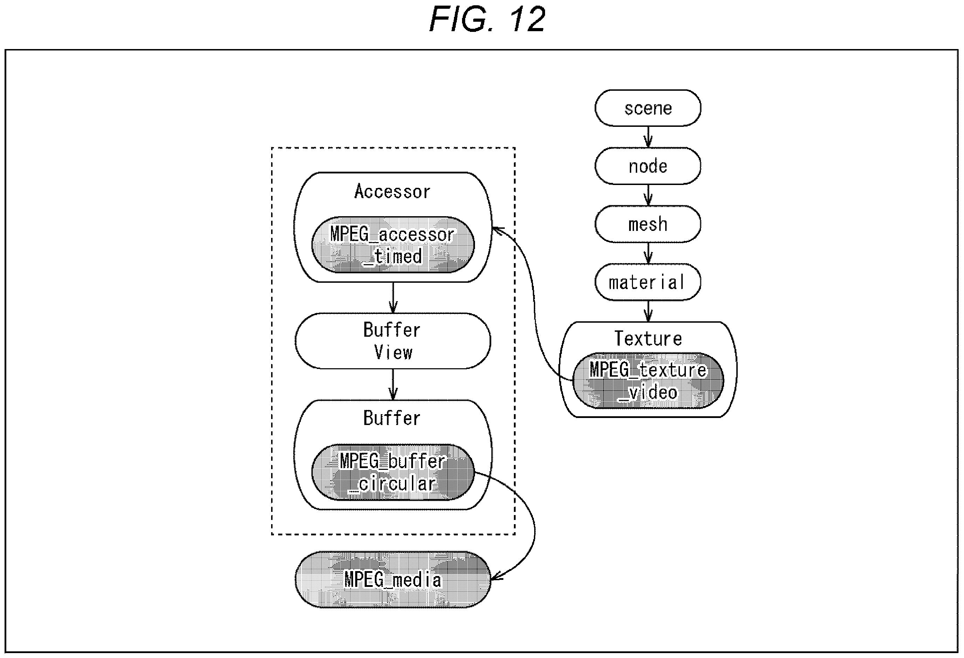

Fig. 12 is a diagram for describing the extension for handling timed media. In the example of Fig. 12, the MPEG media object (MPEG_media) is an extension of glTF, and is an object that designates attributes of MPEG media such as video data, for example, uri, track, renderingRate, startTime, and the like.

Furthermore, as illustrated in Fig. 12, an MPEG texture video object (MPEG_texture_video) is provided as an extension object (extensions) of the texture object (texture). In the MPEG texture video object, information about an accessor corresponding to a buffer object to be accessed is stored. That is, the MPEG texture video object is an object that designates an index of an accessor (accessor) corresponding to a buffer (buffer) in which texture media (texture media) designated by the MPEG media object (MPEG_media) are decoded and stored.

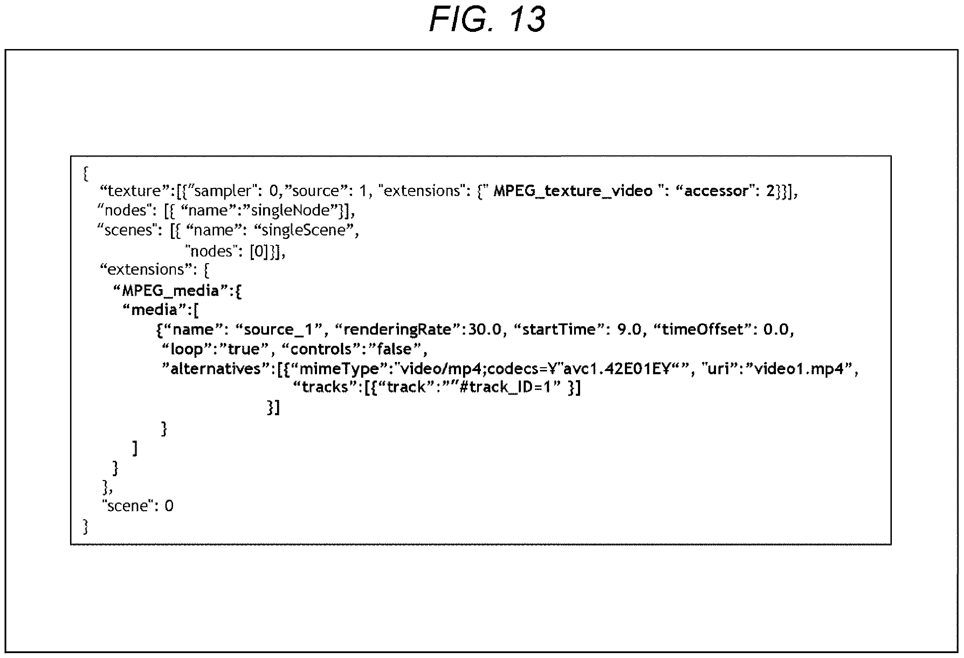

Fig. 13 is a diagram illustrating a description example of an MPEG media object (MPEG_media) and an MPEG texture video object (MPEG_texture_video) in a scene description for describing an extension for handling timed media. In the example of Fig. 13, in the second line from the top, an MPEG texture video object (MPEG_texture_video) is set as an extension object (extensions) of a texture object (texture) as described below. Then, an index of an accessor ("2" in this example) is designated as the value of the MPEG video texture object.

```
       "texture":[{"sampler":0, "source":1,
 "extensions":{"MPEG_texture_video ":"accessor":2}}],
```

Furthermore, in the case of the example of Fig. 13, in the seventh to 16 lines from the top, an MPEG media object (MPEG_media) is set as an extension object (extensions) of the glTF as described below. Then, as the value of the MPEG media object, for example, various pieces of information related to the MPEG media object such as encoding and URI of the MPEG media object are stored.

```
       "MPEG_media":{
        "media":[
        {"name":"source_1", "renderingRate": 30.0,
 "startTime":9.0, "timeOffset":0.0,
        "loop":"true", "controls":"false",
        "alternatives": [{"mimeType":"video/mp4;codecs=¥"avc
 1.42E01E¥ʺʺ, "uri":"video1.mp4",
        "tracks":[{"track":""#trackID=1"}]
        } ]
        }
        ]
        }
```

In addition, each frame data is decoded and sequentially stored in a buffer, but its position and the like fluctuate. Therefore, the scene description has a mechanism to store the fluctuating information so that the renderer (renderer) can read the data. For example, as illustrated in Fig. 12, an MPEG buffer circular object (MPEG_buffer_circular) is provided as an extension object (extensions) of the buffer object (buffer). Information for dynamically storing data in the buffer object is stored in the MPEG buffer circular object. For example, information such as information indicating the data length of the buffer header (bufferHeader) and information indicating the number of frames is stored in the MPEG buffer circular object. Note that the buffer header stores, for example, information such as an index (index), a time stamp of stored frame data, a data length, and the like.

Further, as illustrated in Fig. 12, an MPEG accessor timed object (MPEG_timed_accessor) is provided as an extension object (extensions) of the accessor object (accessor). In this case, since the media data is a moving image, the buffer view object (bufferView) referred to in the time direction may change (the position may vary). Therefore, information indicating the buffer view object to be referred to is stored in the MPEG accessor timed object. For example, the MPEG accessor timed object stores information indicating a reference to a buffer view object (bufferView) in which a timed accessor information header (timedAccessor information header) is described. Note that the timed accessor information header is, for example, header information that stores information in the dynamically changing accessor object and the buffer view object.

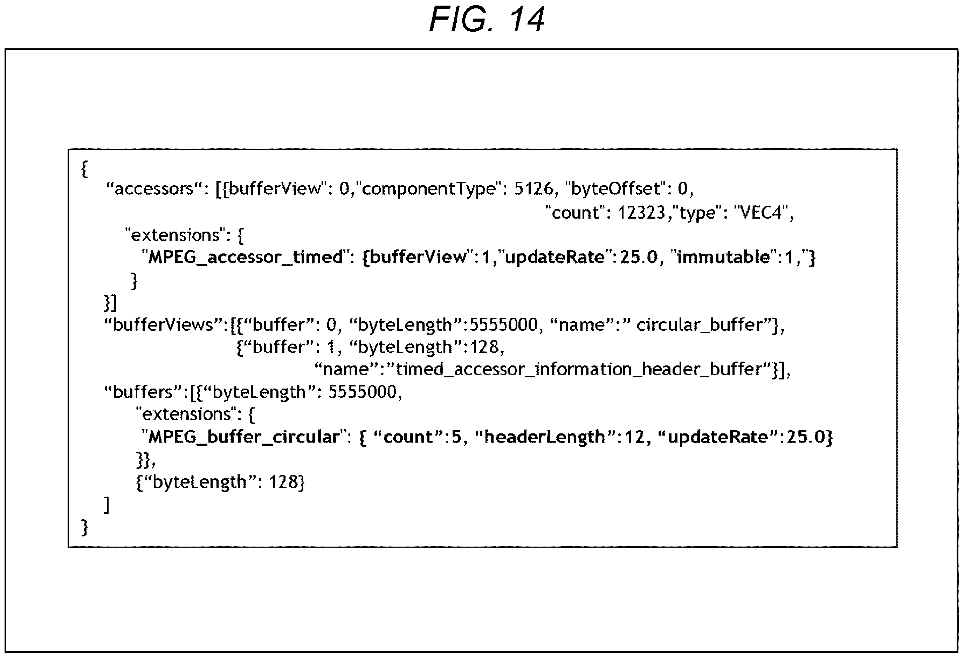

Fig. 14 is a diagram illustrating a description example of an MPEG buffer circular object (MPEG_buffer_circular) and an MPEG accessor timed object (MPEG_accessor_timed) in a scene description for describing an extension for handling timed media. In the case of the example of Fig. 14, in the fifth line from the top, an MPEG accessor timed object (MPEG_accessor_timed) is set as an extension object (extensions) of the accessor object (accessors) as described below. Then, parameters such as an index ("1" in this example) of the buffer view object, an update rate (updateRate), and immutable information (immutable) as the values of the MPEG accessor timed object and values thereof are designated.

```
        "MPEG_accessor_timed":{"bufferview":1,
 "updateRate":25.0, "immutable":1,"}
```

Furthermore, in the case of the example of Fig. 14, in the 13th line from the top, an MPEG buffer circular object (MPEG_buffer_circular) is set as the extension objects (extensions) of the buffer object (buffer) as described below. Then, parameters such as a buffer frame count (count), a header length (headerLength), and an update rate (updateRate) as the values of the MPEG buffer circular object and values thereof are designated.

```
        "MPEG_buffer_circular":{"count":5,
 "headerLength":12, "updateRate":25.0}
```

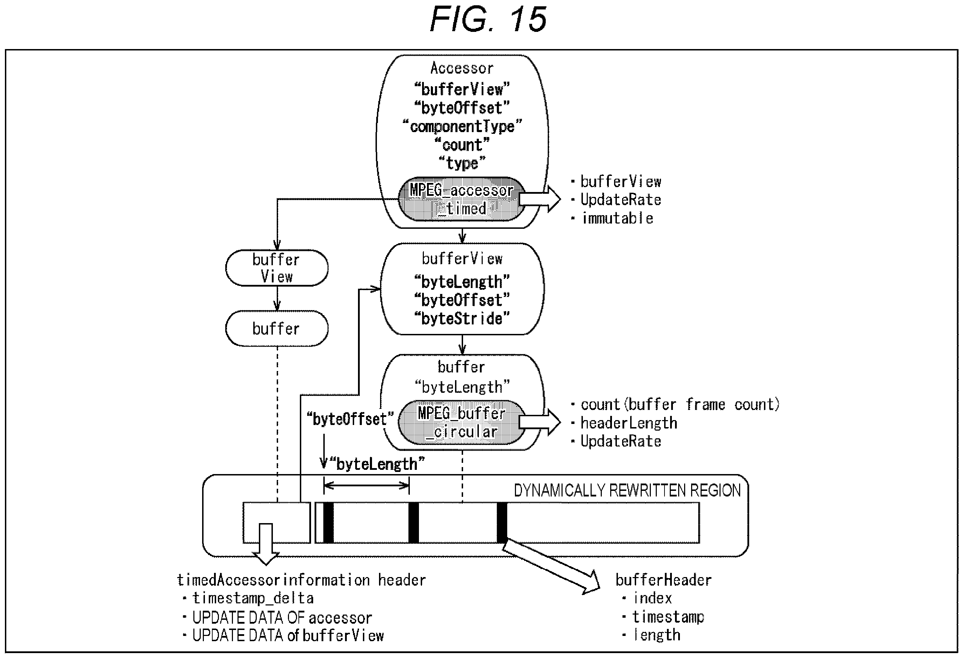

Fig. 15 is a diagram for describing extension for handling timed media. Fig. 15 illustrates an example of a relationship between an MPEG accessor timed object or an MPEG buffer circular object, and the accessor object, the buffer view object, and the buffer object.

As described above, the MPEG buffer circular object of the buffer object stores information necessary for storing data that changes with time in the buffer region indicated by the buffer object, such as a buffer frame count (count), a header length (headerLength), and an update rate (updateRate). In addition, parameters such as an index (idex), a time stamp (timestamp), and a data length (length) are stored in the buffer header (bufferHeader) that is a header of the buffer region.

As described above, the MPEG accessor timed object of the accessor object stores information related to the buffer view object to be referred to, such as a buffer view object index (bufferView), an update rate (updateRate), and immutable information (immutable). Further, the MPEG accessor timed object stores information related to a buffer view object in which the timed accessor information header to be referred to is stored. The timed accessor information header can store a timestamp delta (timestamp_delta), update data for the accessor object, update data for the buffer view object, and the like.

### <Client process in a case where MPEG_texture_video is used>

The scene description is spatial arrangement information for disposing one or more 3D objects in a 3D space. The content of the scene description can be updated along the time axis. That is, the arrangement of the 3D objects can be updated with the lapse of time. A client process performed in the client device at this time will be described.

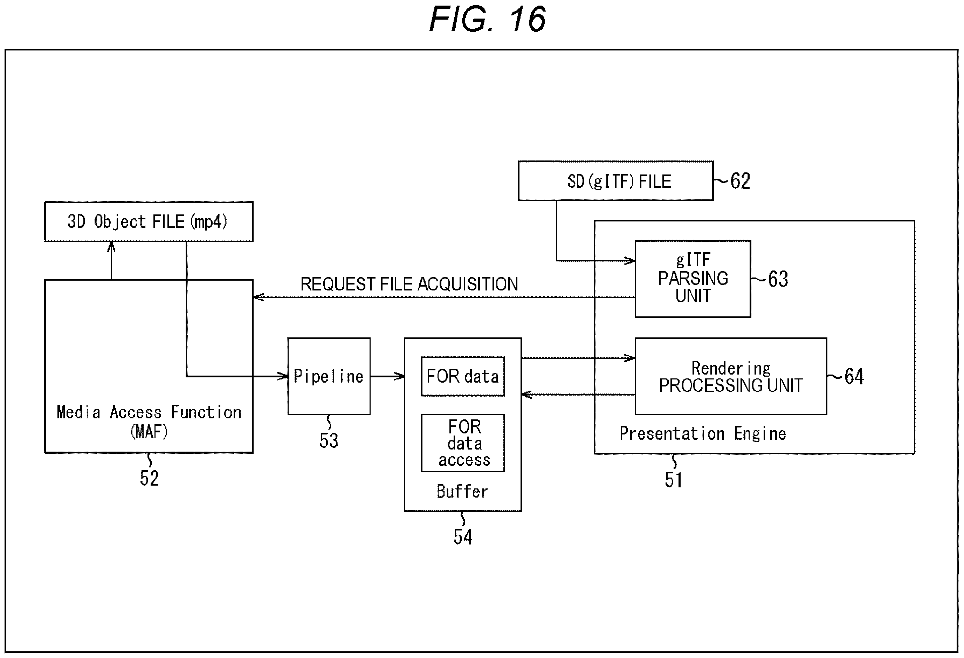

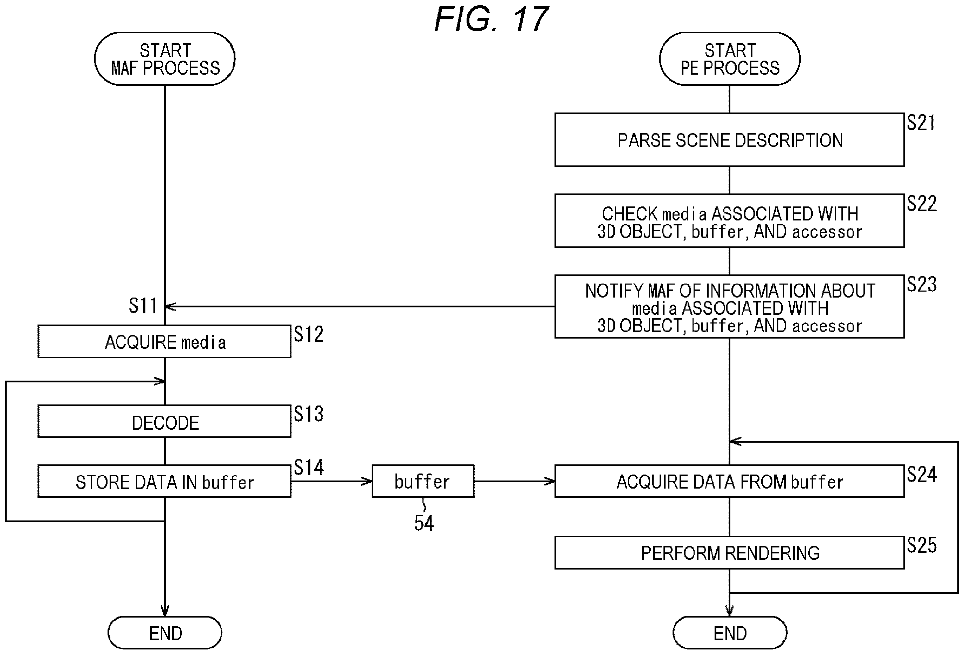

Fig. 16 is a main configuration example regarding the client process of the client device, and Fig. 17 is a flowchart illustrating an example of a flow of the client process. As illustrated in Fig. 16, the client device includes a presentation engine (PresentationEngine (hereinafter, also referred to as a PE)) 51, a media access function (MediaAccessFunction (hereinafter, also referred to as an MAF)) 52, a pipeline (Pipeline) 53, and a buffer (Buffer) 54. The presentation engine (PE) 51 includes a glTF parsing unit 63 and a rendering (Rendering) processing unit 64.

The presentation engine (PE) 51 causes the media access function 52 to acquire media, acquires data thereof via the buffer 54, and performs a process related to display and the like. Specifically, for example, the process is performed in the following flow.

When the client process is started, the glTF parsing unit 63 of the presentation engine (PE) 51 starts the PE process as in the example of Fig. 17, and in step S21, acquires an SD (glTF) file 62 that is a scene description file and parses (parse) the scene description.

In step S22, the glTF parsing unit 63 checks media (media) associated with the 3D object (texture), a buffer (buffer) that stores the media after processing, and an accessor (accessor). In step S23, the glTF parsing unit 63 notifies the media access function 52 of the information as a file acquisition request.

The media access function (MAF) 52 starts the MAF process as in the example of Fig. 17, and acquires the notification in step 511. In step S12, the media access function 52 acquires the media (3D object file (mp4)) on the basis of the notification.

In step S13, the media access function 52 decodes the acquired media (3D object file (mp4)). In step S14, the media access function 52 stores the data of the media obtained by the decoding in the buffer 54 on the basis of the notification from the presentation engine (PE 51).

In step S24, the rendering processing unit 64 of the presentation engine 51 reads (acquires) the data from the buffer 54 at an appropriate timing. In step S25, the rendering processing unit 64 performs rendering using the acquired data and generates a display image.

The media access function 52 repeats the processing of steps S13 and S14 to execute the processing for each time (each frame). Furthermore, the rendering processing unit 64 of the presentation engine 51 repeats the processing of steps S24 and S25 to execute the processing for each time (each frame). When the process ends for all the frames, the media access function 52 ends the MAF process, and the presentation engine 51 ends the PE process. That is, the client process ends.

### <Outline of V-PCC>

Meanwhile, for example, as described in Non Patent Document 3, as a method of encoding a point cloud (point cloud) that is a set of points simultaneously having position information and attribute information (color, reflection, and the like) in a three-dimensional space, a video based point cloud compression (V-PCC) has been proposed in which the point cloud is segmented to form regions, planar projection is performed for each region, and encoding is performed by a video codec.

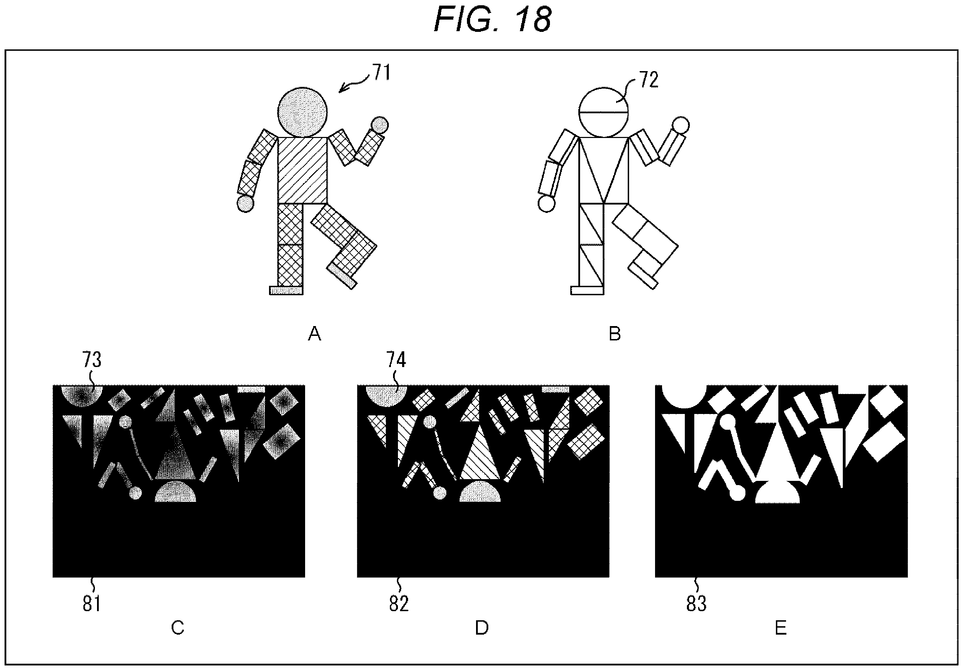

In the V-PCC, the geometry and the attribute of a point cloud are projected on a two-dimensional plane for each small region. In the present disclosure, this small region may be referred to as a partial region. An image in which the geometry and the attribute are projected on a two-dimensional plane is also referred to as a projection image. Furthermore, the projection image for each small region (partial region) is referred to as a patch (patch). For example, an object 71 (3D data) in A of Fig. 18 is decomposed into patches 72 (2D data) as illustrated in B of Fig. 18. In a case of a geometry patch, each pixel value indicates position information about a point. However, in this case, the position information about the point is expressed as position information (a depth value (Depth)) in a direction (a depth direction) perpendicular to a projection plane thereof.

Then, each patch generated in this way is disposed in a frame image (also referred to as a video frame) of a video sequence. The frame image in which the geometry patch is disposed is also referred to as a geometry video frame (Geometry video frame). Furthermore, the frame image in which the attribute patch is disposed is also referred to as an attribute video frame (Attribute video frame). For example, from an object 71 in A of Fig. 18, a geometry video frame 81 in which geometry patches 73 are disposed as illustrated in C of Fig. 18 and an attribute video frame 82 in which attribute patches 74 are disposed as illustrated in D of Fig. 18 are generated. For example, each pixel value of the geometry video frame 81 indicates the depth value described above.

Then, these video frames are encoded by an encoding method for a two-dimensional image, such as, for example, advanced video coding (AVC) or high efficiency video coding (HEVC). That is, point cloud data that is 3D data representing a three-dimensional structure can be encoded using a codec for a two-dimensional image.

Note that an occupancy map (also referred to as an occupancy image) can also be used. The occupancy map is map information indicating the presence or absence of the projection image (patch) for every N × N pixels of the geometry video frame or the attribute video frame. For example, the occupancy map indicates a region (N × N pixels) in which a patch is present by a value "1", and indicates a region (N × N pixels) in which no patch is present by a value "0" in the geometry video frame or the attribute video frame.

A decoder can grasp whether or not a patch is present in the region by referring to this occupancy map, so that an influence of noise or the like caused by encoding and decoding can be suppressed, and 3D data can be restored more precisely. For example, even when the depth value changes due to encoding and decoding, the decoder can ignore the depth value of the region where no patch exists by referring to the occupancy map. That is, the decoder can be prevented from performing the process as the position information about the 3D data by referring to the occupancy map.

For example, for a geometry video frame 11 and an attribute video frame 12, an occupancy map 83 as illustrated in E of Fig. 18 may be generated. In the occupancy map 83, a white portion indicates the value "1", and a black portion indicates the value "0".

Such an occupancy map may be encoded as data (a video frame) separate from the geometry video frame and the attribute video frame, and transmitted to the decoding side. That is, as in the geometry video frame and the attribute video frame, the occupancy map can also be encoded by the encoding method for a two-dimensional image such as AVC or HEVC.

Coded data (bit stream) generated by encoding the geometry video frame is also referred to as a geometry video sub-bit stream (geometry video sub-bitstream). Coded data (bit stream) generated by encoding the attribute video frame is also referred to as an attribute video sub-bit stream (attribute video sub-bitstream). Coded data (bit stream) generated by encoding the occupancy map is also referred to as an occupancy map video sub-bit stream (occupancy map video sub-bitstream). Note that the geometry video sub-bit stream, the attribute video sub-bit stream, and the occupancy map video sub-bit stream are referred to as a video sub-bit stream (video sub-bitstream) in a case where it is not necessary to distinguish from one another for description.

Moreover, atlas information (atlas) that is information for reconstructing a point cloud (3D data) from a patch (2D data), is encoded and transmitted to the decoding side. An encoding method (and a decoding method) of the atlas information is any method. Coded data (bit stream) generated by encoding the atlas information is also referred to as an atlas sub-bit stream (atlas sub-bitstream).

Note that, in the following description, it is assumed that (the object of) the point cloud can change in the time direction (also referred to as being dynamic) like a moving image of a two-dimensional image. That is, the geometry data and the attribute data have a concept of a time direction, and are data sampled at every predetermined time interval like a moving image of a two-dimensional image. Note that, like the video frame of a two-dimensional image, data at each sampling time is referred to as a frame. That is, the point cloud data (geometry data and attribute data) includes a plurality of frames like a moving image of a two-dimensional image. In the present disclosure, the frame of the point cloud is also referred to as a point cloud frame. In a case of the V-PCC, even such a point cloud of a moving image (a plurality of frames) can be encoded with high efficiency using a moving image encoding method by converting each point cloud frame into the video frame to form the video sequence.

### <Structure of V-PCC bit stream>

An encoder multiplexes the coded data of the geometry video frame, the attribute video frame, the occupancy map, and the atlas information as described above to generate one bit stream. This bit stream is also referred to as a V-PCC bit stream (V-PCC Bitstream).

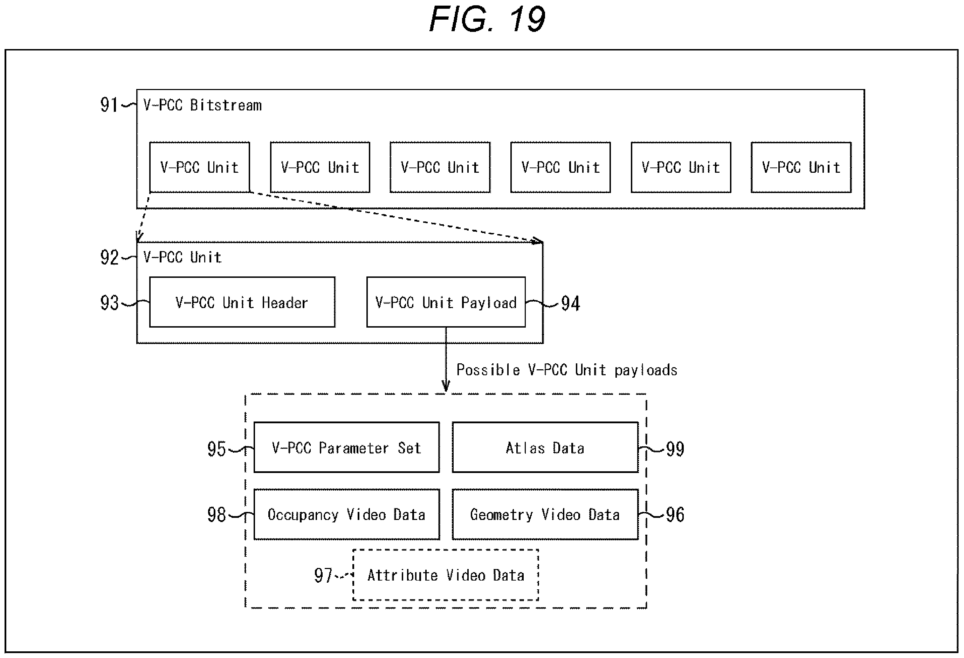

Fig. 19 is a diagram illustrating a main configuration example of a V-PCC bit stream. As illustrated in Fig. 19, a V-PCC bit stream 91 includes a plurality of V-PCC units (V-PCC Unit) 92.

The V-PCC unit 92 includes a V-PCC unit header (V-PCC unit header) 93 and a V-PCC unit payload (V-PCC unit payload) 94. The V-PCC unit header 93 includes information indicating a type of information to be stored in the V-PCC unit payload 94. The V-PCC unit payload 94 may store, depending on a type signaled in its V-PCC unit header 93, a V-PCC parameter set (V-PCC Parameter Set) 95, a geometry video sub-bit stream 96 (Geometry Video Data), an attribute video sub-bit stream 97 (Attribute Video Data), an occupancy map video sub-bit stream 98 (Occupancy Video Data), an atlas sub-bit stream 99 (Atlas Data), and the like. The V-PCC parameter set (V-PCC Parameter Set) 95 stores parameters related to the V-PCC unit 92.

### <Storage method in ISOBMFF>

Furthermore, for example, as described in Non Patent Document 4, a method of storing a V-PCC bit stream (also referred to as a V3C bit stream) configured by coded data of a point cloud encoded by the V-PCC in the ISOBMFF has been studied. Non Patent Document 4 specifies two types of methods of storing the V3C bit stream in the ISOBMFF, that is, a single track structure (single track structure) and a multi-track structure (multi-track structure).

The single track structure is a method of storing a V3C bit stream into one track. That is, in this case, a geometry video sub-bit stream, an attribute video sub-bit stream, an occupancy map video sub-bit stream, and an atlas sub-bit stream are stored in mutually the same track.

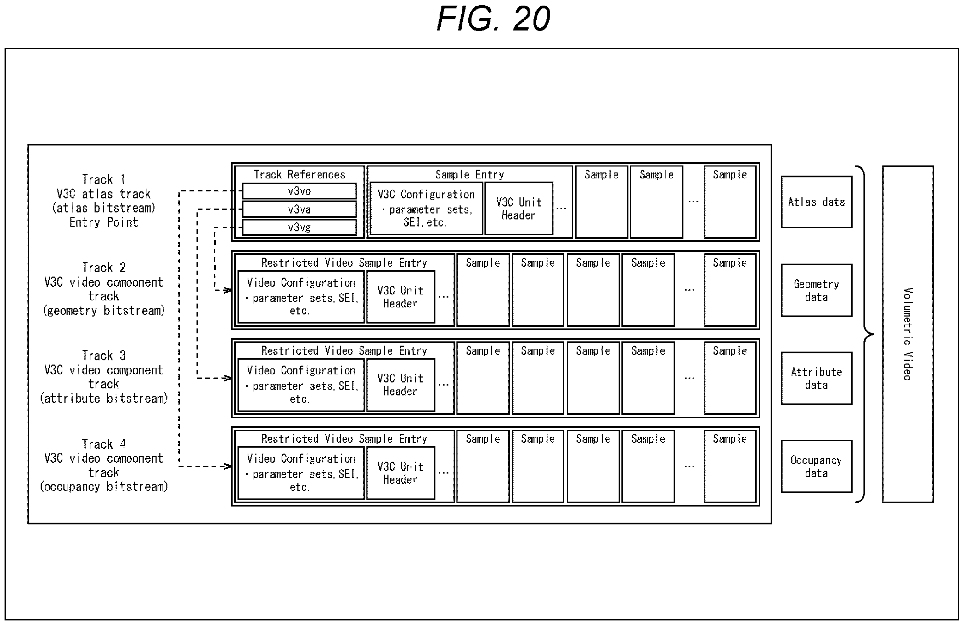

The multi-track structure is a method of storing the geometry video sub-bit stream, the attribute video sub-bit stream, the occupancy video sub-bit stream, and the atlas sub-bit stream in separate tracks (track) respectively. Since each video sub-bit stream is a conventional 2D video stream, the video sub-bit stream can be stored (managed) in a similar manner to that of a case of 2D. Fig. 20 illustrates a configuration example of a file in a case where the multi-track structure is applied. As illustrated in Fig. 20, in the case of the multi-track structure, one track (V3C atlas track (V3C atlas track)) stores track reference (Track References) that are information for accessing another track (also referred to as a V3C video component track (V3C video component track)) storing the V3C bit stream. That is, each V3C video component track is associated with the V3C atlas track by this track reference.

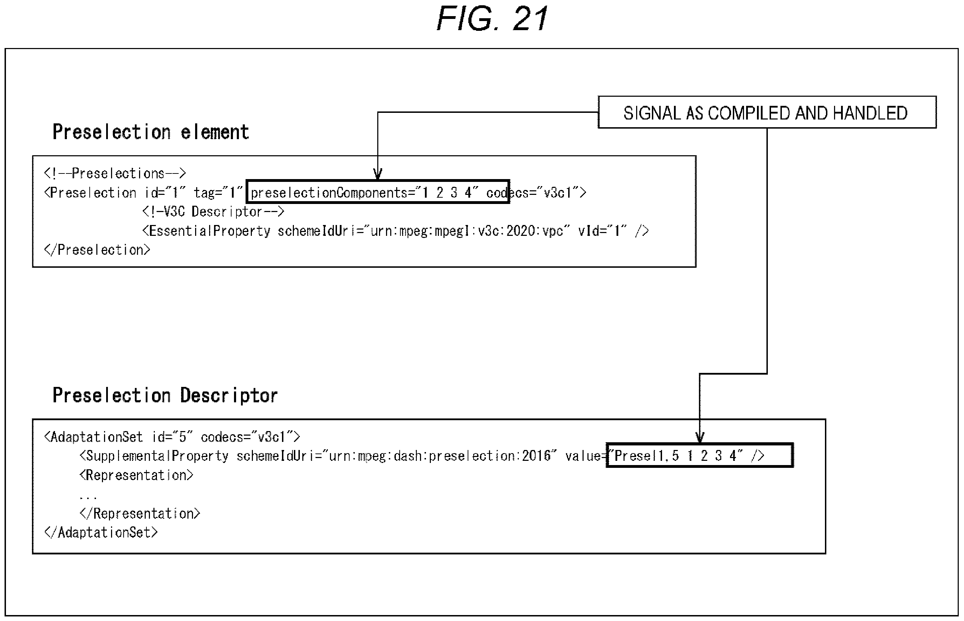

Note that, in a case where moving picture experts group dynamic adaptive streaming over hypertext transfer protocol (HTTP) (MPEG-DASH) is applied to distribute 3D object content, a preselection element or a preselection descriptor may be stored in media presentation description (MPD) that is a control file for controlling the distribution, as information for compiling AdaptationSet constituting the V-PCC. Fig. 21 illustrates a description example thereof. That is, in this case, the respective bit streams constituting the V3C bit stream are associated with each other by these pieces of information about the MPD.

### <Partial access>

Incidentally, Non Patent Document 4 specifies partial access (partial access) information for acquiring and decoding part of an object of a point cloud. For example, by using the partial access information, it is possible to perform control such that only the information about a display portion of the object of the point cloud is acquired at the time of streaming distribution. By such control, it is possible to obtain an effect of achieving high definition by effectively using the bandwidth.

In order to realize such a function, the point cloud is encoded so that it can be decoded independently for each region (spatial region). That is, the point cloud is encoded independently for each spatial region, and coded data (V3C bit stream) for each spatial region is generated. Then, the V3C bit stream for each spatial region is stored in different V3C video component tracks of the ISOBMFF. That is, the V3C bit stream is stored in the V3C video component track separately for each spatial region.

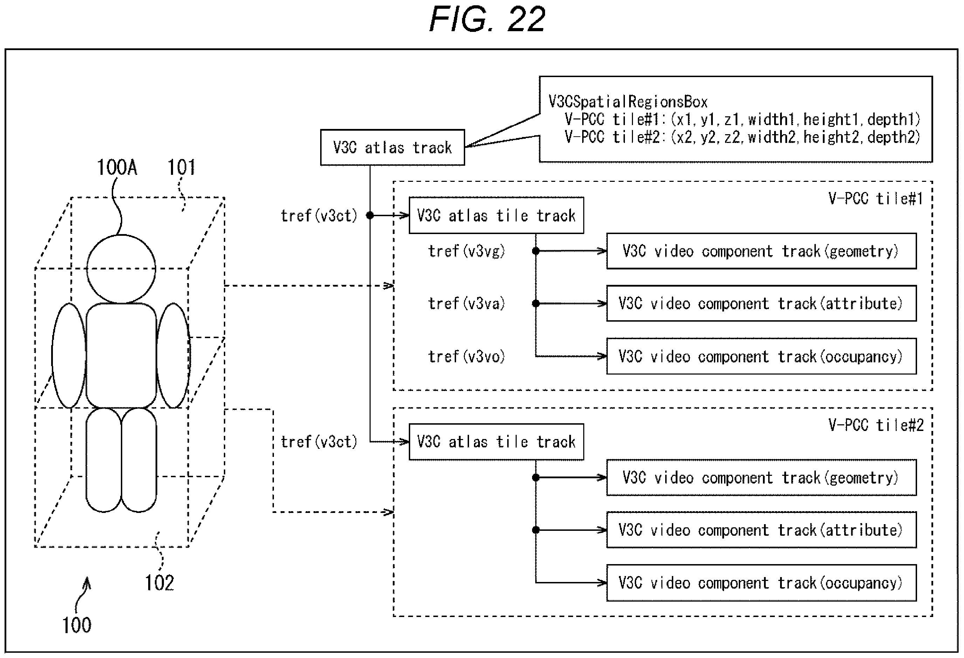

For example, as in the example of Fig. 22, it is assumed that a bounding box 100 of a 3D object 100A is provided with a spatial region 101 and a spatial region 102 obtained by dividing the bounding box 100 into two. As illustrated in Fig. 22, the V3C bit stream of each component of the spatial region 101 and the V3C bit stream of each component of the spatial region 102 are stored in different tracks.

The V3C atlas track of each spatial region (also referred to as a V-PCC tile) stores a track reference to the V3C video component track of each component of the spatial region (V-PCC tile). The entire V3C atlas track stores a track reference to the V3C atlas track of each spatial region (V-PCC tile). In addition, a V3C spatial region box (V3CSpatialRegionsBox) of the entire V3C atlas track stores 3D spatial information (information such as a position and a range (size)) of each V-PCC tile (each spatial region).

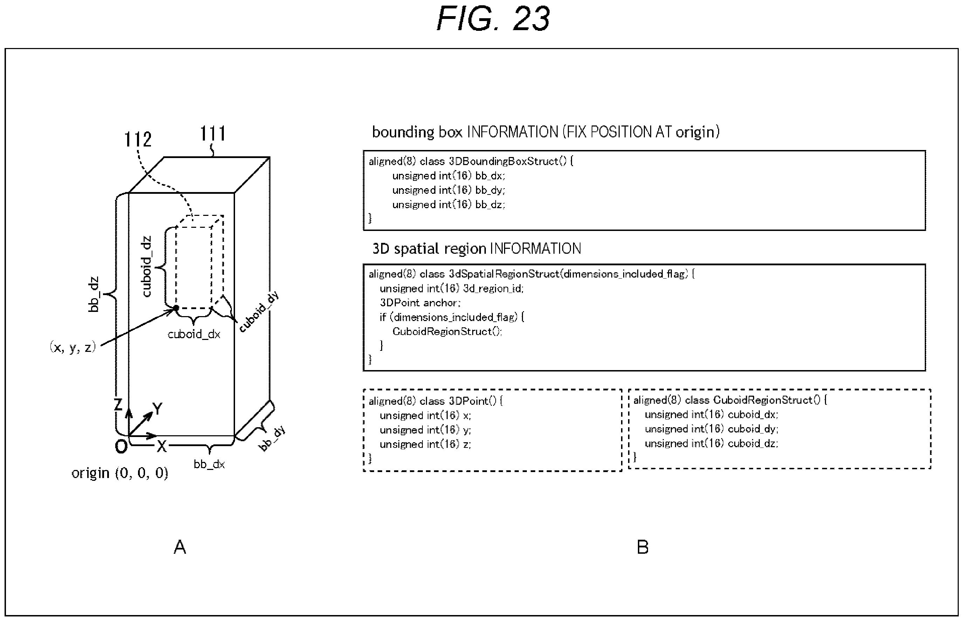

The 3D spatial information is described as described below. For example, as illustrated in A of Fig. 23, it is assumed that a bounding box (Bounding box) 111 that is a three-dimensional region including an object of a point cloud, is set for the object of the point cloud. In this case, in the ISOBMFF, as illustrated in B of Fig. 23, bounding box information (3DBoundingBoxStruct) that is information regarding the bounding box 111 is set. In the bounding box information, coordinates of a reference point (orgin) of the bounding box 111 are (0, 0, 0), and a size of the bounding box 111 is designated by (bb_dx, bb_dy, bb_dz).

As illustrated in A of Fig. 23, a 3D spatial region (3D spatial region) 112 that is an independently decodable partial region can be set in the bounding box 111. In this case, as illustrated in B of Fig. 23, 3D spatial region information (3dSpatialRegionStruct) that is information related to the 3D spatial region 112 is only required to be set as partial access information in the ISOBMFF. In the 3D spatial region information, the region is designated by coordinates (x, y, z) and a size (cuboid_dx, cuboid_dy, cuboid_dz) of the reference point.

A 3D spatial region includes one or more tiles. The partial access is performed on a 3D spatial region basis, but the partial access can be performed in units of tiles by making the 3D spatial regions and tiles the same.

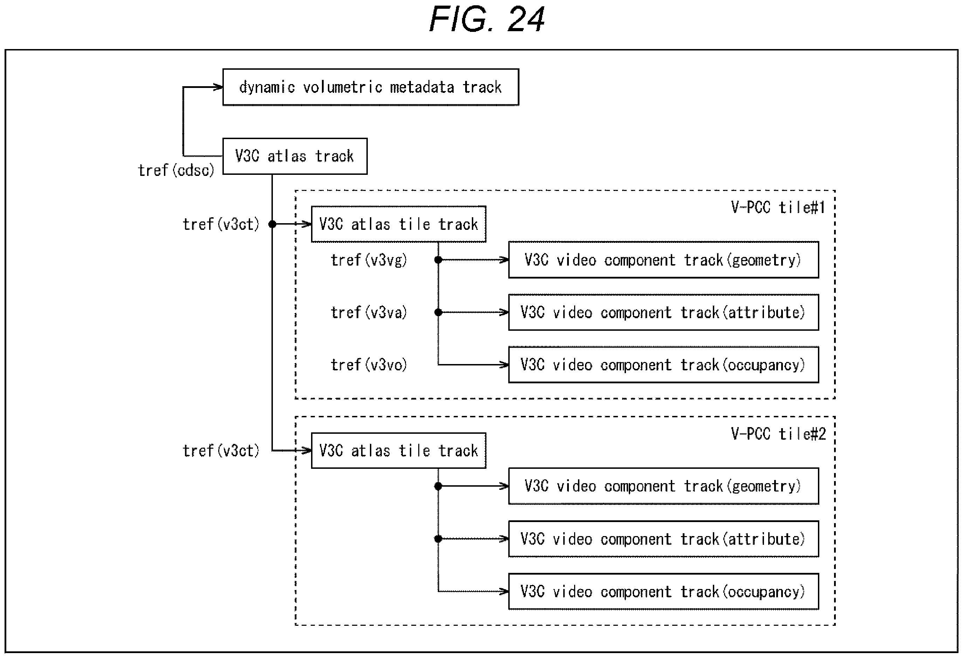

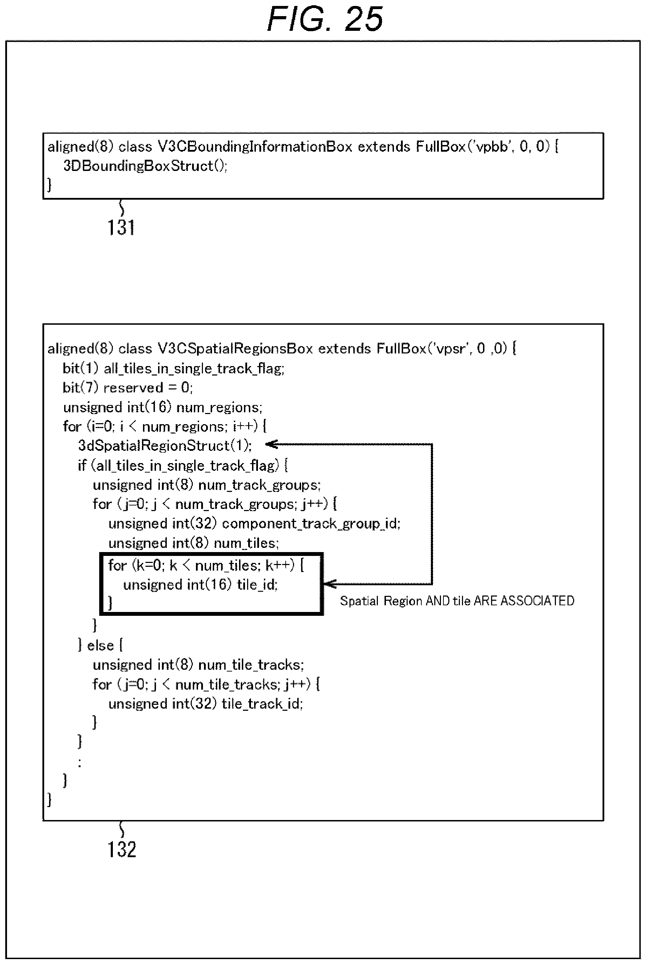

The 3D spatial information is stored, for example, in the following location. For example, as illustrated in Fig. 24, the bounding box information may be stored in a V3C bounding information box (V3CBoundingInformationBox) in a sample entry (sample entry) of a V3C atlas track or a dynamic volumetric metadata track associated with the V3C atlas track. A description 131 of Fig. 25 illustrates a description example of the V3C bounding information box.

Further, the 3D spatial region information may be stored in, for example, a V3C spatial region box (V3CSpatialRegionsBox) in a sample entry (sample entry) of a V3C atlas track or a dynamic volumetric metadata track (dynamic volumetric metadata track) associated with the V3C atlas track. A description 132 of Fig. 25 illustrates a description example of the V3C spatial region box. As illustrated in this description 132, 3D spatial region information (3dSpatialRegionStruct) and tile identification information (tile_id) are set in the V3C spatial region box, and the spatial region and the tile are associated with each other.

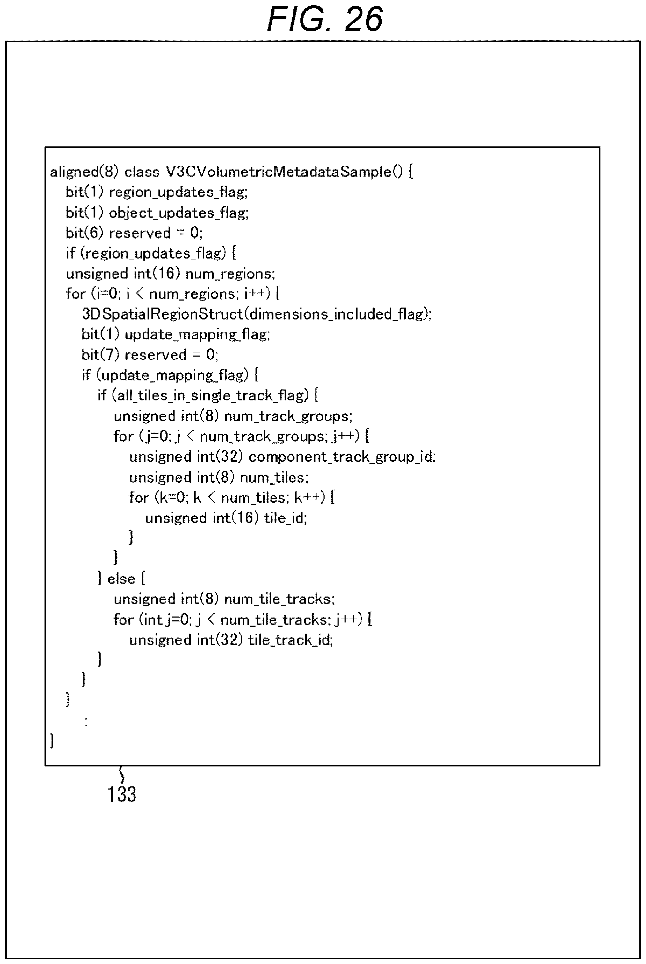

Note that the 3D spatial region information may be stored in, for example, a V3C volumetric metadata sample (V3CVolumetricMetadataSample) of a dynamic volumetric metadata track (dynamic volumetric metadata track). A description 133 of Fig. 26 illustrates a description example of the V3C volumetric metadata sample.

### <SEI related to partial access>

Non Patent Document 3 specifies supplemental enhancement information (SEI) related to partial access, and Non Patent Document 4 specifies the use thereof.

For example, as the SEI of an atlas sub-bit stream (atlas sub-bitstream) related to partial access, four are specified: the Scene object information SEI, the Patch information SEI, the Volumetric rectangle information SEI, and the Object label information SEI.

In the Scene object information SEI, an object (object) is defined, and properties (properties) are given. In the Patch information SEI, a relationship between an object and a patch (patch) is defined. In the Volumetric rectangle information SEI, a relationship between an object and a video coded component (video coded component) rectangular region is defined. In the Object label information SEI, a label (label) is given to an object.

Properties (properties) are assigned in units of patches by the Scene object information SEI and the Object label information SEI. The properties may include, for example, an identifier (object id) of an object. Furthermore, a bounding box indicating a cuboid region (3D spatial region) surrounding the object may be included. In addition, a visibility cone indicating a three-dimensional conical region in which an object can be viewed may be included. In addition, priority indicating the priority may be included. Furthermore, hidden indicating display/non-display of an object may be included. In addition, dependency indicating dependency between objects may be included. In addition, label indicating a label may be included. In addition, collision shape indicating a shape for collision determination may be included. In addition, point style indicating the shape and the size of the point of the point cloud may be included. In addition, material indicating the material of the point of the point cloud may be included.

The four pieces of SEI of the atlas sub-bit stream (atlas sub-bitstream) for partial access may be stored in the V3C configuration box (V3CConfigurationBox) in the V3C atlas track sample entry (V3C atlas track sample entry), for example, in a case where the information is static (static) in the time direction. In addition, in a case where the information is dynamic in the time direction (dynamic with a small update frequency), the four pieces of SEI may be stored in V3CAtlasParamSampleGroupDescriptionEntry of the V3C atlas track (V3C atlas track). Further, in a case where the information is dynamic in the time direction (dynamic with a high update frequency), the four pieces of SEI may be stored in the V3C sample (V3Csample) of the V3C atlas track (V3C atlas track). An appropriate place is selected and stored according to the update frequency.

### <Pattern of client process>

A client device that plays back content (3D data) decodes a V3C bit stream, and reconstructs 3D data (for example, a point cloud) from the obtained 2D data. In this case, the client device can reconstruct the 3D data by the MAF or the PE. In each case, data stored in the buffer is different.

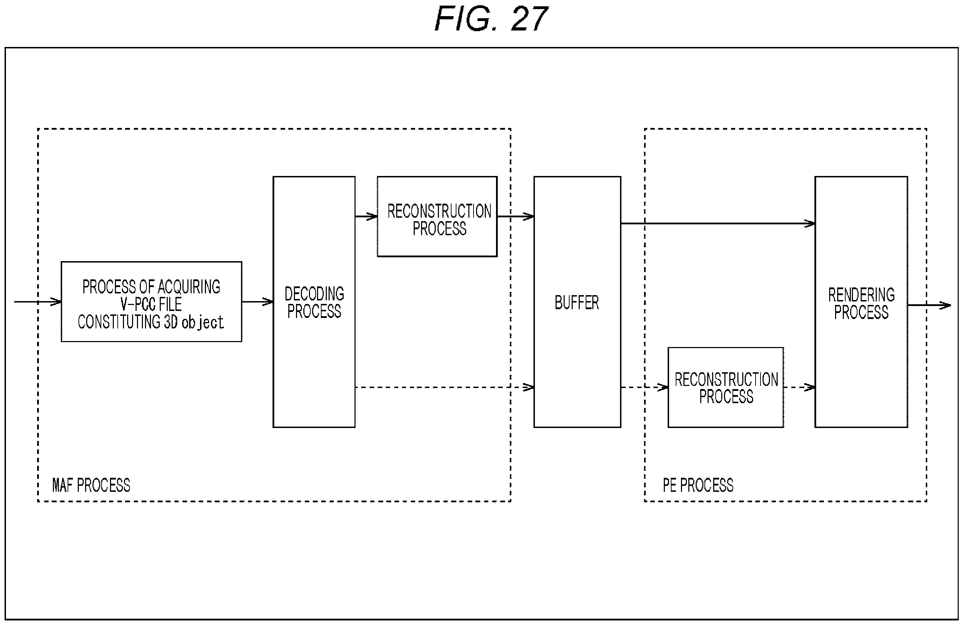

For example, as illustrated in Fig. 27, in the MAF process executed by the MAF, the acquisition process of the V-PCC file constituting the 3D object and the decoding process of the V-PCC file (V3C bit stream) are performed. In a case where the 3D data is reconstructed by the MAF, the reconstruction process is performed as indicated by the solid arrow on the upper side of Fig. 27 after the decoding process, and the processing result, that is, the 3D data is stored in the buffer. In this case, in the PE process executed by the PE, the 3D data stored in the buffer is read, and the rendering process is performed to generate the display image.

On the other hand, in a case where the 3D data is reconstructed by the PE, in the MAF process, the decoding processing result, that is, the 2D data or the like is stored in the buffer as indicated by a dotted arrow on the lower side of Fig. 27. In this case, in the PE process, the 2D data and the like stored in the buffer are read, the 3D data is reconstructed by the reconstruction process, and the rendering process is performed to generate the display image.

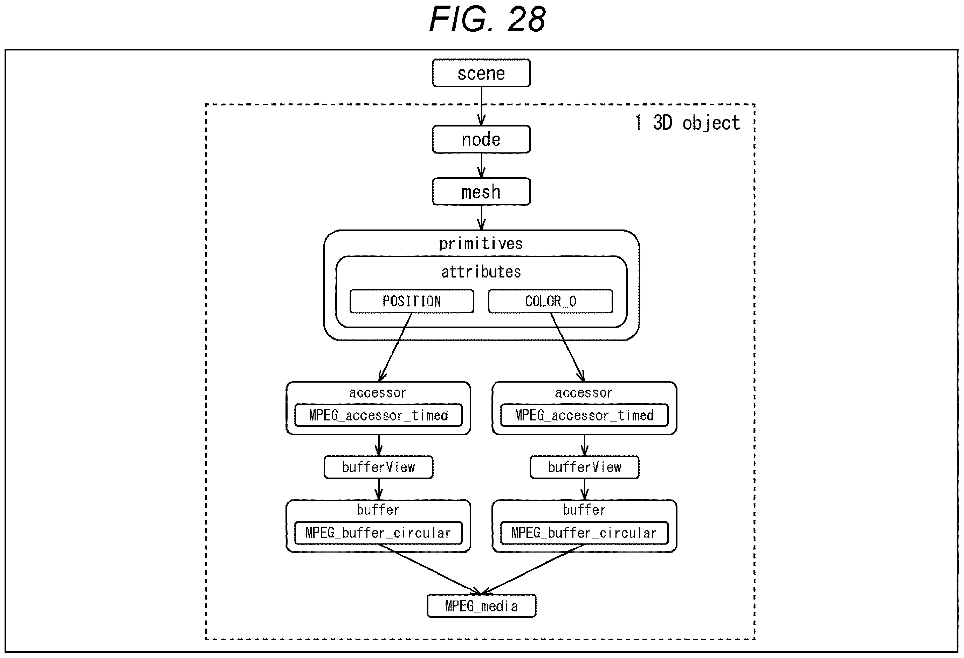

Therefore, in a case where the 3D data (point cloud data) is reconstructed by the MAF, an attribute (attribute) for the 3D data is stored in the scene description as illustrated in Fig. 28. However, the data stored in the buffer is reconstructed. On the other hand, data designated by MPEG_media is data before being reconstructed. That is, the attribute is not associated with the track on a one-to-one basis. Therefore, MPEG_media referred to from each buffer is a V3C atlas track (V3C atlas track) that compiles all the component data.

On the other hand, in a case where the 3D data (point cloud data) is reconstructed by the PE, the V3C component stream (V3C component stream) that is the V3C decoded is stored in the buffer. That is, 2D data and the like are stored in the buffer. Therefore, an attribute (attribute) for the V3C component (2D data) is stored in the scene description.

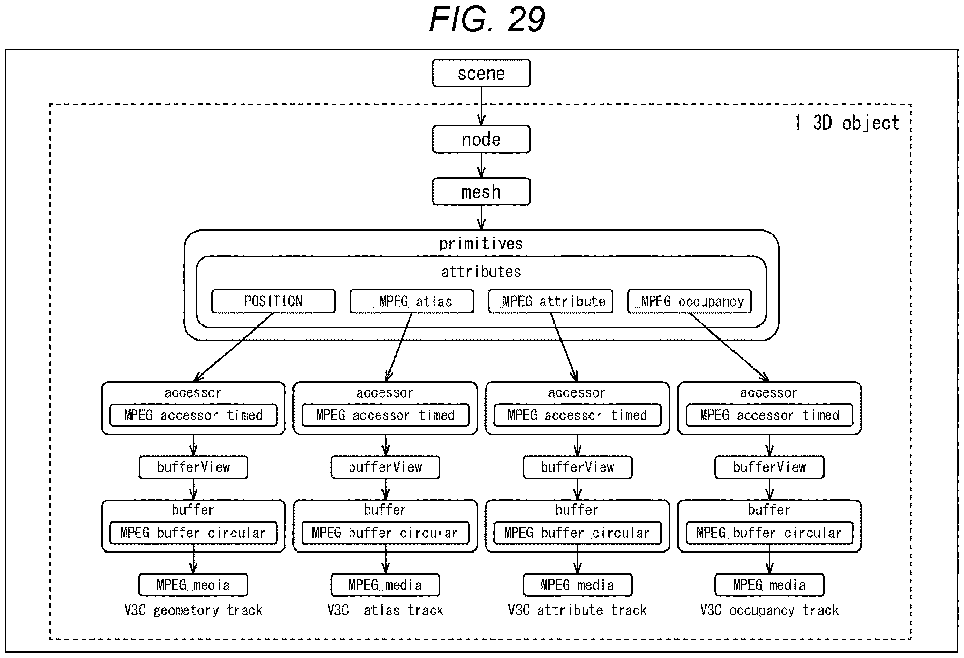

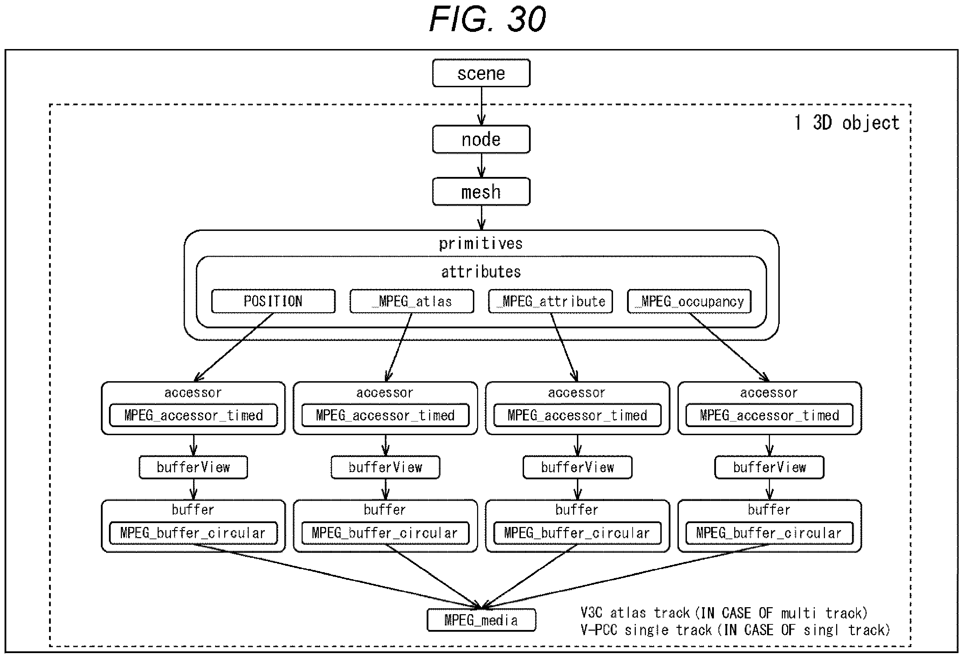

In this case, there are the following two methods of associating the V3C component data stored in the buffer with the track indicated by MPEG_media. That is, for example, as illustrated in Fig. 29, the buffer and the V3C component track may be associated on a one-to-one basis. In addition, as illustrated in Fig. 30, the V3C atlas track (V3C atlas track) that compiles all the component data may be referred to from each buffer.

As described above, in a case where the 3D data is reconstructed by the PE, the 2D data and the like (V3C component data) are stored in the buffer. Therefore, in a case where the V3C bit stream has a partially accessible structure as described above, data (also referred to as tile data) for each tile is required to be stored in the buffer in a case where the 3D data is reconstructed by the PE.

However, the method described in Non Patent Document described above does not support partial access, and data of the entire 3D object is collectively stored in the buffer (without dividing the buffer region). Then, tile data cannot be individually managed in the buffer. Therefore, it is difficult to implement partial access.

### <3. Partial access support>

### <Control of storage destination buffer region for each tile (#1)>

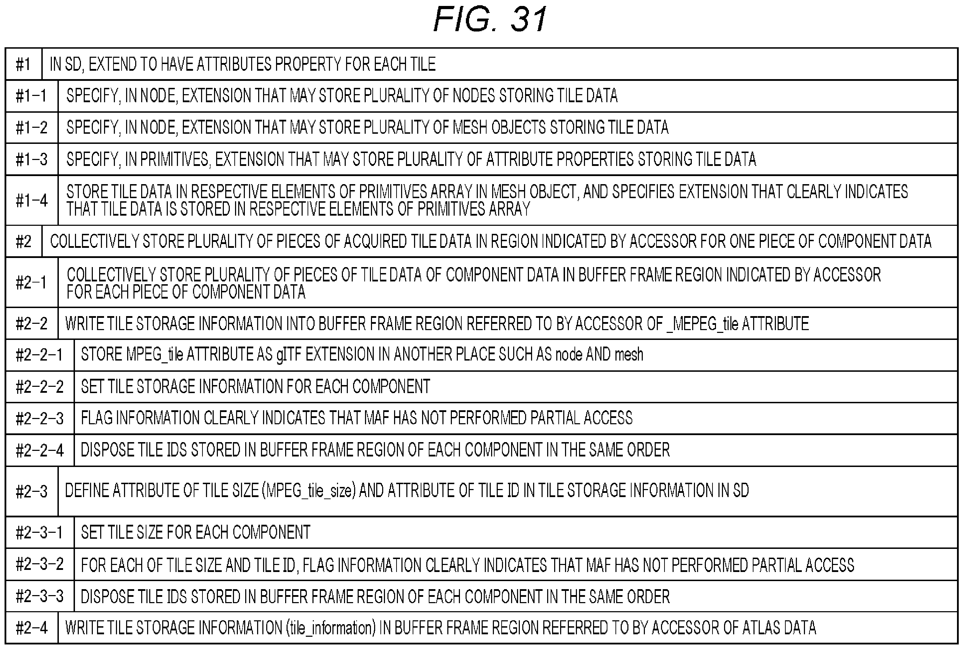

Therefore, as illustrated in the top row of the table illustrated in Fig. 31, the scene description (hereinafter, also referred to as an SD) is extended so as to have an attributes property for each tile (#1).

For example, the information processing device (for example, the client device) includes a file processing unit that stores tile data of each tile of 3D object content in a buffer region corresponding to the tile on the basis of an attributes property of each tile of the 3D object content stored in a scene description file, and acquires tile data of a desired tile from the buffer region and processes the acquired tile data.

Furthermore, for example, an information processing method (for example, a playback process) includes storing tile data of each tile of 3D object content in a buffer region corresponding to the tile on the basis of an attributes property of each tile of the 3D object content stored in a scene description file, and acquiring tile data of a desired tile from the buffer region and processing the tile data.

Furthermore, for example, the information processing device (for example, the file generation device) includes a file generation unit that generates a scene description file that stores an attributes property of each tile of 3D object content for storing tile data of the 3D object content in buffer regions different from each other.

Furthermore, for example, the information processing method (for example, the file generation process) includes generating a scene description file that stores an attributes property of each tile of 3D object content for storing tile data of the 3D object content in buffer regions different from each other.

By doing so, in a case where the 3D data is reconstructed by the PE, the client device can store the data for each tile in the buffer. That is, for example, in the client device, the MAF can store a plurality of pieces of tile data of one 3D object in buffer regions different from each other. Then, the PE can then identify and process the tile data by the buffer region storing the tile data. Therefore, even in a case where the 3D data is reconstructed by the PE, the client device can reconstruct and render the 3D data using the data of the tile (part of the object) acquired by partial access to the V-PCC bit stream. That is, even in a case where the 3D data is reconstructed by the PE, partial access can be implemented.

### <Extension capable of storing a plurality of nodes (#1-1)>

In this case, for example, as illustrated in the second row from the top of the table illustrated in Fig. 31, an extension that can store a plurality of nodes that store tile data may be specified in one node in the scene description (#1-1).

For example, in the scene description file, an extension may be specified in one node, a node for each tile may be associated with the extension, a mesh object for each tile may be associated with each node, and an attributes property for each tile may be stored in each mesh object, and the file processing unit of the information processing device (for example, the client device) may store tile data of each tile in a buffer region indicated by the attributes property of the tile, acquire tile data of a desired tile from the buffer region indicated by the attributes property of the desired tile, and process the acquired tile data.

Furthermore, for example, in the information processing device (for example, the file generation device), the file generation unit may specify an extension in one node of the scene description file, associate a node for each tile with the extension, associate a mesh object for each tile with each node, and store an attributes property for each tile in each mesh object.

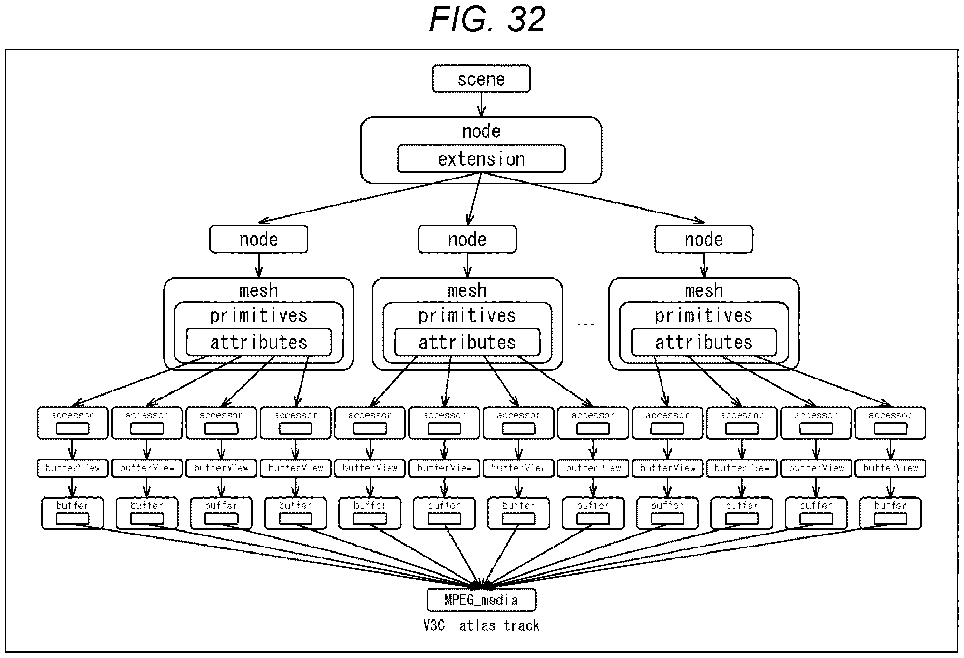

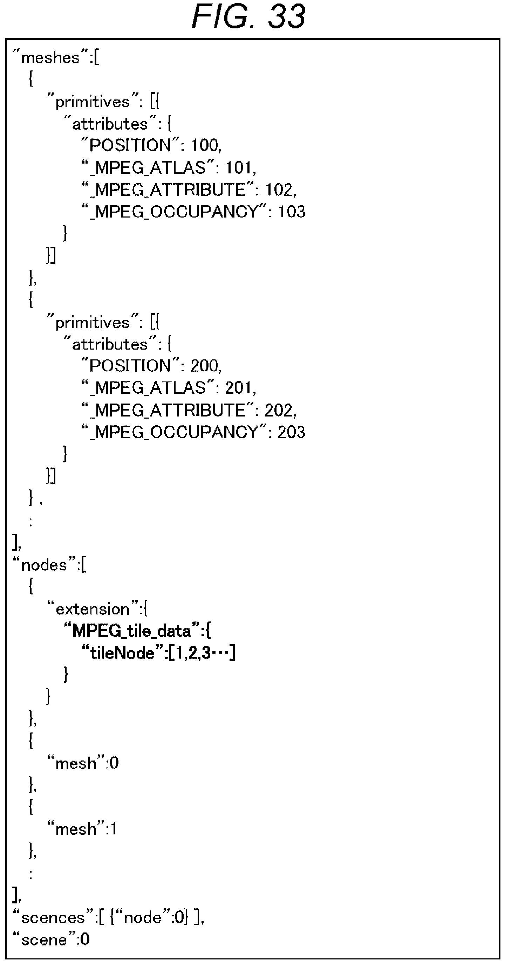

A main configuration example of the scene description in this case is illustrated in Fig. 32. As illustrated in Fig. 32, in the scene description, an attributes property is prepared for each tile, the attributes property for each tile is stored in primitives different from each other, and each primitives is stored in mesh objects different from each other. The mesh objects are associated with nodes different from each other, and each of the nodes is grouped by one extension specified in one node. Fig. 33 illustrates a description example of the scene description in this case. As illustrated in Fig. 33, an extension (MPEG_tile_data) is specified in a node, and a node (tileNode) for each tile is associated with the extension.

When the scene description is configured as described above and the client device performs a process according to the scene description, the MAF can store the tile data in buffer frame regions different from each other. In addition, the PE can acquire tile data of a desired tile by accessing a buffer frame region indicated by an accessor corresponding to the desired tile.

Therefore, even in a case where reconstructing the 3D data by the PE, the client device can implement partial access to the 3D data and reconstruct the 3D data independently for each 3D spatial region (tile).

Note that, in this case, the node that stores the tile merely constitutes part of the data of the 3D object, and is not independently disposed in the space. Therefore, the arrangement information about the nodes in the space is given only to a node for compiling (an upper node in which the extension is specified). In the related art, a node can have a parent-child relationship, but in this case, a child node has its own local position information. Then, since the final position information is determined by the product with the position information about the parent node, it has a meaning different from that of the node that stores the tile of the present technology.

### <Extension capable of storing a plurality of mesh objects (#1-2)>

Furthermore, for example, as illustrated in the third row from the top of the table illustrated in Fig. 31, an extension that can store a plurality of mesh objects storing tile data may be specified in one node in the scene description (#1-2).

For example, in the scene description file, an extension may be specified in one node, a mesh object for each tile may be associated with the extension, and an attributes property for each tile may be stored in each mesh object, and the file processing unit of the information processing device (for example, the client device) may store tile data of each tile in a buffer region indicated by the attributes property of the tile, acquire tile data of a desired tile from the buffer region indicated by the attributes property of the desired tile, and process the acquired tile data.

Furthermore, for example, in the information processing device (for example, the file generation device), the file generation unit may specify an extension in one node of the scene description file, associate a mesh object for each tile with the extension, and store an attributes property for each tile in each mesh object.

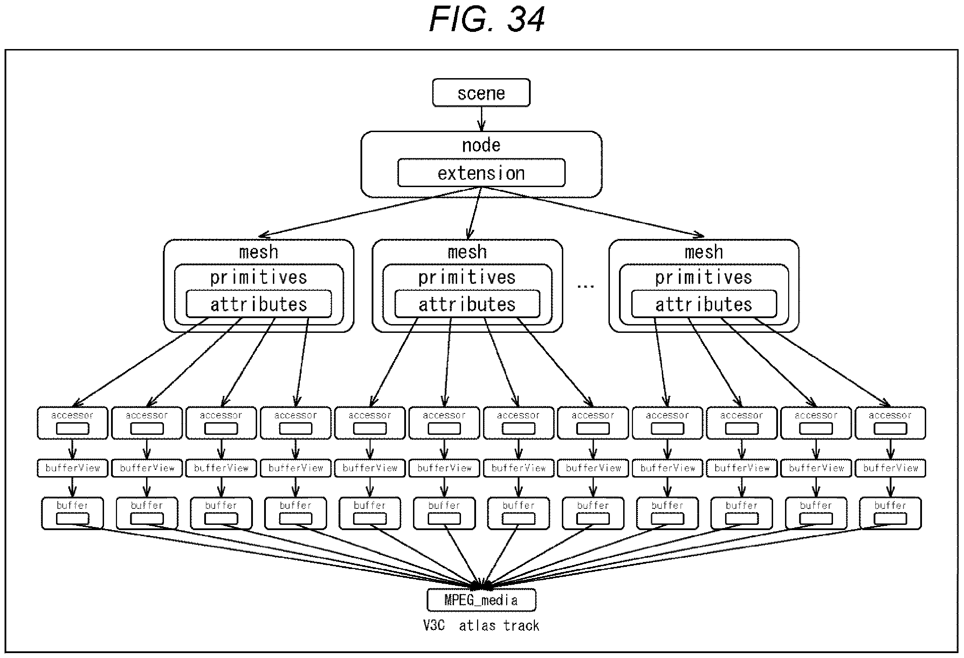

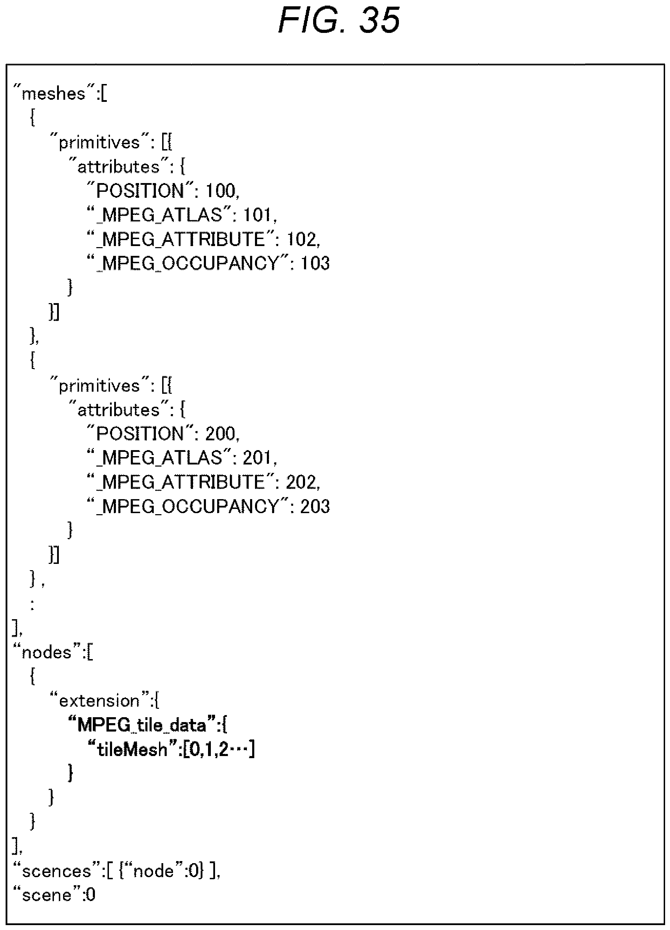

A main configuration example of the scene description in this case is illustrated in Fig. 34. As illustrated in Fig. 34, in the scene description, an attributes property is prepared for each tile, the attributes property for each tile is stored in primitives different from each other, and each primitives is stored in mesh objects different from each other. Each mesh object is grouped by one extension specified in one node. Fig. 35 illustrates a description example of the scene description in this case. As illustrated in Fig. 35, an extension (MPEG_tile_data) is specified in the node, and a mesh object (tileMesh) for each tile is associated with the extension.

When the scene description is configured as described above and the client device performs a process according to the scene description, the MAF can store the tile data in buffer frame regions different from each other. In addition, the PE can acquire tile data of a desired tile by accessing a buffer frame region indicated by an accessor corresponding to the desired tile.

Therefore, even in a case where reconstructing the 3D data by the PE, the client device can implement partial access to the 3D data and reconstruct the 3D data independently for each 3D spatial region (tile).

### <Extension capable of storing a plurality of attributes properties (#1-3)>

Furthermore, for example, as illustrated in the fourth row from the top of the table illustrated in Fig. 31, an extension that can store a plurality of attributes properties for storing tile data may be specified in one of the primitives in the scene description (#1-3).

For example, in the scene description file, an extension may be specified in one of the primitives, and an attributes property for each tile may be stored in the extension, and the file processing unit of the information processing device (for example, the client device) may store tile data of each tile in a buffer region indicated by the attributes property of the tile, acquire tile data of a desired tile from the buffer region indicated by the attributes property of the desired tile, and process the acquired tile data.

Furthermore, for example, in the information processing device (for example, the file generation device), the file generation unit may specify an extension in one of the primitives of a scene description file and store an attributes property for each tile in the extension.

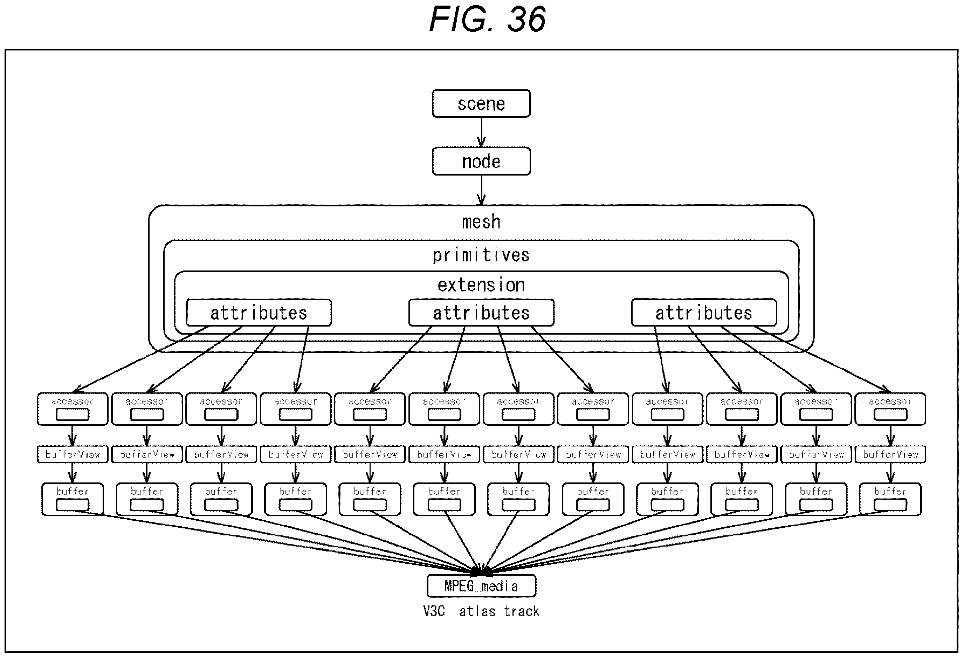

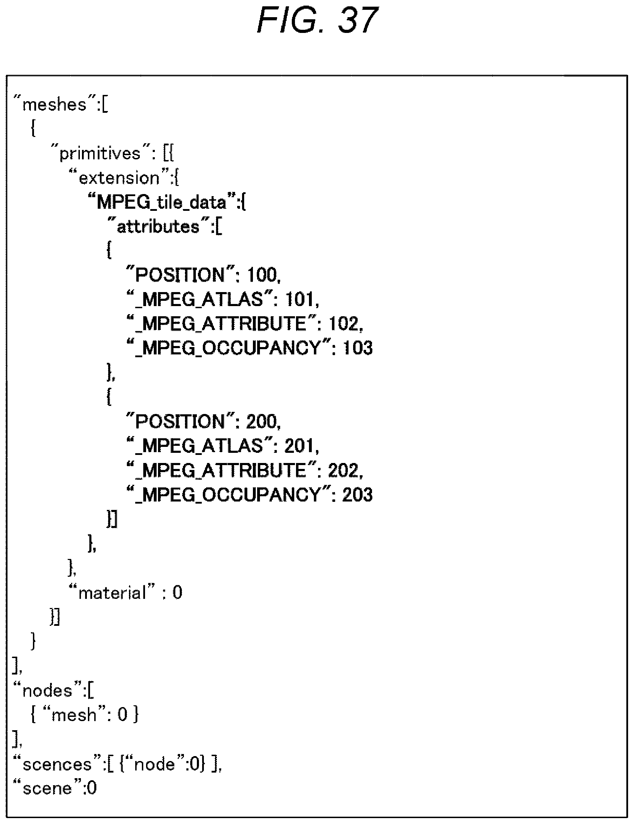

A main configuration example of the scene description in this case is illustrated in Fig. 36. As illustrated in Fig. 36, in the scene description, an attributes property is prepared for each tile, and the attributes property for each tile is stored in an extension specified in one of the primitives. Fig. 37 illustrates a description example of the scene description in this case. As illustrated in Fig. 37, an extension (MPEG_tile_data) is specified in the primitives, and attributes property (attributes) for each tile is stored in the extension.

When the scene description is configured as described above and the client device performs a process according to the scene description, the MAF can store the tile data in buffer frame regions different from each other. In addition, the PE can acquire tile data of a desired tile by accessing a buffer frame region indicated by an accessor corresponding to the desired tile.

Therefore, even in a case where reconstructing the 3D data by the PE, the client device can implement partial access to the 3D data and reconstruct the 3D data independently for each 3D spatial region (tile).

### <Extension that clearly indicates that tile data is stored in respective elements of primitives array (#1-4)>

Furthermore, for example, as illustrated in the fifth row from the top of the table illustrated in Fig. 31, in the scene description, tile data may be stored in respective elements of the primitives array in one mesh object, and an extension that clearly indicates that the tile data is stored in respective elements of the primitives array and may be specified (#1-4).

For example, in the scene description file, an extension may be specified in one mesh object, and a primitives array having an attributes property for each tile as an element may be stored in the extension, and the file processing unit of the information processing device (for example, the client device) may store tile data of each tile in a buffer region indicated by the attributes property of the tile, acquire tile data of a desired tile from the buffer region indicated by the attributes property of the desired tile, and process the acquired tile data.

Furthermore, for example, in the information processing device (for example, the file generation device), the file generation unit may specify an extension in one mesh object of the scene description file, and store a primitives array having an attributes property for each tile as an element in the extension.

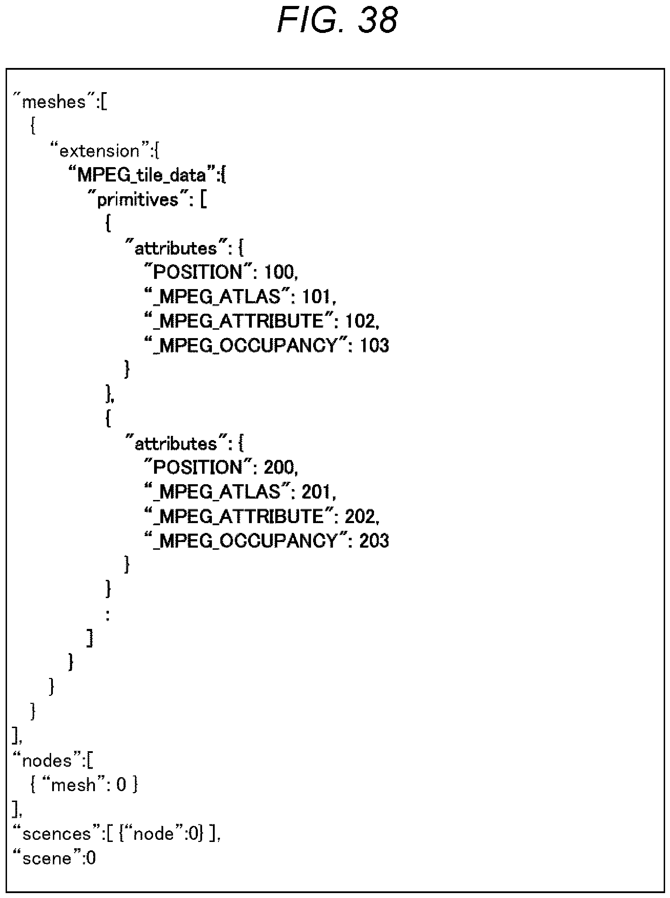

Fig. 38 illustrates a description example of the scene description in this case. As illustrated in Fig. 38, an extension (MPEG_tile_data) is specified in the mesh object, and the primitives array (primitives) having an attributes property (attributes) for each tile as an element is stored in the extension.

When the scene description is configured as described above and the client device performs a process according to the scene description, the MAF can store the tile data in buffer frame regions different from each other. In addition, the PE can acquire tile data of a desired tile by accessing a buffer frame region indicated by an accessor corresponding to the desired tile.

Therefore, even in a case where reconstructing the 3D data by the PE, the client device can implement partial access to the 3D data and reconstruct the 3D data independently for each 3D spatial region (tile).

### <Storage of tile data in common buffer region (#2)>

For example, as illustrated in the sixth row from the top of the table illustrated in Fig. 31, in the scene description, a plurality of pieces of acquired tile data may be collectively stored in a region indicated by an accessor for one piece of component data (#2).

For example, the information processing device (for example, the client device) includes a file processing unit that stores tile data of 3D object content in a common buffer region, acquires desired tile data from the buffer region on the basis of tile storage information for identifying the tile data stored in the buffer region, and processes the acquired tile data.

Furthermore, for example, an information processing method (for example, a playback process) includes storing the tile data of the 3D object content in a common buffer region, acquiring desired tile data from the buffer region on the basis of the tile storage information for identifying the tile data stored in the buffer region, and processing the tile data.

Furthermore, for example, an information processing device (for example, the file generation device) includes a file generation unit that generates a scene description file that stores a first accessor for storing tile data of 3D object content in a common first buffer region and a second accessor for storing tile storage information for identifying the tile data stored in the first buffer region in a second buffer region.

Furthermore, for example, an information processing method (for example, a file generation process) includes generating a scene description file that stores a first accessor for storing tile data of 3D object content in a common first buffer region and a second accessor for storing tile storage information for identifying the tile data stored in the first buffer region in a second buffer region.

By doing so, in a case where the 3D data is reconstructed by the PE, the client device can acquire the data for each tile from the buffer on the basis of the tile storage information. Therefore, even in a case where the 3D data is reconstructed by the PE, the client device can reconstruct and render the 3D data using the data of the tile (part of the object) acquired by partial access to the V-PCC bit stream. That is, the client device can implement the partial access even in a case where the 3D data is reconstructed by the PE.

In this way, by storing tile data in a common buffer region and identifying (independently acquiring) tile data in the buffer region using tile storage information, tile data can be stored in the common buffer region regardless of the number of tiles. Therefore, even when the number of tiles increases, an increase in the number of accessors of the scene description can be suppressed. That is, an increase in the amount of data of the scene description can be suppressed. As a result, it is possible to suppress an increase in the data transmission amount regarding transmission of the scene description. In addition, it is possible to suppress an increase in load of the device (file generation device, distribution server, client device, and the like) that processes the scene description.

Specifically, in the client device, all the accessors (accessor) have timed accessors (timedAccesssor), and a buffer view (BufferView) and a dynamically changing property value (timed accessor information header (timed accessor information header) in Fig. 15) of the accessor are stored for each frame in a region indicated by the accessor. Furthermore, at the time of reading tile data, first, processing of reading the timed accessor information header is performed. Since it is necessary to write and read data to and from this region for every tile, the processing load of the client device may increase due to an increase in the number of tiles (that is, the number of accessors). However, by storing the tile data in the common buffer region as described above, it is possible to suppress an increase in the number of accessors, and thus, it is possible to suppress an increase in load of writing and reading data to and from the timed accessor information header.

In addition, in the case of partial access, there may be a tile in which data is not stored in a buffer. Even in such a case, writing and reading to and from the timed accessor information header are performed. Therefore, unnecessary processing increases due to an increase in the number of tiles in which data is not stored in the buffer, which is inefficient. However, by storing the tile data in the common buffer region as described above, it is possible to suppress an increase in the number of times of writing and reading unnecessary data to and from the timed accessor information header.

### <Storage of tile storage information in timed accessor information header field (#2-1)>

In this case, for example, as illustrated in the seventh row from the top of the table illustrated in Fig. 31, a plurality of pieces of tile data of the component data may be collectively stored in the buffer frame region indicated by the accessor for each component data (#2-1).

Then, for example, the tile storage information may include information indicating the number of tiles, tile identification information, and information indicating the size of the tile.

Then, for example, in the information processing device (for example, the client device), the file processing unit may store the tile storage information in a timed accessor information header field (Timed accessor information header field). The timed accessor information header field is a region for storing dynamically changing values such as the number of pieces of data to be stored and position information (position) in the buffer.

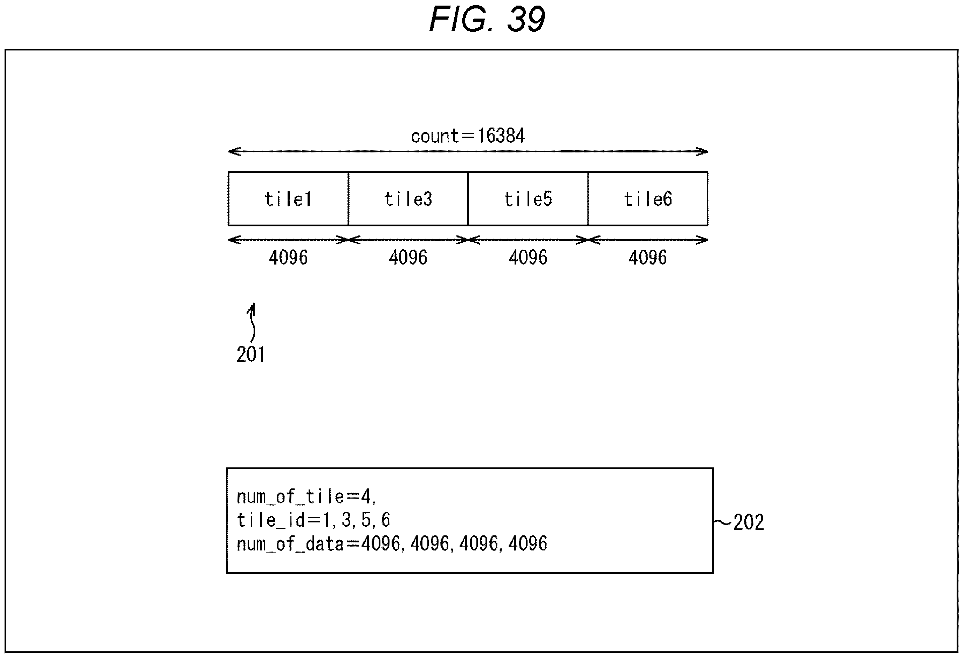

For example, as illustrated in the upper part of Fig. 39, it is assumed that four pieces of tile data (tile1, tile3, tiles, tile6) are stored in one buffer frame region 201. It is assumed that the size of the buffer frame region 201 is 16384 bytes and each piece of tile data is 4096 bytes. In such a case, tile storage information 202 as illustrated in the lower side of Fig. 39 is set. In the tile storage information 202, the number of tiles (num_of_tile) is set to "4", the identification information (tile_id) of each tile is set to "1, 3, 5, 6", and the size (num_of_data) of each tile is set to "4096, 4096, 4096, 4096".

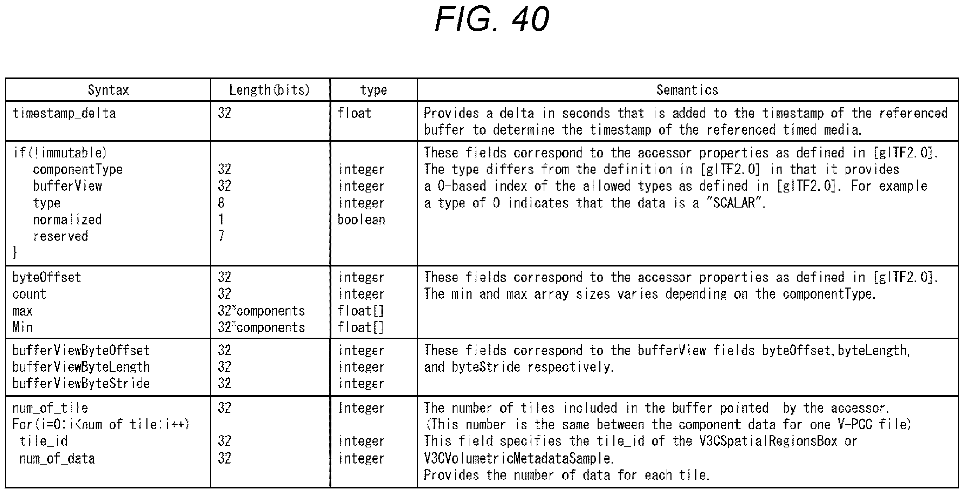

Then, the parameters stored in the timed accessor information header field are specified as in the table illustrated in Fig. 40, and as illustrated in the lowermost row, these pieces of information (num_of_tile, tile_id, num_of_data) can be stored.

Then, in the client device, the MAF stores all the acquired tile data in the buffer region indicated by one accessor for each attribute. At this time, the MAF writes a method of storing a plurality of tiles in the region into the timed accessor information header field. The PE extracts tile data from the buffer on the basis of the information, reconstructs the tile data into one object, and performs rendering.

In this way, in a case where the 3D data is reconstructed by the PE, the client device can acquire the tile data from the buffer on the basis of the tile storage information stored in the timed accessor information header field. Therefore, the client device can implement partial access even in a case where the 3D data is reconstructed by the PE.

### <storage of tile storage information in region referred to by MPEG_tile attribute (#2-2)>

Furthermore, for example, as illustrated in the eighth row from the top of the table illustrated in Fig. 31, the tile storage information may be stored in the buffer frame region referred to by the accessor of the MEPEG_tile attribute (#2-2).

For example, the tile storage information may be stored in a second buffer region different from a first buffer region in which the tile data is stored. That is, in addition to the attribute for storing the tile data, an attribute (_MPEG_tile attribute) for storing the tile storage information is newly defined, and the tile storage information is stored in a buffer region different from a buffer region, for storing the tile data, that is referred to by the accessor of the _MPEG_tile attribute.

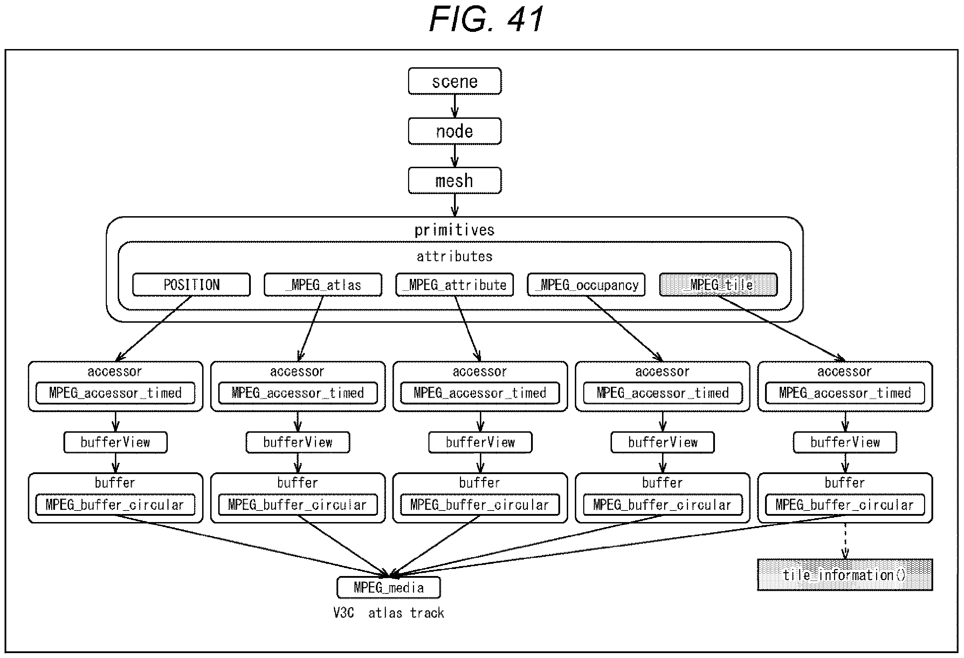

Fig. 41 is a diagram illustrating a main configuration example of the scene description in this case. As illustrated in Fig. 41, the_MPEG_tile attribute is defined as one of the attributes properties stored in the primitives. Tile storage information (tile_information ()) is stored in the buffer frame region referred to by the accessor.

That is, in the client device, the MAF collectively stores a plurality of tiles of the corresponding component data in the buffer frame region referred to by the accessor for each component data. Further, the MAF stores tile storage information (tile_information ()) of each component data in the buffer frame region referred to by the accessor of the _MPEG_tile attribute. The PE acquires desired tile data from a buffer frame region in which component data is stored on the basis of the tile storage information, reconstructs a point cloud for each tile, and performs rendering.

In this case, for example, the tile storage information may further include information indicating the number of components and information indicating a component type in addition to the information indicating the number of tiles, the identification information about the tile, and the information indicating the size of the tile.

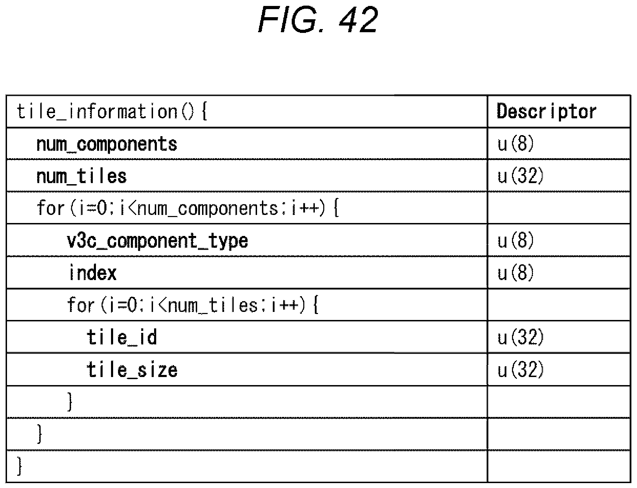

Fig. 42 is a diagram illustrating an example of syntax of tile storage information (tile storage information stored in the buffer frame region referred to by the accessor of the _MPEG_tile attribute) in this case. In Fig. 42, num_components is a parameter indicating the number of V3C components, that is, the number of attributes of the glTF. Also, num_tiles is a parameter indicating the number of tiles stored in the buffer frame region. In addition, v3c_component_type is information indicating the type of the V3C component. For example, in a case where this value is "0", it indicates the atlas component (atlas (_MPEG_ATLAS)). In a case where this value is "1", it indicates the geometry component (geometry (POSITION)). Furthermore, in a case where this value is "2", it indicates the attribute component (attribute (_MPEG_ATTRIBUTE)). In addition, in a case where this value is "3", it indicates the occupancy component (occupancy (_MPEG_OCCUPANCY)).

In addition, index is an identifier in a case where there is a plurality of V3C components. For example, it corresponds to X (identification number) of "_MPEG_ATTRIBUTE_X" in a case where there is a plurality of attribute components. In addition, tile_id is an identifier of a tile. A tile-by-tile point cloud (point cloud tile) is reconstructed using the same tile_id tile present in each V3C component. In addition, tile_size is a parameter indicating the size (byte) of the tile.

For example, in a case where the MAF does not perform partial access (that is, in a case where there is no tile in the buffer frame region), num_components = 0 and num_tiles = 0.

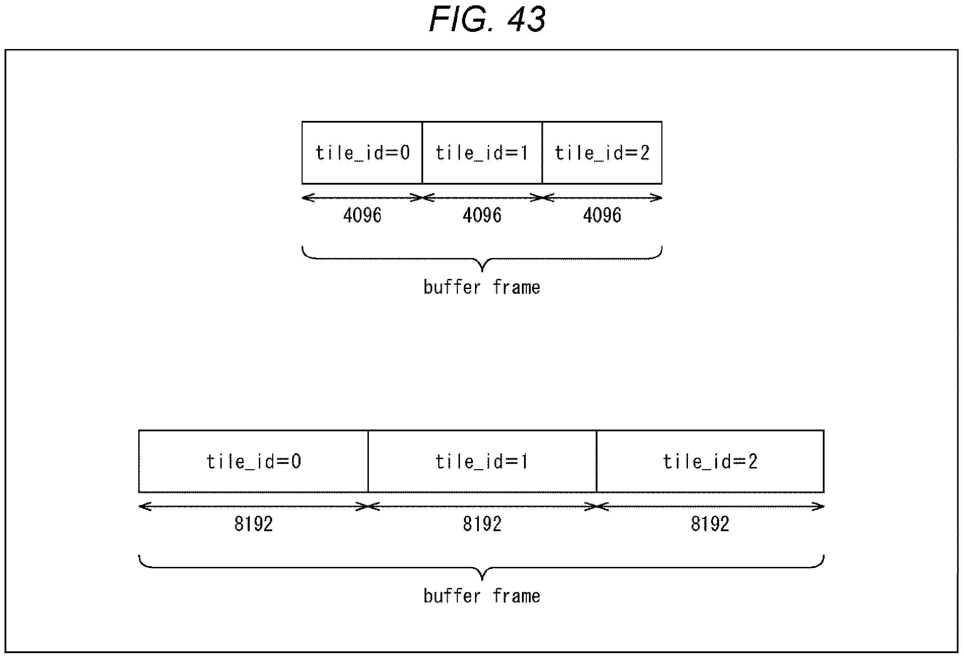

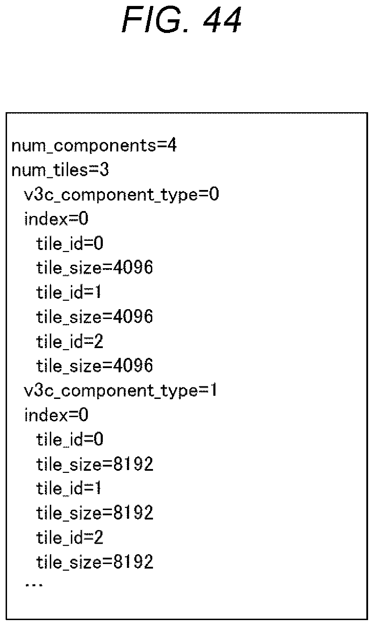

For example, as illustrated in Fig. 43, it is assumed that three pieces of tile data having a tile size of 4096 bytes are stored in the buffer frame region of the atlas component (v3c_component_type = 0), and three pieces of tile data having a tile size of 8192 bytes are stored in the buffer frame region of the geometry component (v3c_component_type = 1). In this case, the tile storage information includes information as illustrated in Fig. 44. Tile data of the same tile_id of each component is extracted in synchronization with each other.

By doing so, in a case where the 3D data is reconstructed by the PE, the client device can acquire the tile data from the buffer on the basis of the tile storage information stored in the buffer frame region referred to by the accessor of the MPEG_tile attribute. Therefore, the client device can implement partial access even in a case where the 3D data is reconstructed by the PE.

Note that, for example, as illustrated in the ninth row from the top of the table illustrated in Fig. 31, the _MPEG_tile attribute may be stored as an extension of glTF in another place such as a node or a mesh object (#2-2-1) .

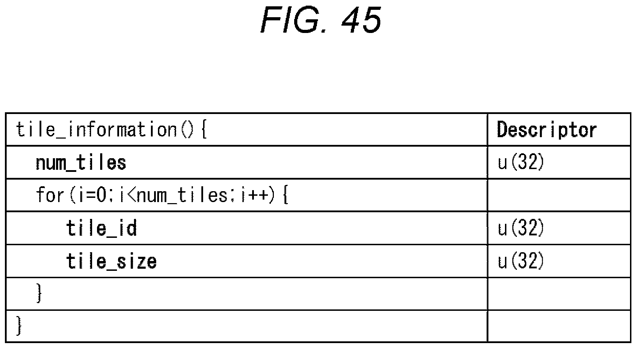

Furthermore, for example, as illustrated in the tenth row from the top of the table illustrated in Fig. 31, the tile storage information may be set for each V3C component (#2-2-2). That is, the tile storage information may be information for each component. For example, Fig. 45 illustrates an example of syntax of tile storage information in a case where MPEG_POSITION_TILE, _MPEG_ATLAS_TILE, _MPEG_ATTRIBUTE_TILE, and _MPEG_OCCUPANCY_TILE exist as V3C components. For example, in a case where the MAF does not perform partial access (if there are no tiles in the buffer frame region), num_tiles = 0.

Furthermore, for example, as illustrated in the 11th row from the top of the table illustrated in Fig. 31, the flag information (tile_exists) may clearly indicate that the MAF has not performed the partial access (that is, there is no tile in the buffer frame region) (#2-2-3). That is, the tile storage information may further include flag information indicating whether or not a tile exists.

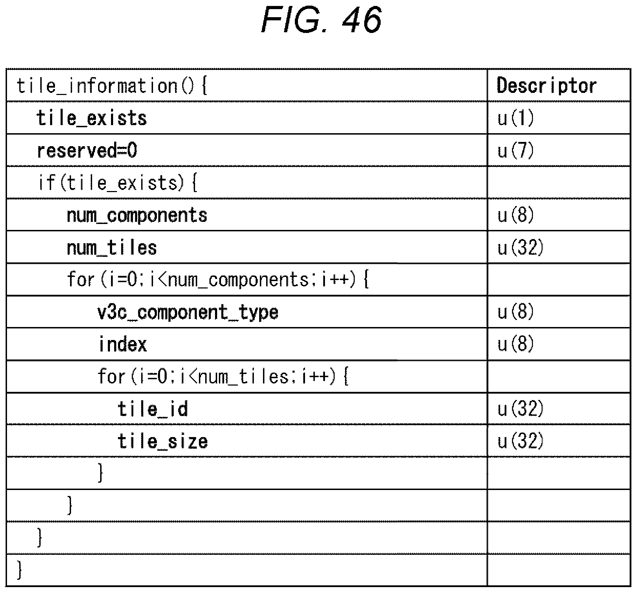

Fig. 46 is a diagram illustrating an example of syntax of tile storage information in this case. As illustrated in Fig. 46, tile_exists is set in the tile storage information in this case. For example, in a case where tile_exists is true (for example, "1"), it indicates that data is stored in the buffer frame region in units of tiles. In addition, in a case where tile_exists is false (for example, "0"), it indicates that data is not stored in the buffer frame region in units of tiles. Then, only in a case where tile_exists is true, that is, only in a case where data is stored in the buffer frame region in units of tiles, various parameters such as num_components, numtiles, v3c_component_type, index, tile_id, and tile_size are set. With this setting, an increase in a buffer size can be suppressed.

Note that Fig. 46 is an example in which tile_exists is added to the tile storage information in the example of Fig. 42. tile_exists may be added to the tile storage information in the example of Fig. 45.

Furthermore, for example, as illustrated in the 12th row from the top of the table illustrated in Fig. 31, the tile IDs stored in the buffer frame region of each component may be disposed in the same order (#2-2-4). In this way, the client device can identify each tile data (each tile) by the position (alignment order) of the tile data in the buffer frame region. That is, in this case, the setting of tile_id can be omitted in the tile storage information. That is, an increase in the buffer size can be suppressed.

Note that this method may be applied to the tile storage information in the example of Fig. 42 or may be applied to the tile storage information in the example of Fig. 45.

### <Individual storage of tile size and tile ID (#2-3) >

Furthermore, for example, as illustrated in the 13th row from the top of the table illustrated in Fig. 31, the attribute of the tile size and the attribute of the tile ID in the tile storage information may be defined in the scene description (#2-3). In other words, the information indicating the size of the tile and the identification information about the tile may be stored in buffer regions different from each other.

For example, in the information processing device (for example, the client device), the file processing unit may store the identification information about the tile and the information indicating a size of the tile in buffer regions different from each other. In addition, the scene description file may further store, in addition to the first accessor and the second accessor, a third accessor for storing the tile storage information in a third buffer region different from the second buffer region. Then, the second accessor may store the identification information about the tile in the second buffer region. The third accessor may store information indicating the size of the tile in the third buffer region.

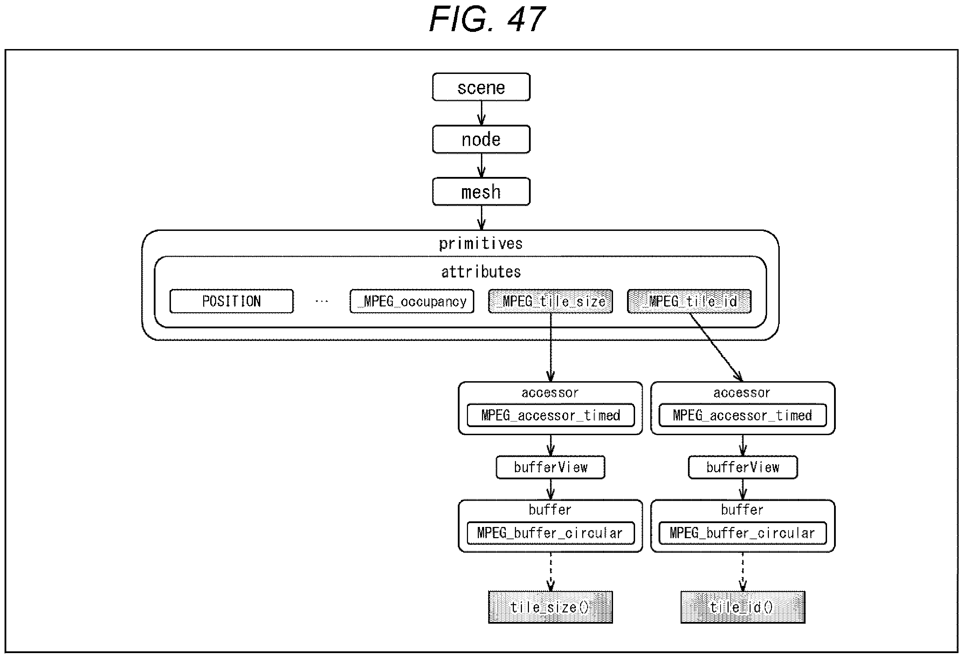

Fig. 47 is a diagram illustrating a main configuration example of the scene description in this case. As illustrated in Fig. 47, a _MPEG_tile_size attribute and a _MPEG_tile_id attribute are defined as attributes properties stored in the primitives. Information (tile_size ()) indicating the size of the tile is stored in the buffer frame region referred to by the accessor of the _MPEG_tile_size attribute. Further, identification information (tile_id ()) of the tile is stored in the buffer frame region referred to by the accessor of the _MPEG_tile_id attribute. That is, these pieces of information are stored in buffer frame regions different from each other.

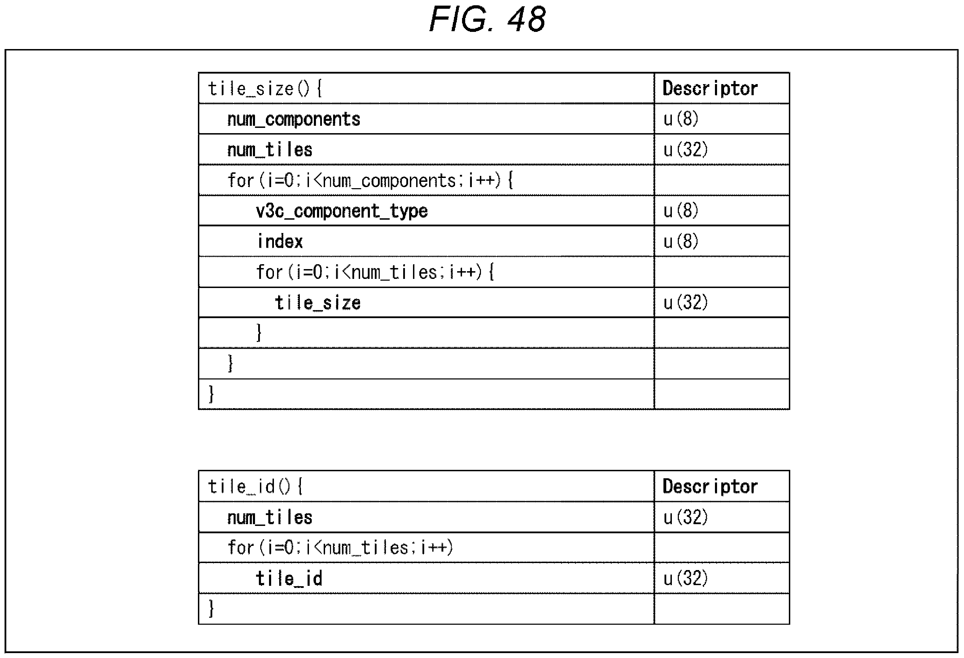

Note that the upper part of Fig. 48 illustrates an example of syntax of information (tile_size ()) indicating the size of the tile in this case. The lower part of Fig. 48 illustrates an example of syntax of identification information (tile_id ()) of the tile in this case. In this example, the identification information (tile_id ()) of the tile is stored in a buffer frame region different from those of the other parameters. Of course, parameters (other parameters) other than the information (tile_size) indicating the size of the tile and the identification information (tile_id) about the tile may be stored in the buffer frame region same as that of either parameter of the information (tile_size) indicating the size of the tile or the identification information (tile_id) about the tile. In addition, other parameters may be stored in a buffer frame region different from those of both parameters.

The PE refers to each buffer frame region, acquires (various parameters of) tile storage information, and acquires tile data from the buffer on the basis of the tile storage information. In a case where the MAF does not perform the partial access (that is, in a case where there is no tile in the buffer frame region), num_tiles = 0 in both the information (tile_size ()) indicating the size of the tile and the identification information (tile_id ()) about the tile.

Note that, also in this case, for example, as illustrated in the 14th row from the top of the table illustrated in Fig. 31, the information (tile_size ()) indicating the size of the tile may be set for each V3C component (#2-3-1). That is, the information (tile_size ()) indicating the size of the tile may be information for each component.

Furthermore, also in this case, for example, as illustrated in the 15th row from the top of the table illustrated in Fig. 31, for each of the information (tile_size ()) indicating the size of the tile and the identification information (tile_id ()) about the tile, the flag information (tile_exists) may clearly indicate that the MAF has not performed the partial access (that is, there is no tile in the buffer frame region) (#2-3-2). That is, each of the information (tile_size ()) indicating the size of the tile and the identification information (tile_id ()) of the tile may further include flag information (tile_exists) indicating whether or not the tile exists. As described above, even in a case where the information (tile_size ()) indicating the size of the tile is information for each component, this flag information (tile_exists) may be added.

Furthermore, also in this case, for example, as illustrated in the 16th row from the top of the table illustrated in Fig. 31, the tile IDs stored in the buffer frame region of each component may be disposed in the same order (#2-3-3). In this way, the client device can identify each tile data (each tile) by the position (alignment order) of the tile data in the buffer frame region. That is, in this case, the setting of tile_id can be omitted in the information (tile_size ()) indicating the size of the tile and the identification information (tile_id ()) about the tile. That is, an increase in the buffer size can be suppressed.

### <Storage with atlas component (#2-3)>

Further, for example, as illustrated in the lowermost row of the table illustrated in Fig. 31, tile storage information (tile_information) may be stored in a buffer frame region referred to by an accessor of the atlas data (#2-4).

For example, in the information processing device (for example, the client device), the file processing unit may store the tile storage information in a buffer region same as that of the atlas data. Further, the second buffer region in which the tile storage information for identifying the tile data stored in the first buffer region is stored may be a buffer region in which the atlas data is stored. In other words, the tile storage information may be stored in a buffer region where the atlas data is stored.

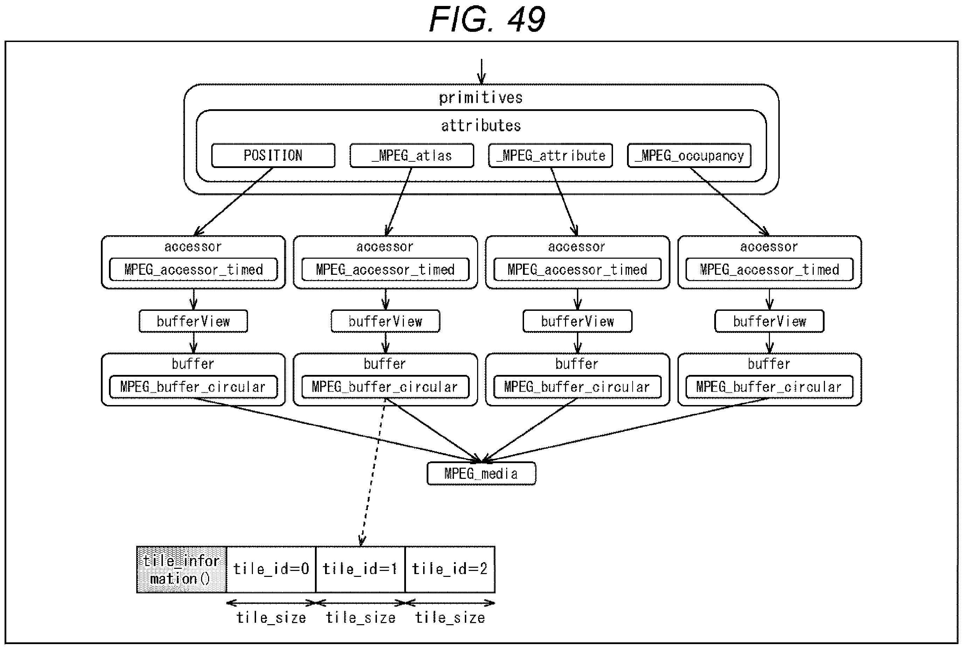

Fig. 49 is a diagram illustrating a main configuration example of the scene description in this case. As illustrated in Fig. 49, in this case, the _MPEG_tile attribute is not defined, and the tile storage information (tile_information ()) is stored in the buffer frame region referred to by the accessor of the _MPEG_atlas attribute, that is, the buffer region in which the atlas data is stored.

Syntax and semantics of the tile storage information (tile_information ()) in this case are similar to those in the example described with reference to Fig. 42.

By doing so, in a case where the 3D data is reconstructed by the PE, the client device can acquire the tile data from the buffer on the basis of the tile storage information stored in the buffer frame region referred to by the accessor of the MPEG_atlas attribute. Therefore, the client device can implement partial access even in a case where the 3D data is reconstructed by the PE.

Also in this case, the tile storage information may be set for each V3C component. That is, the tile storage information may be information for each component. In addition, the flag information (tile_exists) may clearly indicate that the MAF has not performed partial access (that is, there is no tile in the buffer frame region). That is, the tile storage information may further include flag information indicating whether or not a tile exists. In a case where the tile storage information is set for each V3C component, the flag information may be added.

Further, the tile IDs stored in the buffer frame region of each component may be disposed in the same order. In this way, the client device can identify each tile data (each tile) by the position (alignment order) of the tile data in the buffer frame region. That is, in this case, the setting of tile_id can be omitted in the tile storage information. That is, an increase in the buffer size can be suppressed. Note that this method may also be applied in a case where the tile storage information is set for each V3C component.

### <4. First embodiment>

### <File generation device>

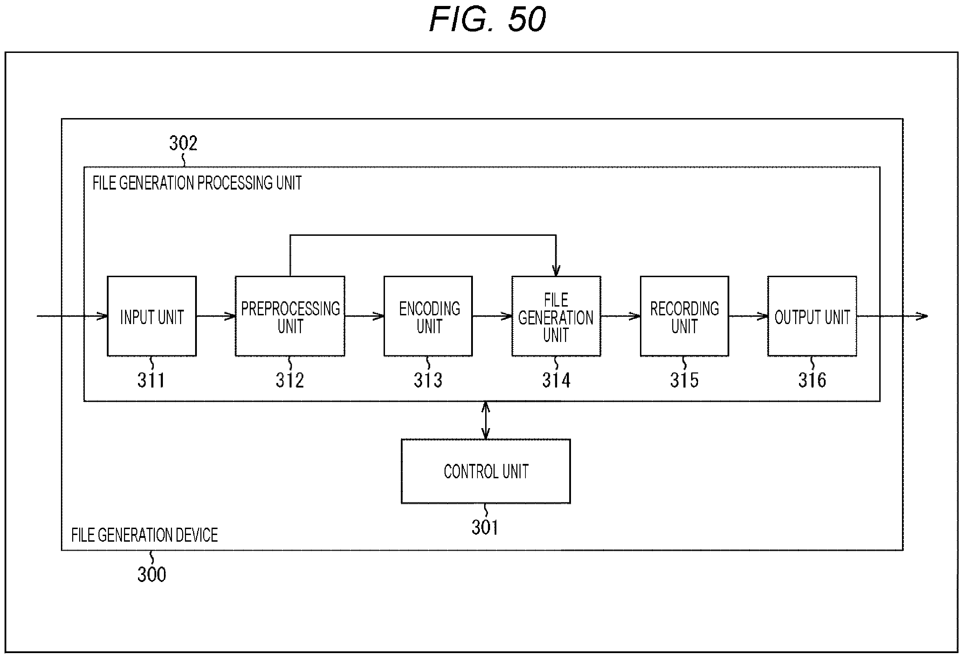

The above-described present technology can be applied to any device. Fig. 50 is a block diagram illustrating an example of a configuration of a file generation device that is an aspect of an information processing device to which the present technology is applied. A file generation device 300 illustrated in Fig. 50 is a device that encodes 3D object content (for example, 3D data such as a point cloud) and stores the encoded 3D object content in a file container such as the ISOBMFF. In addition, the file generation device 300 generates a scene description file of the 3D object content.

Note that, in Fig. 50, main processing units, main data flows, and the like are illustrated, and those illustrated in Fig. 50 are not necessarily all. That is, in the file generation device 300, there may be a processing unit not illustrated as a block in Fig. 50, or there may be a process or a data flow not illustrated as an arrow or the like in Fig. 50.

As illustrated in Fig. 50, the file generation device 300 includes a control unit 301 and a file generation processing unit 302. The control unit 301 controls the file generation processing unit 302. The file generation processing unit 302 is controlled by the control unit 301 and performs a process related to file generation. For example, the file generation processing unit 302 may acquire data of 3D object content to be stored in a file. Furthermore, the file generation processing unit 302 may generate a content file by storing the acquired data of the 3D object content in a file container. In addition, the file generation processing unit 302 may generate a scene description corresponding to the 3D object content and store the scene description in the scene description file. The file generation processing unit 302 may output the generated file to the outside of the file generation device 300. For example, the file generation processing unit 302 may upload the generated file to a distribution server or the like.

The file generation processing unit 302 includes an input unit 311, a preprocessing unit 312, an encoding unit 313, a file generation unit 314, a recording unit 315, and an output unit 316.

The input unit 311 performs a process related to acquisition of data of the 3D object content. For example, the input unit 311 may acquire the data of the 3D object content from the outside of the file generation device 300. The data of the 3D object content may be any data as long as the data is 3D data representing the three-dimensional structure of the object. For example, it may be data of a point cloud. The input unit 311 may supply the acquired data of the 3D object content to the preprocessing unit 312.

The preprocessing unit 312 performs a process related to a preprocessing performed on the data of the 3D object content before encoding. For example, the preprocessing unit 312 may acquire the data of the 3D object content supplied from the input unit 311. Furthermore, the preprocessing unit 312 may acquire information necessary for generating a scene description from the acquired data of the 3D object content or the like. In addition, the preprocessing unit 312 may supply the acquired information to the file generation unit 314. Furthermore, the preprocessing unit 312 may supply data of the 3D object content to the encoding unit 313.

The encoding unit 313 performs a process related to encoding of data of the 3D object content. For example, the encoding unit 313 may acquire the data of the 3D object content supplied from the preprocessing unit 312. Furthermore, the encoding unit 313 may encode the acquired data of the 3D object content and generate the coded data. Furthermore, the encoding unit 313 may supply the coded data of the generated 3D object content to the file generation unit 314 as a V3C bit stream.

The file generation unit 314 performs a process related to generation of a file or the like. For example, the file generation unit 314 may acquire the V3C bit stream supplied from the encoding unit 313. In addition, the file generation unit 314 may acquire information supplied from the preprocessing unit 312. Furthermore, the file generation unit 314 may generate a file container (content file) that stores the V3C bit stream supplied from the encoding unit 313. The specification and the like of the content file (file container) are any specification, and any file may be used as long as the V3C bit stream can be stored. For example, it may be an ISOBMFF.

In addition, the file generation unit 314 may generate a scene description corresponding to the V3C bit stream using the information supplied from the preprocessing unit 312. Then, the file generation unit 314 may generate a scene description file and store the generated scene description. Furthermore, in a case where the V3C bit stream is distributed by a system conforming to the MPEG-DASH, the file generation unit 314 may generate an MPD corresponding to the V3C bit stream. Furthermore, the file generation unit 314 may supply the generated file or the like (ISOBMFF, scene description file, MPD, and the like) to the recording unit 315.

The recording unit 315 includes any recording medium such as a hard disk or a semiconductor memory, for example, and performs a process related to data recording. For example, the recording unit 315 may record the file or the like supplied from the file generation unit 314 in the recording medium. Furthermore, the recording unit 315 may read a file or the like recorded in the recording medium in accordance with a request from the control unit 301 or the output unit 316 or at a predetermined timing, and supply the file or the like to the output unit 316.

The output unit 316 may acquire the file or the like supplied from the recording unit 315 to output the file or the like to the outside of the file generation device 300 (for example, a distribution server, a playback device, or the like).

In the file generation device 300 having the above configuration, the present technology described above may be applied in <3. Partial access support>.

For example, the file generation unit 314 may generate a scene description file storing an attributes property for each tile of the 3D object content for storing tile data of the 3D object content in buffer regions different from each other.

In addition, the file generation unit 314 may specify an extension in one node of the scene description file, associate a node for each tile with the extension, associate a mesh object for each tile with each node, and store an attributes property for each tile in each mesh object.

Furthermore, the file generation unit 314 may specify an extension in one node of the scene description file, associate a mesh object for each tile with the extension, and store an attributes property for each tile in each mesh object.

In addition, the file generation unit 314 may specify an extension in one of the primitives of the scene description file and store an attributes property for each tile in the extension.

In addition, the file generation unit 314 may specify an extension in one mesh object of the scene description file and store a primitives array having an attributes property for each tile as an element in the extension.

In addition, the file generation unit 314 may generate a scene description file that stores a first accessor for storing tile data of 3D object content in a common first buffer region and a second accessor for storing tile storage information for identifying tile data stored in the first buffer region in a second buffer region.

Furthermore, the tile storage information may include information indicating the number of tiles, tile identification information, and information indicating the size of the tile.

Furthermore, the tile storage information may further include information indicating the number of components and information indicating a component type.

Further, the second buffer region in which the tile storage information for identifying the tile data stored in the first buffer region is stored may be a region different from the first buffer region.

Furthermore, the tile storage information may be information for each component.

Furthermore, the tile storage information may further include flag information indicating whether or not a tile exists.

In addition, the scene description file may further store a third accessor for storing the tile storage information in a third buffer region different from the second buffer region. Then, the second accessor may store the identification information about the tile in the second buffer region. The third accessor may store information indicating the size of the tile in the third buffer region.

Furthermore, the information indicating the size of the tile may be information for each component.

Further, the second buffer region may be a buffer region in which the atlas data is stored.

Of course, another present technologies described above may be applied in <3. Partial access support>. Furthermore, a plurality of the present technologies may be appropriately combined and applied.

Since the file generation device 300 has such a configuration, in a case where the 3D data is reconstructed by the PE, the client device that plays back the content can store the data for each tile in the buffer. Therefore, even in a case where the 3D data is reconstructed by the PE, the client device can reconstruct and render the 3D data using the data of the tile (part of the object) acquired by partial access to the V-PCC bit stream. That is, even in a case where the 3D data is reconstructed by the PE, partial access can be implemented.

### <Flow 1 of file generation process>

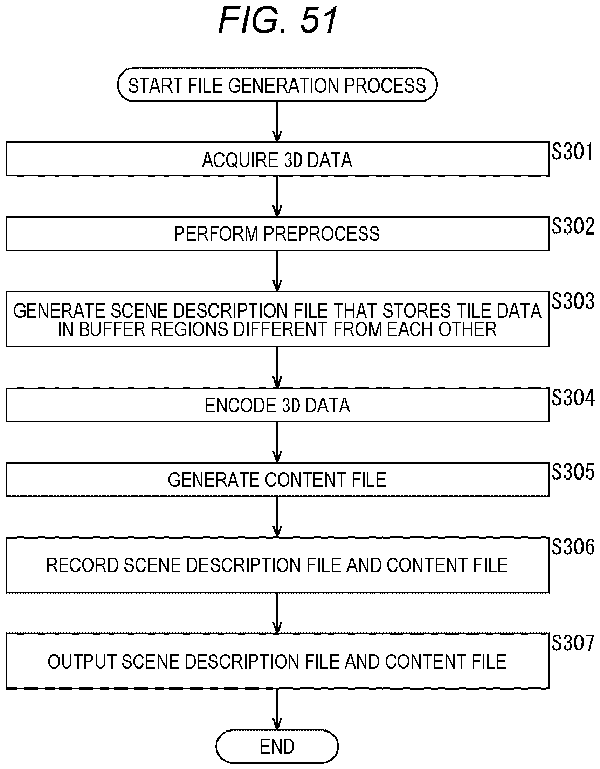

An example of a flow of a file generation process executed by the file generation device 300 having such a configuration will be described with reference to a flowchart of Fig. 51. The example of Fig. 51 illustrates an example of a flow of a file generation process in a case where tile data is stored in buffer regions different from each other.

In this case, in a case where the file generation process is started, the input unit 311 of the file generation device 300 acquires the data (3D data) of the 3D object in step S301. For example, the input unit 311 acquires data of a point cloud as the 3D data.

In step S302, the preprocessing unit 312 performs a preprocessing on the data of the 3D object acquired in step S301. For example, the preprocessing unit 312 acquires, from the data of the 3D object, information to be used for generating a scene description that is spatial arrangement information for disposing one or more 3D objects in a 3D space.

In step S303, using the information, the file generation unit 314 generates a scene description file storing an attributes property of each tile of the 3D object content for storing the tile data in buffer regions different from each other.

In step S304, the encoding unit 313 encodes the data (3D data) of the point cloud acquired in step S301, and generates the coded data (V3C bit stream).

In step S305, the file generation unit 314 generates a content file (ISOBMFF) that stores the V3C bit stream generated in step S304.

In step S306, the recording unit 315 records the generated scene description file and the generated content file in the recording medium.

In step S307, the output unit 316 reads the file or the like recorded in step S306 from the recording medium to output the read file to the outside of the file generation device 300 at a predetermined timing. For example, the output unit 316 may transmit (upload) the file read from the recording medium to another device such as a distribution server or a playback device via a communication medium such as a network. Furthermore, the output unit 316 may record a file or the like read from a recording medium in an external recording medium such as a removable medium. In this case, the output file may be supplied to another device (a distribution server, a playback device, or the like) via the external recording medium, for example.

When the process of step S307 ends, the file generation process ends.

By executing the file generation process in this manner, in a case where the 3D data is reconstructed by the PE, the client device that plays back the content can store the data for each tile in the buffer region. That is, for example, in the client device, the MAF can store a plurality of pieces of tile data of one 3D object in buffer regions different from each other. Then, the PE can then identify and process the tile data by the buffer region storing the tile data. Therefore, even in a case where the 3D data is reconstructed by the PE, the client device can reconstruct and render the 3D data using the data of the tile (part of the object) acquired by partial access to the V-PCC bit stream. That is, even in a case where the 3D data is reconstructed by the PE, partial access can be implemented.

Note that, in step S303, the file generation unit 314 may specify an extension in one node of the scene description file, associate a node for each tile with the extension, associate a mesh object for each tile with each node, and store an attributes property for each tile in each mesh object.

Furthermore, in step S303, the file generation unit 314 may specify an extension in one node of the scene description file, associate a mesh object for each tile with the extension, and store an attributes property for each tile in each mesh object.

Furthermore, in step S303, the file generation unit 314 may specify an extension in one of the primitives of the scene description file and store an attributes property for each tile in the extension.

Furthermore, in step S303, the file generation unit 314 may specify an extension in one mesh object of the scene description file, and store the primitives array having the attributes property for each tile as an element in the extension.

Of course, another present technologies described above may be applied in <3. Partial access support>. Furthermore, a plurality of the present technologies may be appropriately combined and applied.

### <Flow 2 of file generation process>

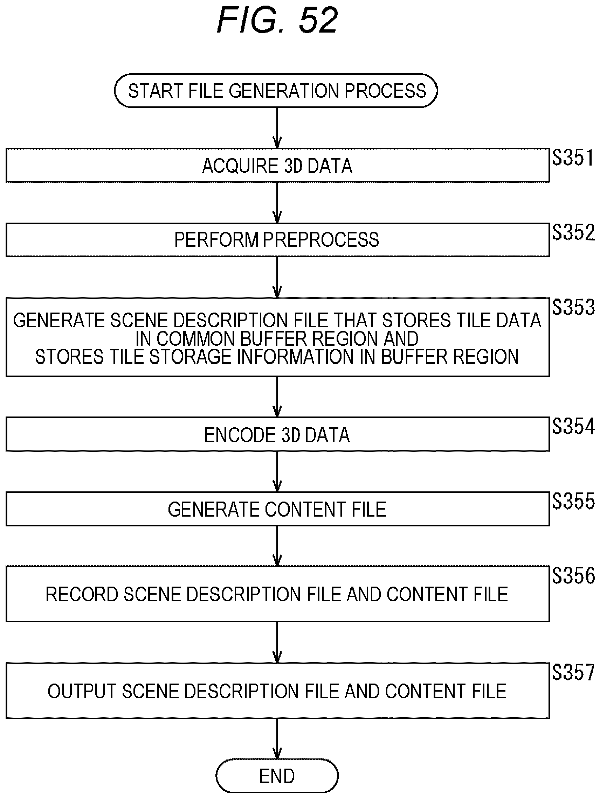

Next, an example of a flow of a file generation process in a case where tile data is stored in a common buffer region will be described with reference to a flowchart of Fig. 52.

In this case, in a case where the file generation process is started, the processes of steps S351 and S352 are executed as in the processes of steps S301 and S302 of Fig. 51.

In step S353, using the information, the file generation unit 314 generates a scene description file that stores tile data in a common buffer region and stores tile storage information in the buffer region. That is, the file generation unit 314 generates a scene description file that stores a first accessor for storing tile data of 3D object content in a common first buffer region and a second accessor for storing tile storage information for identifying the tile data stored in the first buffer region in a second buffer region.

The processes of steps S354 to S357 are executed as in the processes of steps S304 to S307 of Fig. 51.

When the process of step S357 ends, the file generation process ends.

By executing the file generation process in this manner, in a case where the 3D data is reconstructed by the PE, the client device can acquire the data for each tile from the buffer on the basis of the tile storage information. Therefore, even in a case where the 3D data is reconstructed by the PE, the client device can reconstruct and render the 3D data using the data of the tile (part of the object) acquired by partial access to the V-PCC bit stream. That is, the client device can implement the partial access even in a case where the 3D data is reconstructed by the PE.

Note that the tile storage information may include information indicating the number of tiles, tile identification information, and information indicating the size of the tile.

Furthermore, the tile storage information may further include information indicating the number of components and information indicating a component type.

Further, the second buffer region in which the tile storage information for identifying the tile data stored in the first buffer region is stored may be a region different from the first buffer region.

Furthermore, the tile storage information may be information for each component.

Furthermore, the tile storage information may further include flag information indicating whether or not a tile exists.

In addition, the scene description file may further store a third accessor for storing the tile storage information in a third buffer region different from the second buffer region. Then, the second accessor may store the identification information about the tile in the second buffer region. The third accessor may store information indicating the size of the tile in the third buffer region.

Furthermore, the information indicating the size of the tile may be information for each component.

Further, the second buffer region may be a buffer region in which the atlas data is stored.

Of course, another present technologies described above may be applied in <3. Partial access support>. Furthermore, a plurality of the present technologies may be appropriately combined and applied.

### <5. Second embodiment>

### <Client device>

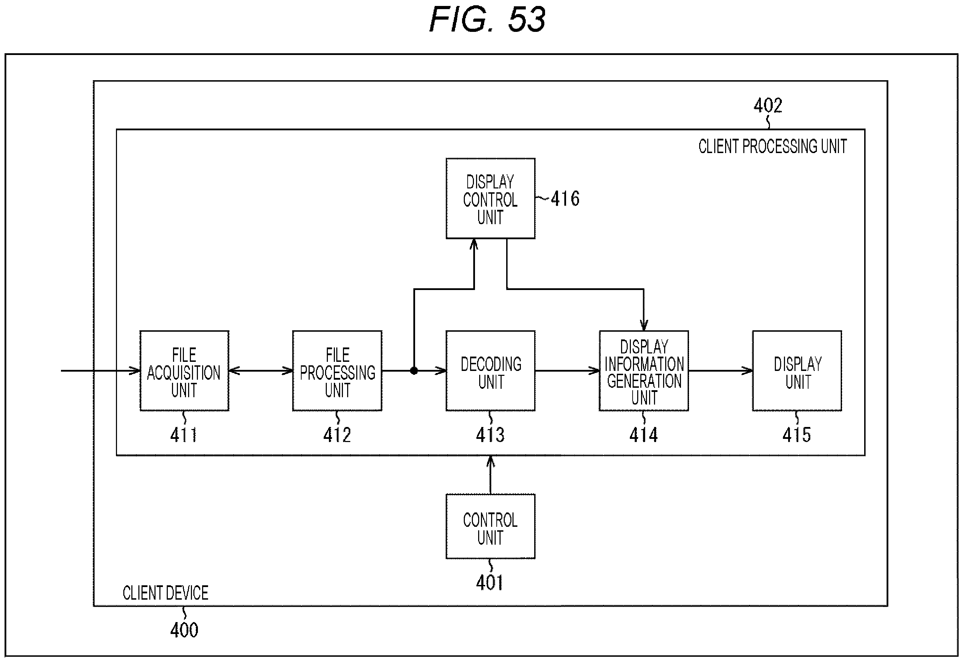

Fig. 53 is a block diagram illustrating an example of a configuration of a client device that is an aspect of an information processing device to which the present technology is applied. A client device 400 illustrated in Fig. 53 is a playback device that performs a playback process of 3D object content on the basis of the scene description. For example, the client device 400 plays back the data of the 3D object stored in the content file generated by the file generation device 300. At this time, the client device 400 performs a process related to the playback on the basis of the scene description.

Note that, in Fig. 53, main processing units, main data flows, and the like are illustrated, and those illustrated in Fig. 53 are not necessarily all. That is, in the client device 400, there may be a processing unit not illustrated as a block in Fig. 53, or there may be processing or a data flow not illustrated as an arrow or the like in Fig. 53.

As illustrated in Fig. 53, the client device 400 includes a control unit 401 and a playback processing unit 402. The control unit 401 performs a process related to control of the playback processing unit 402. The playback processing unit 402 performs a process related to playback of the data of the 3D object.

The playback processing unit 402 includes a file acquisition unit 411, a file processing unit 412, a decoding unit 413, a display information generation unit 414, a display unit 415, and a display control unit 416.

The file acquisition unit 411 performs a process related to file acquisition. For example, the file acquisition unit 411 may acquire a file or the like supplied from the outside of the client device 400, such as the distribution server or the file generation device 300. In addition, the file acquisition unit 411 may acquire a file or the like stored in a local storage (not illustrated). For example, the file acquisition unit 411 may acquire a scene description file. In addition, the file acquisition unit 411 may acquire a content file. For example, the file acquisition unit 411 may supply the acquired file to the file processing unit 412. The file acquisition unit 411 may perform a process related to the acquisition of the file under the control of the file processing unit 412. For example, the file acquisition unit 411 may acquire a file requested by the file processing unit 412 from the outside or a local storage and supply the file to the file processing unit 412.

The file processing unit 412 performs a process related to processing on a file or the like. For example, the file processing unit 412 may have a configuration (for example, MAF, buffer, PE, and the like) as described with reference to Fig. 16. Then, the file processing unit 412 may reconstruct the 3D data by the PE.

In this case, the PE of the file processing unit 412 may cause the file acquisition unit 411 to acquire the scene description file corresponding to the desired 3D object content. Then, the PE may acquire the scene description file supplied from the file acquisition unit 411. In addition, the PE may parse the scene description file, and cause the MAF to acquire data of a desired 3D content file on the basis of the scene description file. The MAF may cause the file acquisition unit 411 to acquire a desired content file according to the control of the PE, and acquire a desired V3C bit stream from the content file. Then, the MAF may cause the decoding unit 413 to decode the V3C bit stream, and acquire the data of the V3C content. Then, the MAF may store the data (2D data) of the V3C content in a buffer. The PE may acquire the data from the buffer on the basis of the scene description and reconstruct the 3D data. Then, the PE may cause the display information generation unit 414 to perform rendering using the reconstructed 3D data and generate the display image. Note that the file processing unit 412 may supply information useful for generating display information included in a scene description or the like to the display control unit 416.

The decoding unit 413 performs a process related to decoding. For example, the decoding unit 413 may be controlled by the file processing unit 412 to decode the V3C bit stream. Furthermore, the decoding unit 413 may supply data (for example, data of a point cloud) of the 3D object content obtained by the decoding to the file processing unit 412 or the display information generation unit 414.

The display information generation unit 414 performs a process related to display. For example, the display information generation unit 414 may acquire the data of the 3D object supplied from at least one of the file processing unit 412 or the decoding unit 413. Furthermore, the display information generation unit 414 may perform rendering of data of the 3D object content under the control of the display control unit 416 or the file processing unit 412 to generate a display image or the like. Furthermore, the display information generation unit 414 may supply the generated display image or the like to the display unit 415.

The display unit 415 includes a display device and performs a process related to image display. For example, the display unit 415 may display the display image supplied from a display information generation unit 214 using the display device.

The display control unit 416 performs a process related to image display control. For example, the display control unit 416 may acquire information such as a scene description supplied from the file processing unit 412. Furthermore, the display control unit 416 may control the display information generation unit 414 on the basis of the information.

In the client device 400 having the above configuration, the present technology described above may be applied in <3. Partial Access Support>.

For example, the file processing unit 412 may store tile data of each tile of the 3D object content in a buffer region corresponding to the tile on the basis of an attributes property for each tile of the 3D object content stored in the scene description file, acquire tile data of a desired tile from the buffer region, and process the acquired tile data.

Furthermore, in the scene description file, an extension may be specified in one node, a node for each tile may be associated with the extension, a mesh object for each tile may be associated with each node, and an attributes property for each tile may be stored in each mesh object. Then, the file processing unit 412 may store the tile data of each tile in the buffer region indicated by the attributes property of the tile, acquire tile data of the desired tile from the buffer region indicated by the attributes property of the desired tile, and process the acquired tile data.

Furthermore, in the scene description file, an extension may be specified in one node, a mesh object for each tile may be associated with the extension, and an attributes property for each tile may be stored in each mesh object. Then, the file processing unit 412 may store the tile data of each tile in the buffer region indicated by the attributes property of the tile, acquire tile data of a desired tile from the buffer region indicated by the attributes property of the desired tile, and process the acquired tile data.

Further, in the scene description file, an extension may be specified in one of the primitives, and an attributes property for each tile may be stored in the extension. Then, the file processing unit 412 may store the tile data of each tile in the buffer region indicated by the attributes property of the tile, acquire tile data of a desired tile from the buffer region indicated by the attributes property of the desired tile, and process the acquired tile data.

Furthermore, in the scene description file, an extension may be specified in one mesh object, and a primitives array having an attributes property for each tile as an element may be stored in the extension. Then, the file processing unit 412 may store the tile data of each tile in the buffer region indicated by the attributes property of the tile, acquire tile data of a desired tile from the buffer region indicated by the attributes property of the desired tile, and process the acquired tile data.

Furthermore, the file processing unit 412 may store tile data of 3D object content in a common buffer region, acquire desired tile data from the buffer region on the basis of tile storage information for identifying the tile data stored in the buffer region, and process the acquired tile data.

Furthermore, the tile storage information may include information indicating the number of tiles, tile identification information, and information indicating the size of the tile.

In addition, the file processing unit 412 may store the tile storage information in the timed accessor information header field.

Furthermore, the tile storage information may further include information indicating the number of components and information indicating a component type.

Furthermore, the tile storage information may be information for each component.

Furthermore, the tile storage information may further include flag information indicating whether or not a tile exists.

In addition, the file processing unit 412 may store the identification information about the tile and the information indicating the size of the tile in buffer regions different from each other.

Furthermore, the information indicating the size of the tile may be information for each component.

Further, the file processing unit 412 may store the tile storage information in a buffer region same as that of the atlas data.

Of course, another present technologies described above may be applied in <3. Partial access support>. Furthermore, a plurality of the present technologies may be appropriately combined and applied.

Since the client device 400 has such a configuration, in a case where the 3D data is reconstructed by the PE, the client device 400 that plays back the content can store the data for each tile in the buffer. Therefore, also in a case where the 3D data is reconstructed by the PE, the client device 400 can reconstruct and render the 3D data using the data of the tile (part of the object) acquired by partial access to the V-PCC bit stream. That is, even in a case where the 3D data is reconstructed by the PE, partial access can be implemented.

### <Flow 1 of playback process>

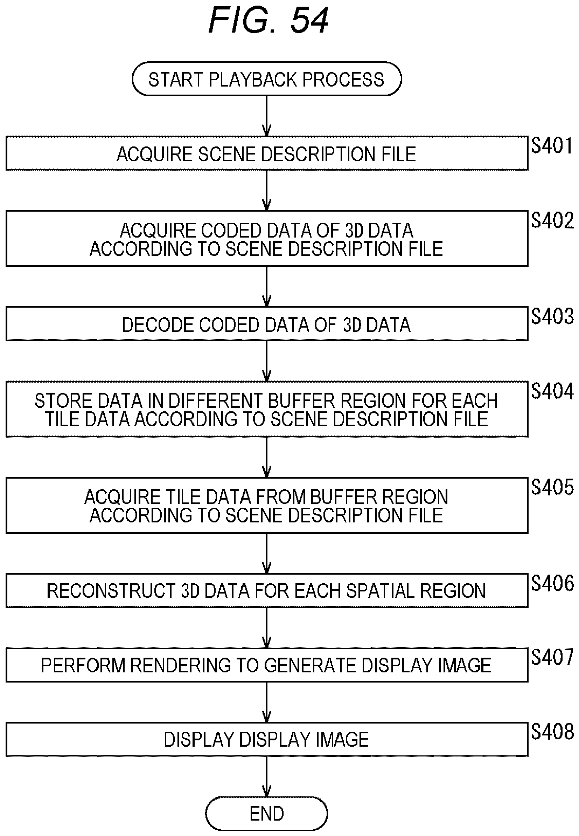

An example of a flow of the playback process executed by the client device 400 having such a configuration will be described with reference to the flowchart of Fig. 54. The example of Fig. 54 illustrates an example of a flow of a playback process in a case where tile data is stored in buffer regions different from each other.

When the playback process is started, the file processing unit 412 of the client device 400 causes the file acquisition unit 411 to acquire the scene description file in step S401.

In step S402, the file processing unit 412 parses the scene description file acquired in step S501, causes the file acquisition unit 411 to acquire the coded data (V3C bit stream) of the 3D data according to the parsing result.

In step S403, the file processing unit 412 causes the decoding unit 413 to decode the V3C bit stream obtained by the processing in step S402. The decoding unit 413 decodes the V3C bit stream according to the control, and generates video data or the like. That is, the decoding unit 413 obtains atlas information, a geometry frame, an attribute frame, an occupancy map, and the like.

In step S404, the file processing unit 412 stores the data of each component obtained by the processing in step S403 in a different buffer region for each tile data according to the parsing result of the scene description file. In step S405, the file processing unit 412 acquires tile data from the buffer region according to the scene description file. In step S406, the file processing unit 412 reconstructs the 3D data for each spatial region using the acquired data for each tile.

That is, the file processing unit 412 may store the tile data of each tile of the 3D object content in the buffer region corresponding to the tile on the basis of the attributes property for each tile of the 3D object content stored in the scene description file, acquire tile data of the desired tile from the buffer region, and process the acquired tile data.

In step S407, the display information generation unit 414 performs rendering using the 3D data reconstructed in step S406, and generates a display image.

In step S408, the display unit 415 displays the display image generated in step S408. When the processing at step S408 ends, the playback process ends.

By executing the playback process in this manner, in a case where the 3D data is reconstructed by the PE, the client device 400 that plays back the content can store the data for each tile in the buffer. That is, for example, in the client device 400, the MAF can store a plurality of pieces of tile data of one 3D object in buffer regions different from each other. Then, the PE can then identify and process the tile data by the buffer region storing the tile data. Therefore, also in a case where the 3D data is reconstructed by the PE, the client device 400 can reconstruct and render the 3D data using the data of the tile (part of the object) acquired by partial access to the V-PCC bit stream. That is, even in a case where the 3D data is reconstructed by the PE, partial access can be implemented.

Note that, in the scene description file, an extension may be specified in one node, a node for each tile may be associated with the extension, a mesh object for each tile may be associated with each node, and an attributes property for each tile may be stored in each mesh object. Then, in steps S404 to S406, the file processing unit 412 may store the tile data of each tile in the buffer region indicated by the attributes property of the tile, acquire tile data of the desired tile from the buffer region indicated by the attributes property of the desired tile, and process the acquired tile data.

Furthermore, in the scene description file, an extension may be specified in one node, a mesh object for each tile may be associated with the extension, and an attributes property for each tile may be stored in each mesh object. Then, in steps S404 to S406, the file processing unit 412 may store the tile data of each tile in the buffer region indicated by the attributes property of the tile, acquire tile data of a desired tile from the buffer region indicated by the attributes property of the desired tile, and process the acquired tile data.

Further, in the scene description file, an extension may be specified in one of the primitives, and an attributes property for each tile may be stored in the extension. Then, in steps S404 to S406, the file processing unit 412 may store the tile data of each tile in the buffer region indicated by the attributes property of the tile, acquire tile data of a desired tile from the buffer region indicated by the attributes property of the desired tile, and process the acquired tile data.

Furthermore, in the scene description file, an extension may be specified in one mesh object, and a primitives array having an attributes property for each tile as an element may be stored in the extension. Then, in steps S404 to S406, the file processing unit 412 may store the tile data of each tile in the buffer region indicated by the attributes property of the tile, acquire tile data of a desired tile from the buffer region indicated by the attributes property of the desired tile, and process the acquired tile data.

Of course, another present technologies described above may be applied in <3. Partial access support>. Furthermore, a plurality of the present technologies may be appropriately combined and applied.

### <Flow 2 of playback process>

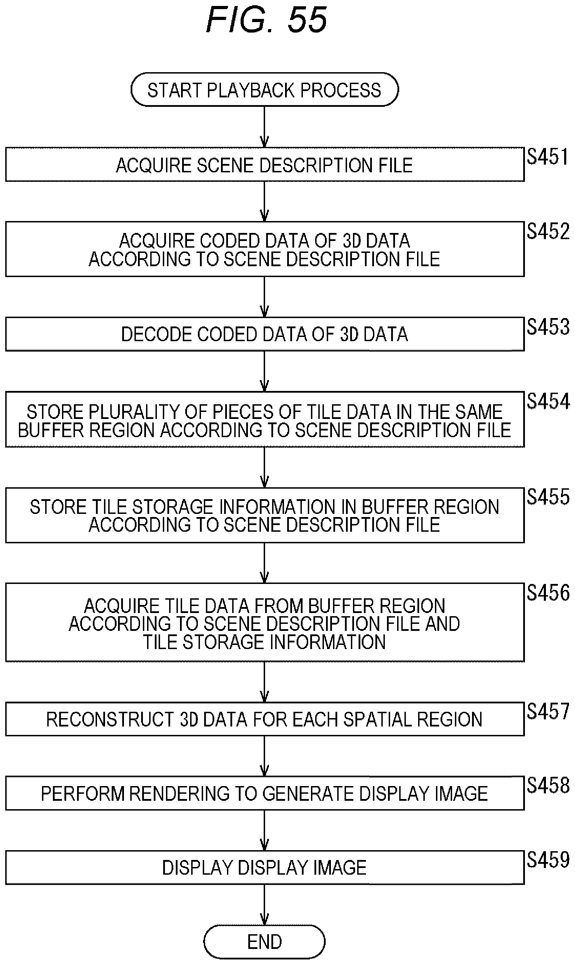

Next, an example of a flow of a playback process in a case where tile data is stored in a common buffer region will be described with reference to a flowchart of Fig. 55.

In this case, in a case where the playback process is started, the processes of steps S451 to S453 are executed as in the processes of steps S401 to S403 of Fig. 54.

In step S454, the file processing unit 412 stores a plurality of pieces of tile data of each component obtained by the processing in step S403 in the same buffer region according to the parsing result of the scene description file. In step S455, the file processing unit 412 stores the tile storage information in the buffer region according to the parsing result of the scene description file. In step S456, the file processing unit 412 acquires desired tile data from the buffer region on the basis of the parsing result of the scene description file and the tile storage information. In step S457, the file processing unit 412 reconstructs the 3D data for each spatial region using the acquired data for each tile.

That is, in steps S454 to S457, the file processing unit 412 may store the tile data of the 3D object content in a common buffer region, acquire desired tile data from the buffer region on the basis of the tile storage information for identifying the tile data stored in the buffer region, and process the acquired tile data.

The processes of steps S458 to S459 are executed as in the processes of steps S407 to S408 of Fig. 54.

By executing the playback process in this manner, in the client device 400, in a case where the 3D data is reconstructed by the PE, the client device 400 that plays back the content can store the data for each tile in the buffer. Therefore, also in a case where the 3D data is reconstructed by the PE, the client device 400 can reconstruct and render the 3D data using the data of the tile (part of the object) acquired by partial access to the V-PCC bit stream. That is, even in a case where the 3D data is reconstructed by the PE, partial access can be implemented.

Note that the tile storage information may include information indicating the number of tiles, tile identification information, and information indicating the size of the tile.

In addition, in steps S454 to S457, the file processing unit 412 may store the tile storage information in the timed accessor information header field.

Furthermore, the tile storage information may further include information indicating the number of components and information indicating a component type.

Furthermore, the tile storage information may be information for each component.

Furthermore, the tile storage information may further include flag information indicating whether or not a tile exists.

In addition, in steps S454 to S457, the file processing unit 412 may store the identification information about the tile and the information indicating the size of the tile in buffer regions different from each other.

Furthermore, the information indicating the size of the tile may be information for each component.

Furthermore, in steps S454 to S457, the file processing unit 412 may store the tile storage information in a buffer region same as that of the atlas data.

Of course, another present technologies described above may be applied in <3. Partial access support>. Furthermore, a plurality of the present technologies may be appropriately combined and applied.

### <6. Appendix>

### <Combination>

Each example of the present technology described above may be applied in appropriate combination with other examples as long as there is no contradiction. Furthermore, each example of the present technology described above may be applied in combination with another technology other than the above-described technology.

### <Computer>

The above-described series of processes can be executed by hardware or software. In a case where the series of processes is executed by software, a program constituting the software is installed in a computer. Here, the computer includes a computer incorporated in dedicated hardware, a general-purpose personal computer capable of executing various functions by installing various programs, and the like, for example.

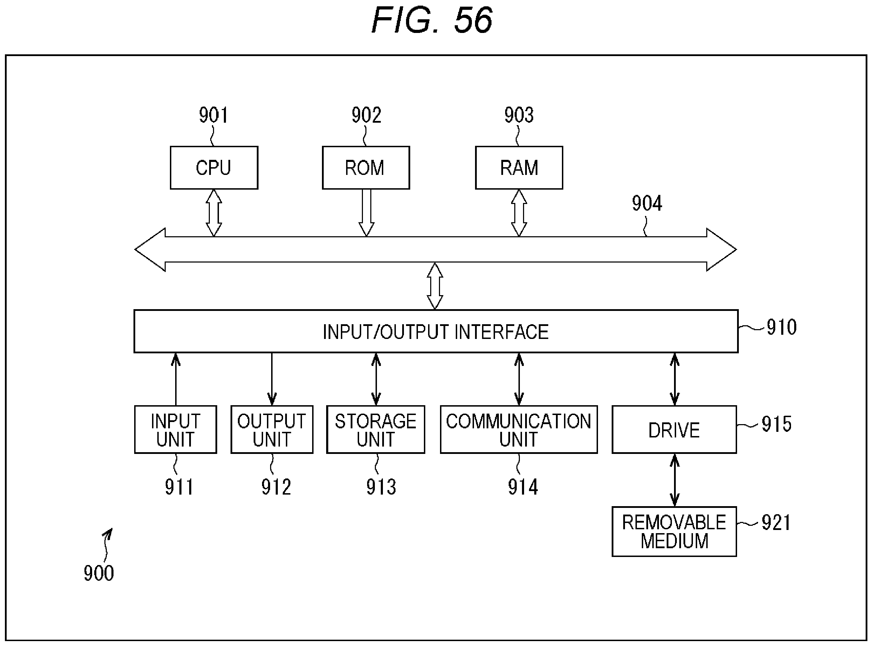

Fig. 56 is a block diagram illustrating a configuration example of hardware of a computer that executes the above-described series of processes by a program.

In a computer 900 illustrated in Fig. 56, a central processing unit (CPU) 901, a read only memory (ROM) 902, and a random access memory (RAM) 903 are mutually connected via a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes a network interface, for example. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processes is performed. The RAM 903 also appropriately stores data and the like necessary for the CPU 901 to execute various processes.

The program executed by the computer can be applied by being recorded on, for example, the removable medium 921 as a package medium or the like. In this case, the program can be installed in the storage unit 913 via the input/output interface 910 by attaching the removable medium 921 to the drive 915.

Furthermore, this program can also be provided via a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

### <Object to which the present technology is applicable>

The present technology can be applied to any encoding/decoding method.

Furthermore, the present technology can be applied to any configuration. For example, the present technology can be applied to various electronic devices.

Furthermore, for example, the present technology can also be implemented as a partial configuration of an apparatus, such as a processor (for example, a video processor) as a system large scale integration (LSI) or the like, a module (for example, a video module) using a plurality of processors or the like, a unit (for example, a video unit) using a plurality of modules or the like, or a set (for example, a video set) obtained by further adding other functions to a unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts), and the like), and it does not matter whether or not all the components are in the same housing. Consequently, both of a plurality of devices stored in different housings and connected via a network, and one device in which a plurality of modules is stored in one housing are systems.

### <Field and application to which present technology is applicable>

The system, device, processing unit and the like to which the present technology is applied may be used in arbitrary fields such as traffic, medical care, crime prevention, agriculture, livestock industry, mining, beauty care, factory, household appliance, weather, and natural surveillance, for example. Furthermore, any application thereof may be used.

For example, the present technology can be applied to systems and devices used for providing content for appreciation and the like. Furthermore, for example, the present technology can also be applied to systems and devices used for traffic, such as traffic condition management and automated driving control. Moreover, for example, the present technology can also be applied to systems and devices used for security. Furthermore, for example, the present technology can be applied to systems and devices used for automatic control of a machine or the like. Moreover, for example, the present technology can also be applied to systems and devices provided for use in agriculture and livestock industry. Furthermore, the present technology can also be applied to systems and devices that monitor, for example, the status of nature such as a volcano, a forest, and the ocean, wildlife, and the like. Moreover, for example, the present technology can also be applied to systems and devices used for sports.

### <Others>

Note that, in this specification, the "flag" is information for identifying a plurality of states, and includes not only information used for identifying two states of true (1) and false (0) but also information capable of identifying three or more states. Therefore, the value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only identification information thereof in a bit stream but also difference information about the identification information with respect to a certain reference information in the bit stream, and thus, in the present description, the "flag" and "identification information" include not only the information thereof but also the difference information with respect to the reference information.

Furthermore, various types of information (such as metadata) related to coded data (bit stream) may be transmitted or recorded in any form as long as it is associated with the coded data. Herein, the term "associate" is intended to mean to make, when processing one data, the other data available (linkable), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be not the entire data but part of data. For example, an image and information corresponding to the image may be associated with each other in any unit such as a plurality of frames, one frame, or a part within a frame.

Note that, in the present specification, terms such as "combine", "multiplex", "add", "integrate", "include", "store", "put in", "introduce", "insert", and the like mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, a configuration other than the above-described configurations may be added to the configuration of each device (or each processing unit). Moreover, when the configuration and operation of the entire system are substantially the same, part of the configuration of a certain device (or processing unit) may be included in the configuration of another device (or another processing unit).

Furthermore, for example, the above-described program may be executed in any device. In this case, it is sufficient that the device has a necessary function (functional block or the like) and is only required to obtain necessary information.

Furthermore, for example, each step of one flowchart may be executed by one device, or may be shared and executed by a plurality of devices. Furthermore, in a case where a plurality of processes is included in one step, the plurality of processes may be executed by one device, or may be shared and executed by a plurality of devices. In other words, a plurality of processes included in one step can also be executed as processes of a plurality of steps. Conversely, the processing described as a plurality of steps can be collectively executed as one step.

Furthermore, for example, in the program executed by the computer, process of steps describing the program may be executed in time series in the order described in the present specification, or may be executed in parallel or individually at necessary timing such as when a call is made. That is, as long as there is no contradiction, the processing of each step may be executed in an order different from the above-described order. Furthermore, the process of steps describing this program may be executed in parallel with the processing of another program, or may be executed in combination with the processing of another program.

Furthermore, for example, a plurality of techniques related to the present technology can be implemented independently as a single body as long as there is no contradiction. Of course, a plurality of arbitrary present technologies can be implemented in combination. For example, part or all of the present technologies described in any of the embodiments can be implemented in combination with part or all of the present technologies described in other embodiments. Furthermore, part or all of any of the above-described present technologies can be implemented using together with another technology that is not described above.

Note that the present technology can also have the following configurations.
(1) An information processing device including
   a file processing unit that stores tile data of 3D object content in a common buffer region, acquires the desired tile data from the buffer region on the basis of tile storage information for identifying the tile data stored in the buffer region, and processes the acquired tile data.
(2) The information processing device according to Item (1),
   in which the tile storage information includes information indicating the number of tiles, identification information about the tile, and information indicating a size of the tile.
(3) The information processing device according to Item (2),
   in which the file processing unit stores the tile storage information in a timed accessor information header field.
(4) The information processing device according to Item (2) or (3),
   in which the tile storage information further includes information indicating the number of components and information indicating a component type.
(5) The information processing device according to any one of Items (2) to (3),
   in which the tile storage information includes information for each component.
(6) The information processing device according to any one of Items (2) to (5),
   in which the tile storage information further includes flag information indicating whether or not the tile exists.
(7) The information processing device according to Item (2),
   in which the file processing unit stores identification information about the tile and information indicating a size of the tile in buffer regions different from each other.
(8) The information processing device according to Item (7),
   in which information indicating a size of the tile includes information for each component.
(9) The information processing device according to Item (2),
   in which the file processing unit stores the tile storage information in a buffer region same as a buffer region of atlas data.
(10) An information processing method including
   storing tile data of 3D object content in a common buffer region, acquiring the desired tile data from the buffer region on the basis of tile storage information for identifying the tile data stored in the buffer region, and processing the acquired tile data.
(11) An information processing device including
   a file generation unit that generates a scene description file that stores a first accessor for storing tile data of 3D object content in a common first buffer region and a second accessor for storing tile storage information for identifying the tile data stored in the first buffer region in a second buffer region.
(12) The information processing device according to Item (11),
   in which the tile storage information includes information indicating the number of tiles, identification information about the tile, and information indicating a size of the tile.
(13) The information processing device according to Item (12),
   in which the tile storage information further includes information indicating the number of components and information indicating a component type.
(14) The information processing device according to Item (12),
   in which the second buffer region includes a region different from the first buffer region.
(15) The information processing device according to Item (14),
   in which the tile storage information includes information for each component.
(16) The information processing device according to any one of Items (12) to (15),
   in which the tile storage information further includes flag information indicating whether or not the tile exists.
(17) The information processing device according to Item (12),
   in which the scene description file further stores a third accessor for storing the tile storage information in a third buffer region different from the second buffer region, the second accessor stores identification information about the tile in the second buffer region, and the third accessor stores information indicating a size of the tile in the third buffer region.
(18) The information processing device according to Item (17),
   in which information indicating a size of the tile includes information for each component.
(19) The information processing device according to Item (12),
   in which the second buffer region includes a buffer region in which atlas data is stored.
(20) An information processing method including
   generating a scene description file that stores a first accessor for storing tile data of 3D object content in a common first buffer region and a second accessor for storing tile storage information for identifying the tile data stored in the first buffer region in a second buffer region.
(31) An information processing device including
   a file processing unit that stores the tile data of each tile of the 3D object content in the buffer region corresponding to the tile on the basis of the attributes property for each tile of the 3D object content stored in a scene description file, acquires tile data of the desired tile from the buffer region, and processes the acquired tile data.
(32) The information processing device according to Item (31),
   in which, in the scene description file, an extension is specified in one node, a node for each tile is associated with the extension, a mesh object for each tile is associated with each node, and an attributes property for each tile is stored in each mesh object, and the file processing unit stores tile data of each tile in a buffer region indicated by the attributes property of the tile, acquires tile data of a desired tile from the buffer region indicated by the attributes property of the desired tile, and processes the acquired tile data.
(33) The information processing device according to Item (31),
   in which, in the scene description file, an extension is specified in one node, a mesh object for each tile is associated with the extension, and an attributes property for each tile is stored in each mesh object, and the file processing unit stores tile data of each tile in a buffer region indicated by the attributes property of the tile, acquires tile data of a desired tile from the buffer region indicated by the attributes property of the desired tile, and processes the acquired tile data.
(34) The information processing device according to Item (31),
   in which, in the scene description file, an extension is specified in one of the primitives, and an attributes property for each tile is stored in the extension, and the file processing unit stores tile data of each tile in a buffer region indicated by the attributes property of the tile, acquires tile data of a desired tile from the buffer region indicated by the attributes property of the desired tile, and processes the acquired tile data.
(35) The information processing device according to Item (31),
   in which, in the scene description file, an extension is specified in one mesh object, and a primitives array having an attributes property for each tile as an element is stored in the extension, and the file processing unit stores tile data of each tile in a buffer region indicated by the attributes property of the tile, acquires tile data of a desired tile from the buffer region indicated by the attributes property of the desired tile, and processes the acquired tile data.
(36) An information processing method including
   storing tile data of each tile of the 3D object content in a buffer region corresponding to the tile on the basis of an attributes property for each tile of the 3D object content stored in a scene description file, acquiring tile data of a desired tile from the buffer region, and processing the acquired tile data.
(41) An information processing device including
   a file generation unit that generates a scene description file storing an attributes property for each tile of the 3D object content for storing tile data of 3D object content in buffer regions different from each other.
(42) The information processing device according to Item (41),
   in which the file generation unit specifies an extension in one node of the scene description file, associates a node for each tile with the extension, associates a mesh object for each tile with each node, and stores the attributes property for each tile in each mesh object.
(43) The information processing device according to Item (41),
   in which the file generation unit specifies an extension in one node of the scene description file, associates a mesh object for each tile with the extension, and stores the attributes property for each tile in each mesh object.
(44) The information processing device according to Item (41),
   in which the file generation unit specifies an extension in one of the primitives of the scene description file and stores the attributes property for each tile in the extension.
(45) The information processing device according to Item (41),
   in which the file generation unit specifies an extension in one mesh object of the scene description file, and stores a primitives array having the attributes property for each tile as an element in the extension.
(46) An information processing method including
   generating a scene description file storing an attributes property for each tile of the 3D object content for storing tile data of 3D object content in buffer regions different from each other.

### REFERENCE SIGNS LIST

- 300: File generation device
- 301: Control unit
- 302: File generation processing unit
- 311: Input unit
- 312: Preprocessing unit
- 313: Encoding unit
- 314: File generation unit
- 315: Recording unit
- 316: Output unit
- 400: Client device
- 401: Control unit
- 402: Client processing unit
- 411: File acquisition unit
- 412: File processing unit
- 413: Decoding unit
- 414: Display information generation unit
- 415: Display unit
- 416: Display control unit

## Claims

1. An information processing device comprising:
a file processing unit that stores tile data of 3D object content in a common buffer region, acquires the desired tile data from the buffer region on a basis of tile storage information for identifying the tile data stored in the buffer region, and processes the acquired tile data.

2. The information processing device according to claim 1,
wherein the tile storage information includes information indicating the number of tiles, identification information about the tile, and information indicating a size of the tile.

3. The information processing device according to claim 2,
wherein the file processing unit stores the tile storage information in a timed accessor information header field.

4. The information processing device according to claim 2,
wherein the tile storage information further includes information indicating the number of components and information indicating a component type.

5. The information processing device according to claim 2,
wherein the tile storage information includes information for each component.

6. The information processing device according to claim 2,
wherein the tile storage information further includes flag information indicating whether or not the tile exists.

7. The information processing device according to claim 2,
wherein the file processing unit stores identification information about the tile and information indicating a size of the tile in buffer regions different from each other.

8. The information processing device according to claim 7,
wherein information indicating a size of the tile includes information for each component.

9. The information processing device according to claim 2,
wherein the file processing unit stores the tile storage information in a buffer region same as a buffer region of atlas data.

10. An information processing method comprising:
storing tile data of 3D object content in a common buffer region, acquiring the desired tile data from the buffer region on a basis of tile storage information for identifying the tile data stored in the buffer region, and processing the acquired tile data.

11. An information processing device comprising:
a file generation unit that generates a scene description file that stores a first accessor for storing tile data of 3D object content in a common first buffer region and a second accessor for storing tile storage information for identifying the tile data stored in the first buffer region in a second buffer region.

12. The information processing device according to claim 11,
wherein the tile storage information includes information indicating the number of tiles, identification information about the tile, and information indicating a size of the tile.

13. The information processing device according to claim 12,
wherein the tile storage information further includes information indicating the number of components and information indicating a component type.

14. The information processing device according to claim 12,
wherein the second buffer region includes a region different from the first buffer region.

15. The information processing device according to claim 14,
wherein the tile storage information includes information for each component.

16. The information processing device according to claim 12,
wherein the tile storage information further includes flag information indicating whether or not the tile exists.

17. The information processing device according to claim 12,
wherein the scene description file further stores a third accessor for storing the tile storage information in a third buffer region different from the second buffer region, the second accessor stores identification information about the tile in the second buffer region, and the third accessor stores information indicating a size of the tile in the third buffer region.

18. The information processing device according to claim 17,
wherein information indicating a size of the tile includes information for each component.

19. The information processing device according to claim 12,
wherein the second buffer region includes a buffer region in which atlas data is stored.

20. An information processing method comprising:
generating a scene description file that stores a first accessor for storing tile data of 3D object content in a common first buffer region and a second accessor for storing tile storage information for identifying the tile data stored in the first buffer region in a second buffer region.
